(19) Europäisches Patentamt
European Patent Office
Office européen des brevets

(11) EP 2 003 166 A1

# (12) EUROPEAN PATENT APPLICATION

(43) Date of publication:
**17.12.2008 Bulletin 2008/51**

(21) Application number: **07380172.2**

(22) Date of filing: **12.06.2007**

(51) Int Cl.:
***C08L 23/08*** *(2006.01)* ***C08F 10/02*** *(2006.01)*
***F16L 9/12*** *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **REPSOL YPF S.A.**
**28046 Madrid (ES)**

(72) Inventors:
- **Lopez Reyes, Manuel**
  **28935 Mostoles - Madrid (ES)**
- **Martin Marcos, Carlos**
  **28850 Torrejon de Ardoz - Madrid (ES)**
- **Prieto Acedo, Oscar**
  **28660 Boadilla del Monte - Madrid (ES)**
- **Sancho Royo, José**
  **28003 Madrid (ES)**
- **Campora Perez, Juan**
  **41018 Sevilla (ES)**
- **Palma Ramirez, Pilar**
  **41018 Sevilla (ES)**
- **Naz Lucena, Antonio Marcos**
  **41520 Sevilla (ES)**
- **Perez Rodriguez, Carmen Maria**
  **28935 Mostoles - Madrid (ES)**

(74) Representative: **ABG Patentes, S.L.**
**Avenida de Burgos 16D**
**Edificio Euromor**
**28036 Madrid (ES)**

## (54) Polyethylene compositions and their use in the manufacture of pipes

(57) The invention relates to a polyethylene composition with a bimodal molecular weight distribution comprising at least a low molecular weight (LMW) component and a high molecular weight (HMW) ethylene copolymer component, wherein the polyethylene composition has a ductile-brittle transition temperature of less than -20°C, a total impact Charpy energy of more than 200 J/m at 23°C according to ASTM D6110-2004e1, and a PENT test value of more than 750 hours according to ASTM F1473: 2001, and the LMW component has a comonomer content of less than 0.1 branches per 1000 carbon atoms as determined by $^{13}C$ NMR spectroscopy and a double bond final chain content between 0.2 to 10 double bonds per 1000 carbon atoms, as determined by $^{13}C$ NMR spectroscopy. The invention also relates to a process for preparing said composition and its use in the manufactures of pipes.

EP 2 003 166 A1

## Description

### FIELD OF THE INVENTION

This invention relates to a catalytically produced polyethylene compositions with improved properties and articles made therefrom, especially high temperature or high pressure long duration pipes. The polyethylene composition comprises homopolymers and copolymers of ethylene which are manufactured in a single reactor using a supported dual catalyst system. This dual catalyst system comprises a bis(imine)pyridine iron or cobalt catalyst and a bridged-zirconocene catalysts on the same support.

### BACKGROUND OF THE INVENTION

Due to the continuous replacement of metal pipes, one of the most important applications for polyethylene compositions is the production of pipes, in particular, high temperature and high pressure long duration pipes.

An important factor in applications of this type is very long service life of the pipe, without fear of aging or brittle fracture. In this sense, polyethylene composition for pipe application must have impact resistance sufficient to endure impacts given at the time when and after they are set and excellent long-term durability under gas or water pressure (specifically, internal pressure creep resistance and crack resistance, both resistance to rapid and to slow crack growth).

For plastic pipe applications, circunferential (hoop) stress performance as set forth in ISO 9080 and ISO 1167 is an important requirement. These procedures describe the long-term creep rupture behaviour of plastic materials by an extrapolation methodology wherein the hydrostatic strength of pipe materials over 50 years at 20°C are predicted. First and second generation polyethylene pipes for water and gas distribution have minimum required strength (MRS) ratings for respective hoop stresses of 6.3 and 8 MPa and are known as PE63 and PE80 respectively. Third generation polyethylene pipes, which are known as PE100 pipes, conform to a MRS rating of 10. This specifies that pipes made from the polyethylene materials must withstand 10 MPa at 20°C for 50 years.

Another important pipe or durable material performance requirement is resistance to rapid crack propagation (RCP). The RCP of a polyethylene composition for pipe application is typically measured by testing extruded pipe in accordance with ISO 13477 (S4 test). But S4 test is not susceptible to small scale evaluation and as such various small scale tests have been introduced in the plastic pipe industry. Small scale testing includes the inverted Charpy test and the Plane High-Speed Double Torsion tests, as well as ranking tests such as critical strain energy release rate test or Gc measurement on compression molded materials. Also the lower the ductile-brittle transition temperature, $T_{db}$, of a material, the better is its RCP resistance.

Another important pipe or durable material performance requirement is resistance to slow crack growth (SCG). The SCG of a polyethylene composition for pipe application is typically measured by ISO 13479. Small scale testing include Pent test that allows the study of the slow processes of brittle failure that occur in polyethylene composition for long duration pipes even at low pressures.

The requirements for simultaneous good RCP and SCG are not easy to meet, since these are opposite properties, and in particular they depend on several parameters such as the short chain branching (SCB) content, the density, the crystallinity and the molecular weight distribution of the different components constituting the polyethylene compositions. For example, while SCG increases with the short chain branching of the polyethylene composition, RCP decreases as short chain branching increases. Thus, these balanced properties are necessary to find a polyethylene composition with improved properties.

Some polyethylene compositions with a multimodal weight distribution have been developed for the manufacture of pipes. Said compositions comprise at least two components, which implicitly require a relatively high molecular weight component (HMW) and a low molecular weight component (LMW).

However, most of the commercial bimodal polyethylene compositions manufactured for the preparation of pipes lack a good combination of RCP and SCG properties since, although many of them can reach a low ductile-brittle transition temperature ($T_{db}$), the RCP decreases significantly due for example to the high percentage of comonomer branches content in the LMW component.

In addition, the properties of polyethylene composition are not solely dependent on the properties of the components. Particularly, for the mechanical properties of the blends, a decisive role is played by the blending of the high with the low-molecular-weight compound, and also with any other additives present, such as colour pigments or processing aids. Poor quality of blending causes low crack resistance at high temperature or in the presence of aggressive chemicals, and impairs the creep performance of pressure pipes made from polyethylene composition with a broad or bimodal molecular weight distribution.

There are several methods for the production of polyethylene compositions with broad or bimodal molecular weight distribution: melting blending, reactor in series configuration or single reactor with dual site catalysts system.

Polyethylene blends can be prepared using two or more polymerization reactors arranged in series, wherein

the LMW component is polymerized in one reactor and the HMW component in the next. However, a disadvantage of this process is that the same catalyst must be used.

However, the most familiar process for preparing polymer blends in general is the intimate mixing of individual components, for example by melt extrusion in an extruder or kneader. An advantage of this method over the reactors arranged in series is that the flexibility is greater, and the components of the blends may have been derived from a variety of processes. However, there are particular difficulties derived from this method. For example, the melt viscosities of the high- and low-molecular-weight component of a bimodal polyethylene blend are extremely different. Whereas at the usual temperatures for preparing the blends, from about 190°C to 210°C, the low-molecular-weight has already almost become a low-viscosity liquid, the HMW component is only softened. It is very difficult to mix the two components homogeneously. In addition, it is know that the HMW component can easily be degraded by thermal stress or by shear forces in the extruder, impairing the properties of the blend. To avoid this, methods for producing polyethylene compositions which inherently produce blends, such as the use of a single reactor, are useful, especially if a later separate and expensive polymer mixing step can be suppressed.

In this respect, a supported dual site catalyst system itself provides sites for catalysis of each of the LMW and HMW component, in constant process conditions and environment of a single reactor. Since these sites are relatively uniform in concentration in the catalyst particle, the polymerization and copolymerization product particles will have substantially constant HMW:LMW ratios. As a result, the product has a greatly improved inter particle composition homogeneity. In addition, it is known in the art that the chemical and physical properties of a polyethylene composition can vary depending on what catalytic system is employed. This is because different catalyst systems tend to yield different molecular weight distribution in the polyethylene composition produced. In particular, it is also known that polyethylene composition with broad or bimodal weights distributions may be processed more easily than narrower molecular weights distribution polymers.

However, although numerous polyethylene compositions have been known and used for the manufacture of pipes, there is an existing need for improved durable materials, especially for transmission and distribution pipe service for gases and water. Preferably, the materials should exhibit improved durability and higher temperature service lives. In particular, there is still a need for polyethylene compositions with better resistance to slow crack propagation and rapid crack propagation.

## SUMMARY OF THE +INVENTION

Surprisingly, the authors of the present invention have found that a polyethylene composition comprising a high density homopolymer with broad molecular weight distribution, low number average molecular weight, a commoner content of less than 0.1 branches per 1000 carbon atoms and a double bond final chain content between 0.2 and 10 double bonds per 1000 carbon atoms, made using a bis(imine)pyridine iron or cobalt catalyst, shows improved properties with respect to other polyethylene compositions of the state of the art. In fact, due to the ductile-brittle transition temperature ($T_{db}$), total impact Charpy Energy at 23°C and Pent test at 80°C and 2.4 MPa properties present in the polyethylene composition, better rapid crack propagation and slow crack propagation resistance values are obtained, conferring the novel polyethylene composition highly useful for producing pipes, in particular gas and water pressure pipes.

Therefore, it is an object of the present invention to provide a polyethylene composition with a bimodal molecular weight distribution comprising a low-molecular-weight (LMW) ethylene homopolymer component and a high-molecular-weight (HMW) ethylene copolymer component, characterized in that:

- the polyethylene composition has a ductile-brittle transition temperature of less than -20°C, a total impact Charpy energy of more than 200 J/m at 23°C according to ASTM D6110-2004e1, and a PENT test value of more than 750 hours according to ASTM F1473:2001, and
- the LMW component has a comonomer content of less than 0.1 branches per 1000 carbon atoms as determined by $^{13}C$ NMR spectroscopy and a double bond final chain content between 0.2 and 10 double bond per 1000 carbon atoms, as determined by $^{13}C$ NMR spectroscopy.

Another object of the present invention relates to a process for the manufacture of a polyethylene composition as defined above which comprises subjecting ethylene and comonomer(s), optionally with hydrogen, to polymerization reaction in a single reactor, in the presence of a dual catalyst system supported in one support, wherein the dual catalyst system comprises a bis(imine)pyridine iron or cobalt catalyst and a bridged-zirconocene catalyst.

Another object of the present invention refers to a process for the manufacture of a polyethylene composition as defined above which comprises physically blending or mixing the LMW high density polyethylene component and the HMW ethylene copolymer component.

Another object of the invention is the use of a polyethylene composition as defined above for the manufacture of a pipe.

Finally, another object of the invention refers to a pipe composition obtainable from a polyethylene composition as defined above.

## DESCRIPTION OF THE DRAWINGS

Figure 1: Diagram to determine the ductile-brittle temperature according to the internal procedure.
Figure 2: Gel Permeation Chromatography for the polyethylene composition prepared according to example E9.
Figure 3: Gel Permeation Chromatography for the polyethylene composition prepared according to example E14.
Figure 4: Gel Permeation Chromatography for the polyethylene composition prepared according to example E16.
Figure 5: Gel Permeation Chromatography for the polyethylene composition prepared according to example E19.
Figure 6: Gel Permeation Chromatography for the polyethylene composition prepared according to example E24.
Figure 7: Gel Permeation Chromatography for the polyethylene composition prepared according to example E27.
Figure 8: Gel Permeation Chromatography for the polyethylene composition prepared according to example E31.
Figure 9: Gel Permeation Chromatography for the polyethylene composition prepared according to example E32.
Figure 10: Gel Permeation Chromatography for the polyethylene composition prepared according to example E33.
Figure 11: Gel Permeation Chromatography for the polyethylene composition prepared according to example E49.
Figure 12: Gel Permeation Chromatography for the polyethylene composition prepared according to example E50.
Figure 13: Gel Permeation Chromatography for the polyethylene composition prepared according to example E51.
Figure 14: Gel Permeation Chromatography comparison between the polyethylene compositions prepared according to examples E50 and E33.
Figure 15: Gel Permeation Chromatography comparison between the polyethylene compositions prepared according to examples E50 and E67.
Figure 16: Gel Permeation Chromatography for the comparative polyethylene composition of example CE 1.
Figure 17: Gel Permeation Chromatography for the comparative polyethylene composition of example CE8.

## DETAILED DESCRIPTION OF THE INVENTION

The bimodal polyethylene composition of the invention comprises at least a low-molecular-weight distribution (LMW) ethylene homopolymer component and a high-molecular-weight (HMW) ethylene copolymer component.

The term 'bimodal' as used herein means that the molecular weight distribution (MWD) in a gel permeation chromatography (GPC) curve exhibits two component polymers wherein one component polymer may even exist as a hump, shoulder or tail relative to the MWD of the other component polymer. A bimodal MWD can be deconvoluted into two components: low molecular weight component (LMW) and high molecular weight component (HMW). After deconvolution, the weight-average molecular weight ($M_w$) and the number-average molecular weight ($M_n$) of each component can be obtained.

The polyethylene composition of the invention is characterized for having a ductile-brittle transition temperature ($T_{db}$) of less than -20°C, more preferably less than - 30°C, even more preferably less than -35°C. $T_{db}$ is typically referred to as the critical temperature for rapid crack propagation measurements at small scale evaluation.

In addition, this polyethylene composition has a total impact Charpy energy of more than 200 J/m at 23°C measured in accordance with ASTM D6110-2204e1, more preferably more than 350 J/m, even more preferably more than 500 J/m. In a particular embodiment of the invention, the total impact Charpy energy is more than 150 J/m measured at 0°C and more than 100 J/m at -10°C, according to ASTM D6110-2004e1.

The polyethylene composition is also characterized by an exceptional resistance to slow crack growth as measured by the PENT test. Said composition has PENT lifetimes of more than 750 hours at 2.4 MPa and 80°C according to ASTM F1473:2001.

In an embodiment of the invention, the polyethylene composition has an overall density of less than 0.960 g/cm$^3$ measured in accordance with ISO1183-2:2004, more preferably less than 0.955 g/cm$^3$, and even more preferably less than 0.950 g/cm$^3$.

In another embodiment of the invention, the polyethylene composition has a high load melt index (HLMI) of less than 20 g/10 min measured at 190°C and 21.6 Kg according to UNE-EN ISO1133:2001, more preferably less than 15 g/10 min, even more preferably the melt index is between 4 and 12 g/10 min.

Even in another embodiment, the polyethylene composition has a flexural modulus of less than 1000 MPa measured in accordance with UNE-EN ISO178:2003, more preferably the flexural modulus is between 600 and 900 MPa, even more preferably between 800 and 900 MPa.

The polyethylene composition preferably comprise an amount of LMW component between 25 and 45% by weight with respect to the total weight of said composition, more preferably between 30 and 45% by weight and even

more preferably between 30 and 40% by weight.

Low molecular weight component (LMW)

The low molecular weight component (LMW) of the polyethylene composition comprises a high density ethylene homopolymer which is characterized for having a comonomer content of less than 0.1 branches per 1000 carbon atoms and a double bond final chain content between 0.2 and 10 double bond per 1000 carbon atoms, both parameters being determined by $^{13}C$ NMR spectroscopy. It has been shown that the combination of a low branching and the specified content of double bond final chain significantly improve the polymer properties with respect to resistance to slow crack growth and impact strength.
By *'ethylene homopolymer'* is meant a polymer produced by polymerization of ethylene monomer in a single or several reactors. However, it is understood that the homopolymer produced in the present invention is not necessary made by the direct polymerization of ethylene alone, but also in the presence of other alpha-olefins, such as 1-hexene. This is the reason for which the homopolymer may contain branches of formula (excluding end groups) $-(CH_2-CH_2)_n-H$. In the present invention, 'n' is less than 0.1 per 1000 carbon atoms (or methylene groups).
In a particular embodiment of the invention the density of the LMW component is more than 0.955 g/cm$^3$, preferably more than 0.960 g/cm$^3$, and even more preferably more than 0.965 g/cm$^3$ according to ISO1183-2:2004.
In another particular embodiment, the LMW component has a melt index (MI) of more than 1 g/10 min measured at 190°C and 2.16 Kg in accordance with UNE-EN ISO1133:2001. Preferably, the melt index is more than 3 g/10 min and more preferably is more than 10 g/10 min.
In another particular embodiment, the weight-average molecular weight ($M_w$) of the LMW component is preferably in the range from about 40,000 to about 170,000 g/mol, more preferably in the range from about 50,000 to 100,000 and even more preferably in the range from 50,000 to 80,000 as determined by Gel Permeation Chromatography (GPC).
In another particular embodiment, the number-average molecular weight ($M_n$) of the LMW component is preferably in the range from about 4,000 to about 20,000 g/mol, more preferably in the range from about 5,000 to 15,000 and even more preferably in the range from 5,000 to 10,000.
In a particular embodiment of the invention, the molecular weight distribution ($M_w/M_n$) of the LMW component is more than 5, more preferably is more than 8.

High molecular weight component (HMW)

The polyethylene composition of the invention comprises from 55 to 75% by weight of a high molecular weight (HMW) ethylene/alpha-olefin copolymer component, more preferably from 55 to 70% by weight, even more preferably from 60 to 70% by weight. The HMW component comprises ethylene with at least other alpha-olefin comonomer, preferably a $C_3$-$C_{20}$ alpha-olefin, more preferably a $C_4$-$C_{10}$ alpha-olefin. Suitable alpha-olefin comonomers include without limitation unsatured hydrocarbons having from 3 to 20 carbon atoms such as propylene, 1-butene, 1-pentene, 1-hexene, 3-methyl-1-butene, 4-methyl-1-pentene, 1-heptene, 1-octene, 1-nonene, 1-decene and mixtures thereof. In a preferred embodiment of the invention, the comonomer comprised in the HMW component is 1-hexene.
In a particular embodiment of the invention the density of the HMW component is less than 0.935 g/cm$^3$, preferably less than 0.930 g/cm$^3$, according to IS01183-2:2004.
In another particular embodiment, the HMW component has a high load melt index (HLMI) from about 0.2 to 1 g/10 min measured at 190°C and 21.6 Kg in accordance with UNE-EN ISO1133:2001. Preferably, the melt index is in the range between 0.4 and 1 g/10 min, and more preferably is in the range between 0.5 and 1 g/10 min.
In another particular embodiment, the weight-average molecular weight ($M_w$) of the HMW component is preferably in the range from about 100,000 to about 800,000 g/mol, more preferably in the range from about 100,000 to 500,000 as determined by Gel Permeation Chromatography (GPC).
In another particular embodiment, the number-average molecular weight ($M_n$) of the HMW component is preferably in the range from about 40,000 to about 300,000 g/mol, more preferably in the range from about 60,000 to 200,000 and even more preferably in the range from 60,000 to 140,000. The molecular weight distribution ($M_w/M_n$) of the HMW component is in the range from 2 to 10, more preferably is from 3 to 7, even more preferably from 3.5 to 5.
The HMW component of the polyethylene composition is also characterized for having a comonomer content equal to or less than 10 branches per 1000 carbon atoms, preferably from 2 to 8 branches / 1,000 carbon atoms, even more preferably from 4 to 8 branches /1,000 carbon atoms, as determined by $^{13}C$ NMR spectroscopy.

Methods for manufacturing polyethylene composition

The polyethylene composition of the invention can be prepared by a variety of methods known to those skilled in the art. For example, it can be made by blending or mixing a LMW high density polyethylene component and a HMW

ethylene copolymer component. Alternatively, it may be made in a single polymerization reactor or in a plurality of polymerization reactors using a multi-catalyst system.

In a particular embodiment, the process of manufacturing the polyethylene composition of the invention comprises subjecting ethylene and at least other alpha-olefin comonomer, optionally with hydrogen, to polymerization reaction in a single polymerization reactor in the presence of a dual catalyst system supported in one support, wherein the dual catalyst system comprises a bis(imine) pyridine iron or cobalt catalyst and a bridged-metallocene catalyst.

As used herein, *'polymerization reactor'* includes any polymerization reactor capable of polymerizing olefin monomers to produce homopolymers or copolymers. There are many types of reactors that may be referred to as batch, slurry, gas-phase, solution, high pressure, tubular or autoclave reactors. Gas phase reactors may comprise fluidized bed reactors or staged horizontal reactors. Slurry reactors may comprise vertical or horizontal loops. High pressure reactors may comprise autoclave or tubular reactors. Reactor types can include batch or continuous processes. Continuous processes could use intermittent or continuous product discharge. Processes may also include partial or full direct recycle of un-reacted monomer, unreacted comonomer, and/or diluent.

In a particular embodiment of the invention, the polyethylene composition of the invention is prepared in a single slurry polymerization reactor. Such slurry reactor is known in the art and may comprise vertical or horizontal loops. Monomer, diluent, catalyst system, comonomer and optionally hydrogen, may be continuously fed to the loop reactor where polymerization occurs. Generally, continuous processes may comprise the continuous introduction of a monomer, a catalyst system, a comomoner and a diluent into the polymerization reactor and the continuous removal from this reactor of a suspension comprising polymer particles and the diluent. Reactor effluent may be flushed to remove the solid polymer form the liquids that comprise the diluent, monomer and comonomer. Various technologies may be used for this separation step including but not limited to, flashing that may include any combination of heat addition and pressure reduction, separation by cyclonic action in either a cyclone or hydrocyclone, or separation by centrifugation.

Suitable diluent used in slurry polymerization are well known in the art and include, but are not limited to, the monomer being polymerized and hydrocarbons that are liquids under reaction conditions. Examples of suitable diluents include, but are not limited to, hydrocarbons such as propane, cyclohexane, isobutane, n-butane, n-pentane, iso-pentane and n-hexane.

In this particular embodiment of the invention, the catalyst is added in solid form in such a way referred to as particle form polymerization and the temperature is kept below the temperature at which the polymer goes into solution, therefore the polymer is maintained under slurry phase. Such technique is well known in the state of art and disclosed for example in US 3,248,179. Typical slurry process include those employing a loop reactor and those utilizing several stirred reactor in series, parallel or combination thereof such as continuous loop or stirred tank process.

Suitable pressures for polymerizations in the slurry polymerization reactor may vary from 2 to 40 bar. In addition, when hydrogen is incorporated in the polymerization reaction, the pressure of hydrogen ranges from 0 to 4 bar.

Generally a mixture comprising from 0 to 15 mol-% of hydrogen, from 0 to 30 mol-% of one or more $C_{3-8}$ alpha olefins, from 55 to 100 mol-% of ethylene are dissolved in an inert hydrocarbyl diluent such as $C_{4-7}$ hydrocarbon. The mixture is then polymerized at a temperature from 50°C to 120°C, preferably from 60°C to 120°C, most preferably from 70°C to about 110°C and at pressures typically not higher than 4,500 KPa, preferably from 2,500 to 4,200 KPa in the presence of the catalyst system on a support.

In another particular embodiment, the polyethylene composition of the invention is prepared in a single gas phase polymerization reactor. Such gas phase reactors are known in the art and may employ a continuous recycle stream containing one or more monomers continuously cycled through a fluidized bed in the presence of the catalyst under polymerization conditions. A recycled stream may be withdrawn from the fluidized bed and recycled back into the reactor. Simultaneously, polymer product may be withdrawn from the reactor and new or fresh monomer may be added to replace the polymerized monomer.

In the gas phase polymerization generally a gaseous mixture comprising from 0 to 15 mol-% of hydrogen, from 0 to 30 mol-% of one or more $C_{3-8}$ alpha -olefin, from 15 to 100 mol-% of ethylene, and from 0 to 75 mol-% of non-polymerizable gas at a temperature from 50°C to 120°C, preferably from 60°C to 120°C and most preferably from 70 to 110°C, and at pressures usually not exceeding 3,500 KPa is polymerized in the presence of a catalysts system on a support.

Polymerization slurry or gas phase reactors suitable for the present invention may further comprise any combination of at least one raw material feed system, at least one feed system for catalyst and/or at least one polymer recovery system. Suitable reactor system for the present invention may further comprise systems for feedstock purification, catalyst storage and preparation, extrusion, reactor cooling, polymer recovery, fractionation, recycle, storage, loadout, laboratory analysis and process control.

Conditions that are controlled for polymerization efficiency and to provide polymer properties include temperature, pressure and the concentrations of various reactants. Polymerization temperature can affect catalysis productivity, polymer molecular weight and molecular weight distribution. Suitable polymerization temperature may be in the range from 70 to 110°C.

The concentrations of ethylene, alpha-olefin comonomer, and optionally hydrogen, modifiers, and electron donors are important in producing the polyethylene composition properties. Comonomer is used to control product density. Suitable alpha-olefin comonomers include without limitation unsatured hydrocarbons having from 3 to 20 carbon atoms, preferably from 4 to 10 carbon atoms, such as 1-butene, 1-pentene, 1-hexene, 3-methyl-1-butene, 4-methyl-1-pentene, 1-heptene, 1-octene, 1-nonene, 1-decene and mixtures thereof. Hydrogen can be used to control product molecular weight.

In a preferred embodiment of the invention, the polyethylene composition of the invention is prepared in a single slurry polymerization reactor.

The dual catalyst system used for preparing the polyethylene composition according to the particular embodiment of the invention in the single polymerization reactor comprises a bis(imime)pyridine iron or cobalt catalyst and a bridged-metallocene catalyst which are jointly supported in one support in the presence of a group 13 metal-containing organic metal compound. In a particular embodiment, the bis(imine)pyridine catalyst is a bis(imine)pyridine iron catalyst and the bridged-metallocene catalyst a bridged zirconocene catalyst.

In a preferred embodiment of the invention, the bis(imine)pyridine iron catalyst is selected from the group consisting of the following compounds:

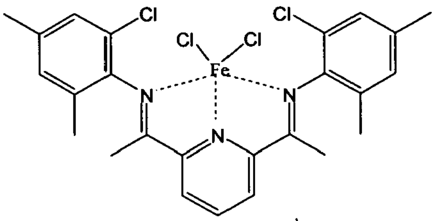

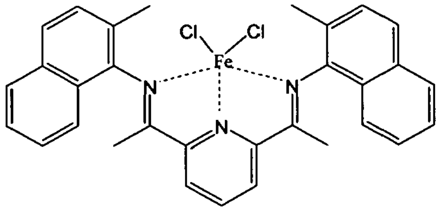

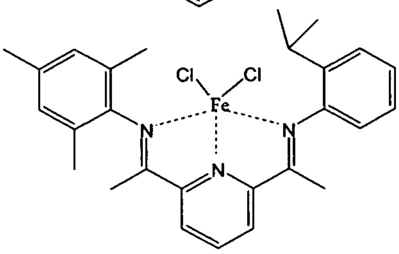

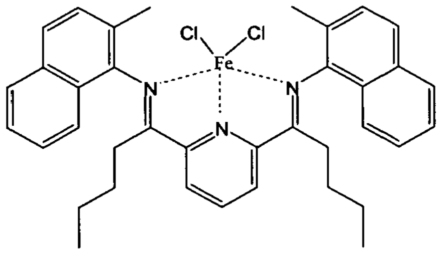

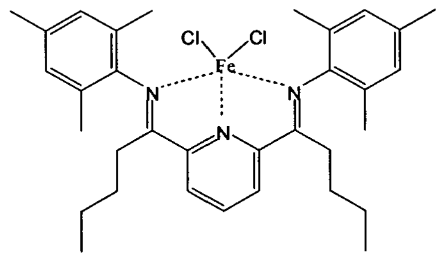

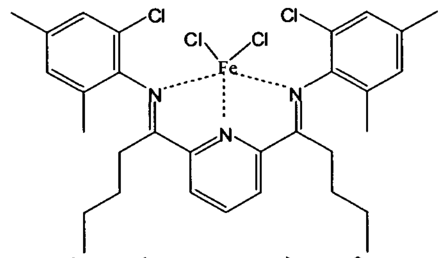

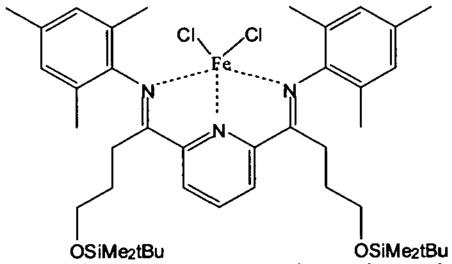

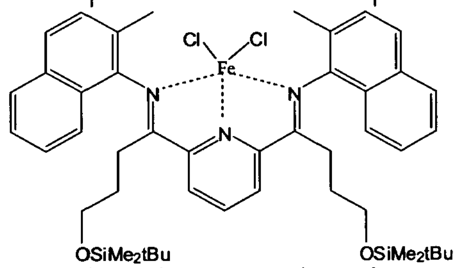

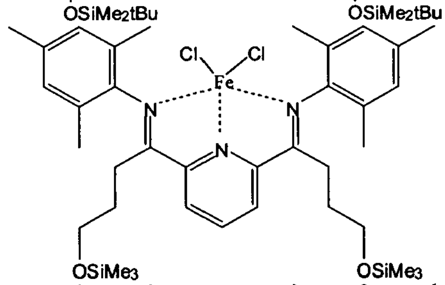

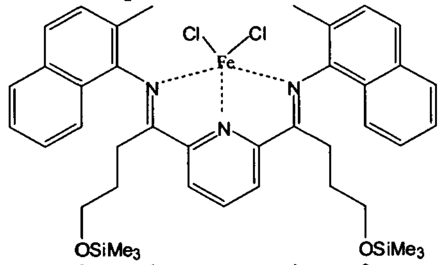

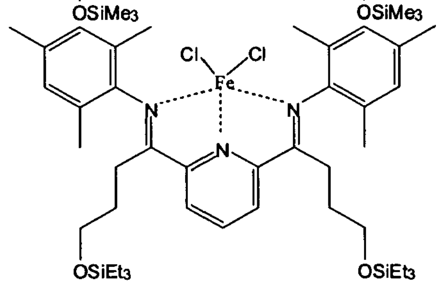

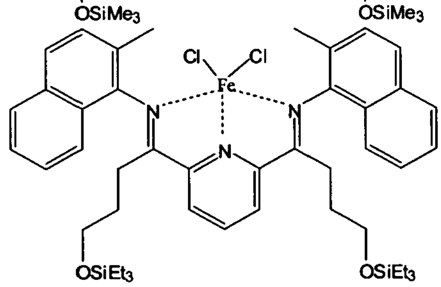

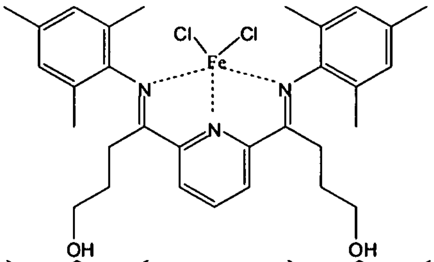

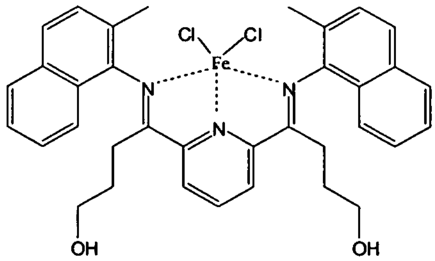

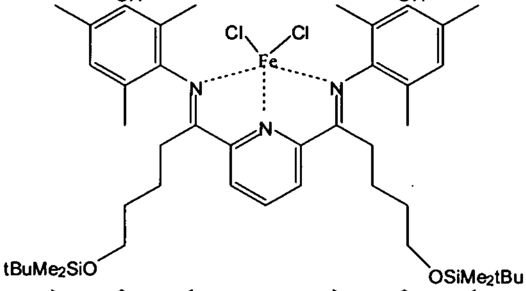

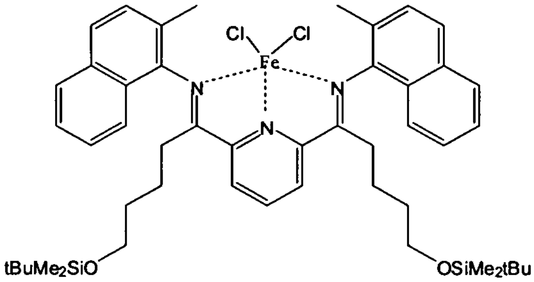

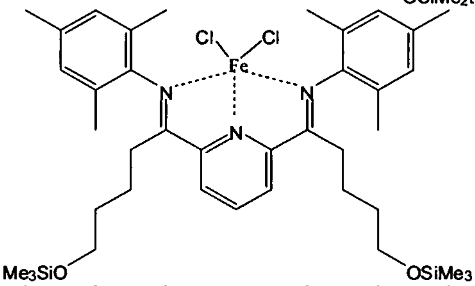

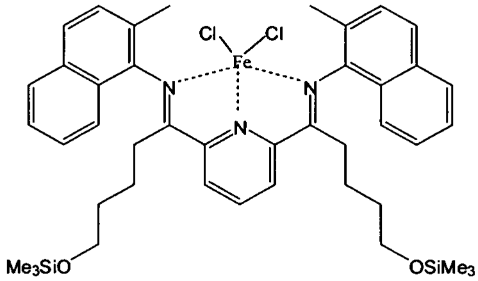

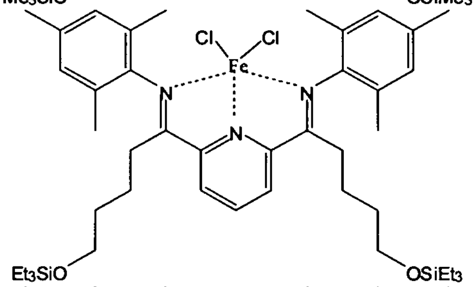

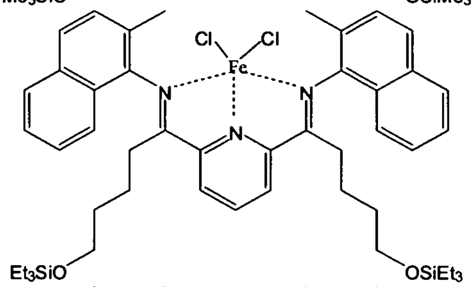

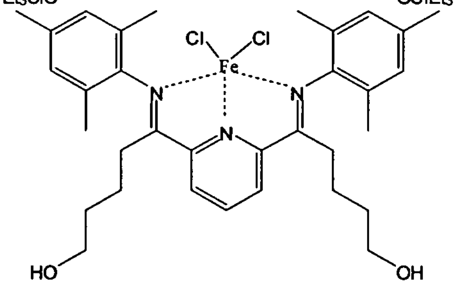

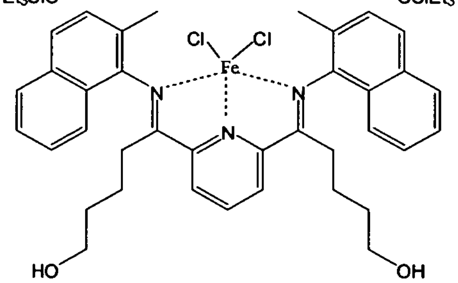

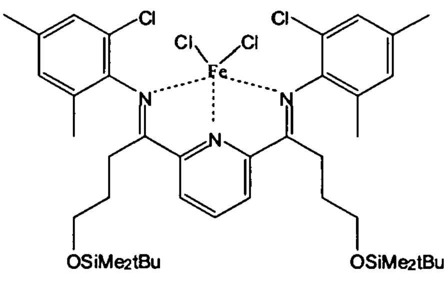

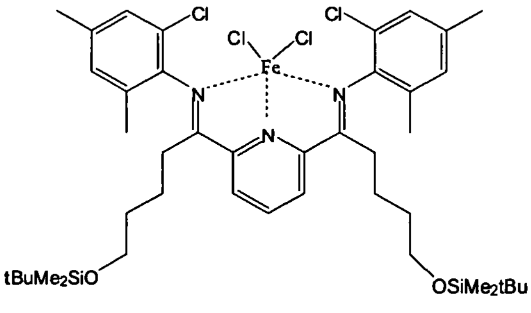

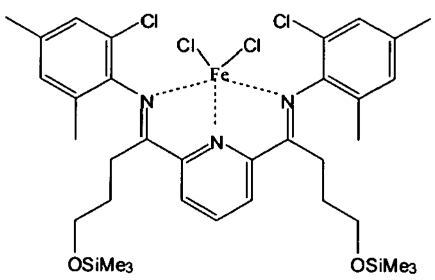

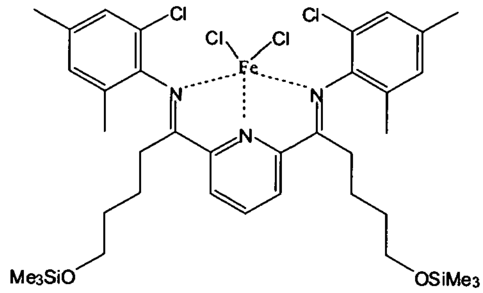

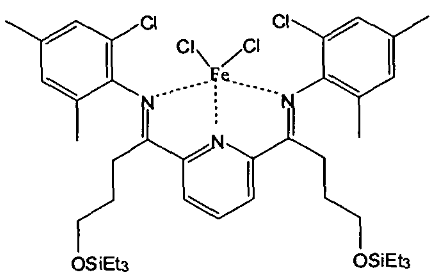

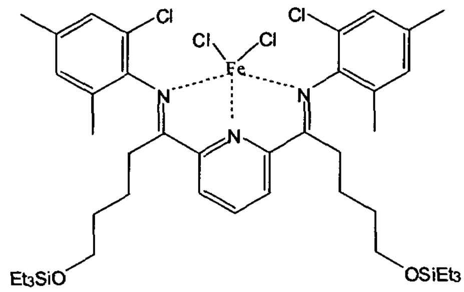

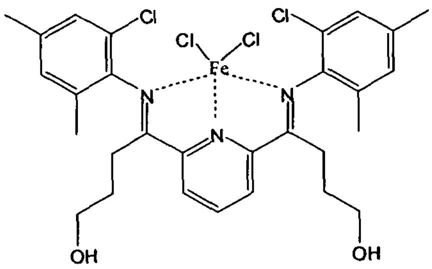

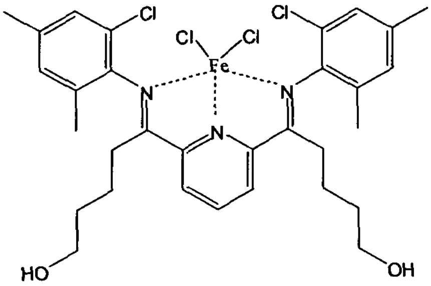

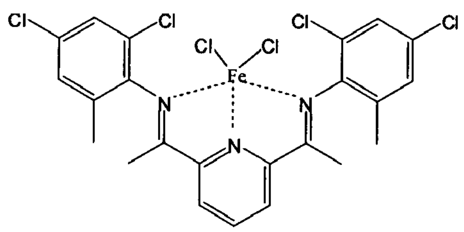

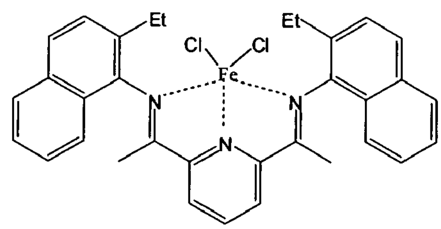

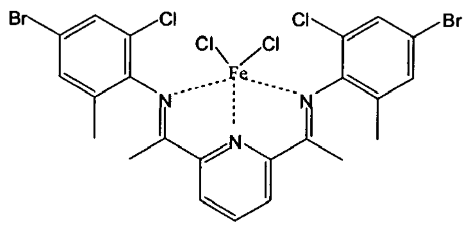

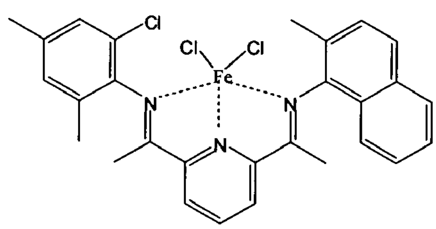

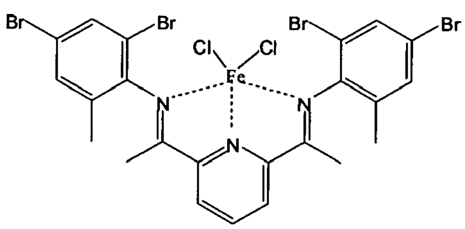

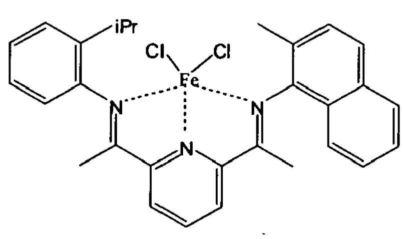

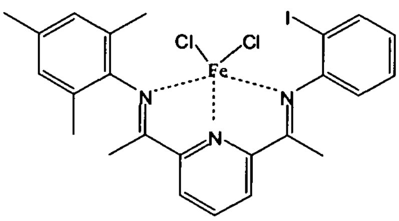

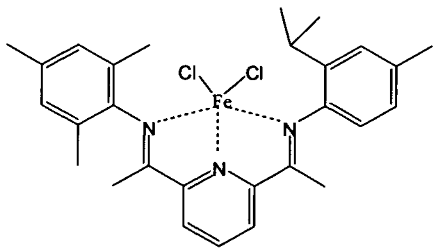

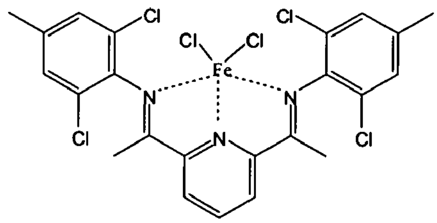

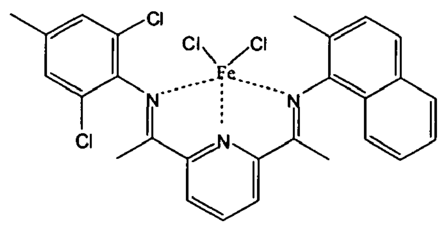

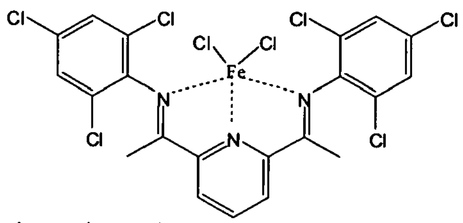

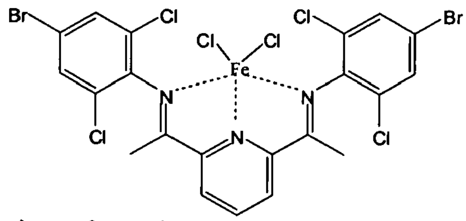

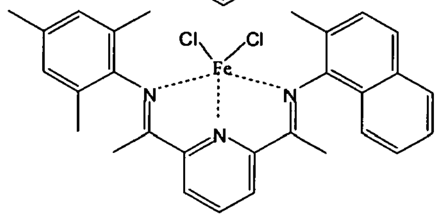

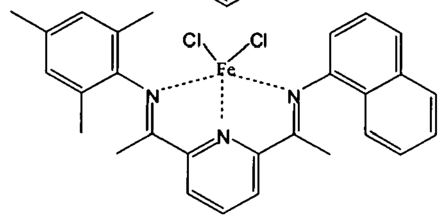

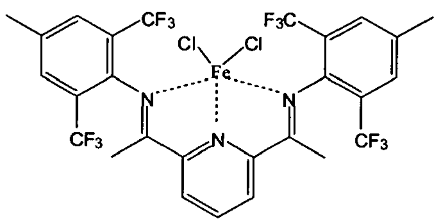

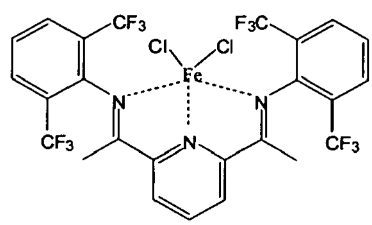

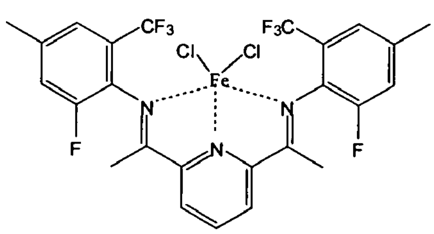

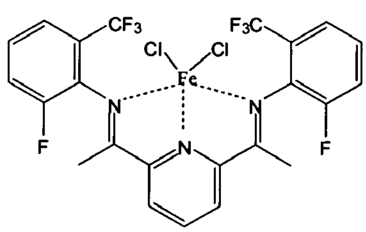

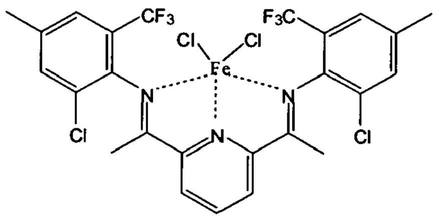

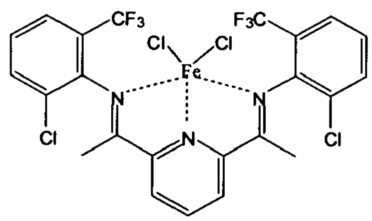

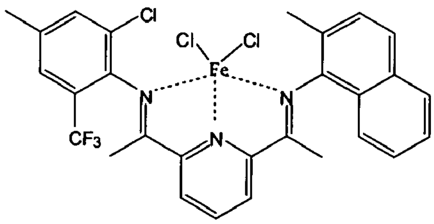

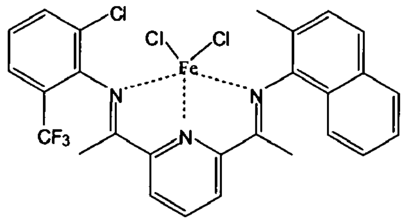

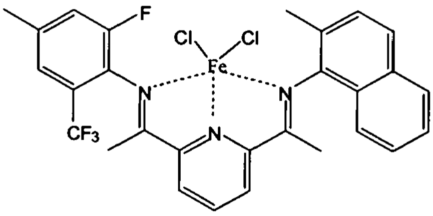

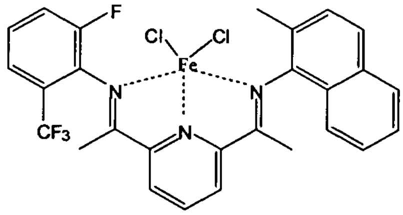

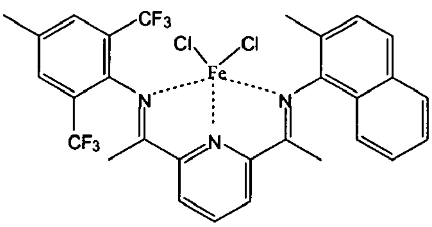

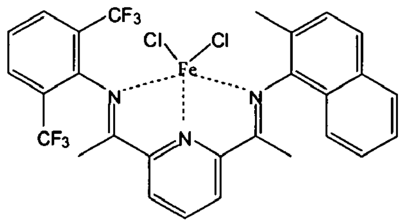

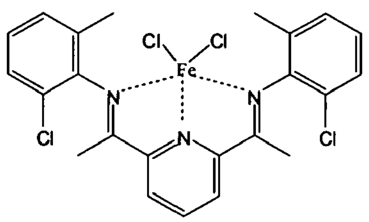

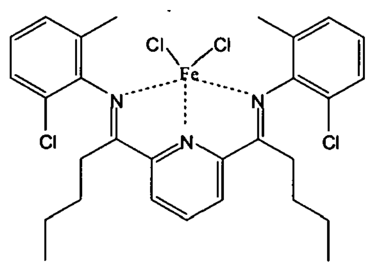

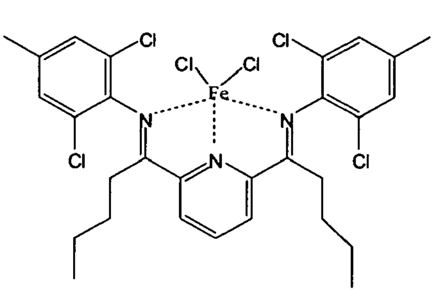

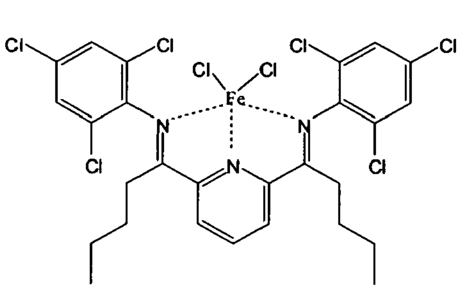

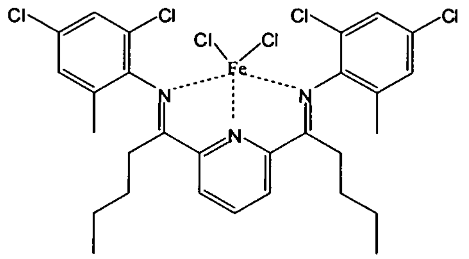

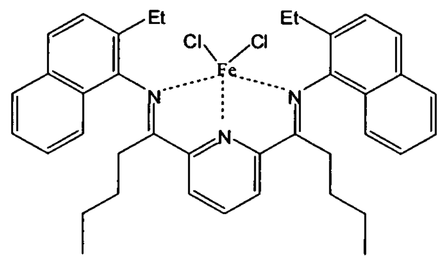

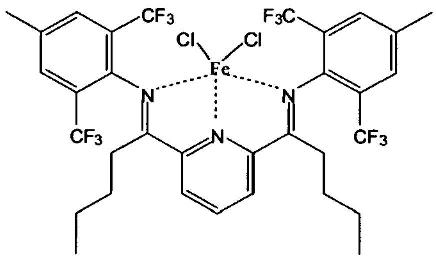

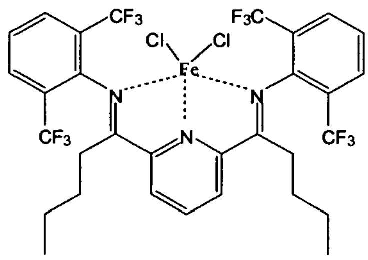

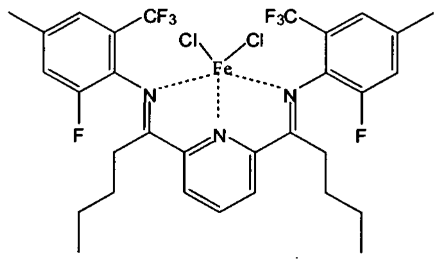

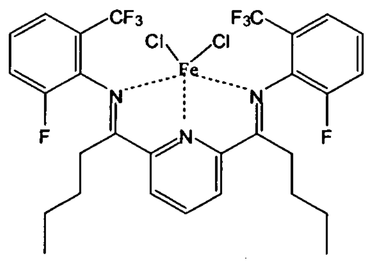

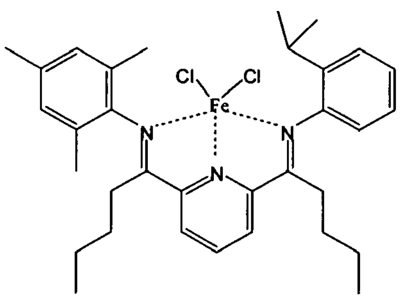

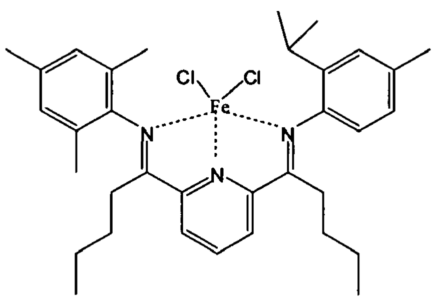

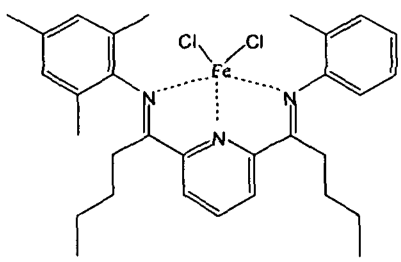

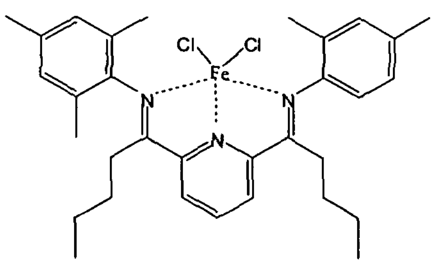

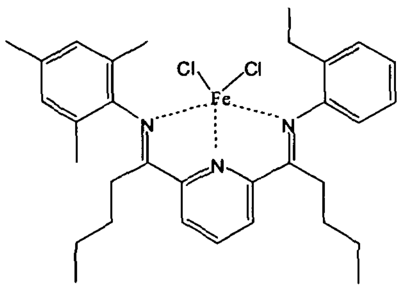

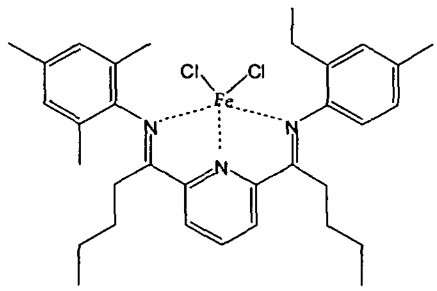

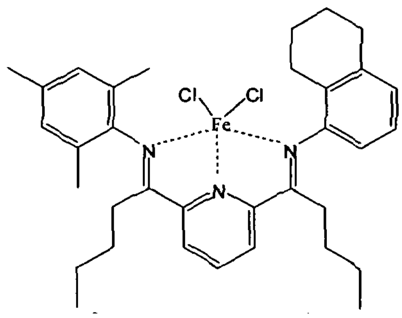

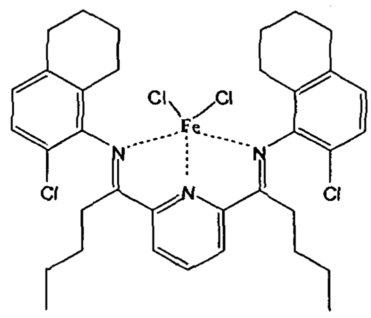

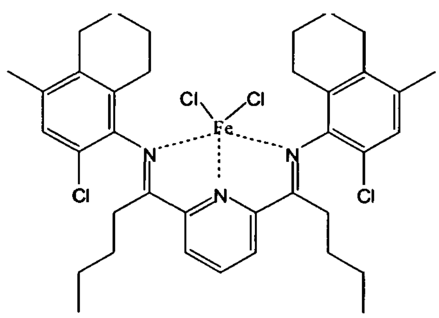

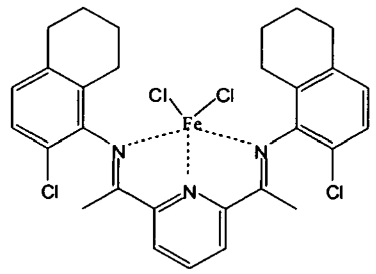

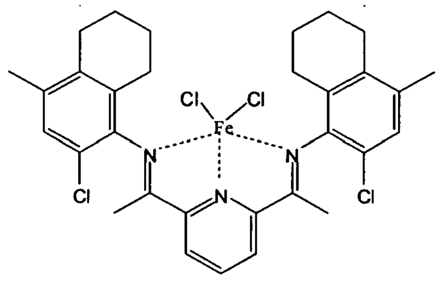

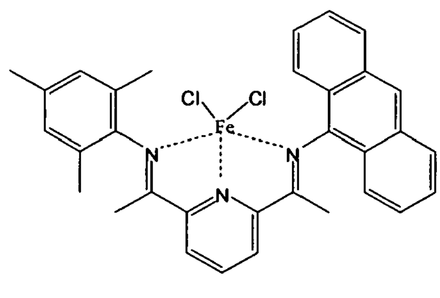

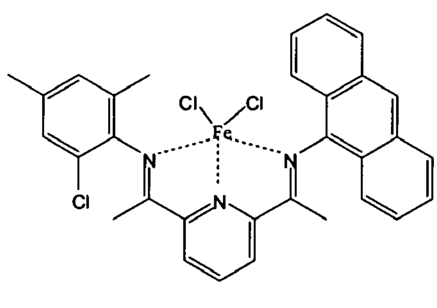

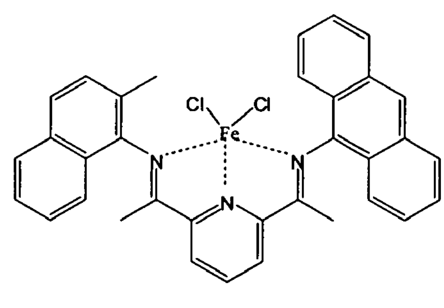

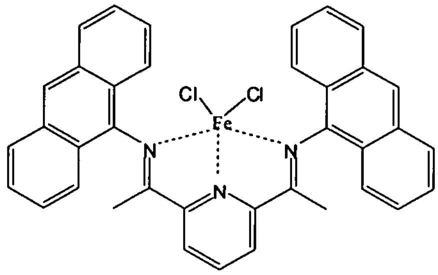

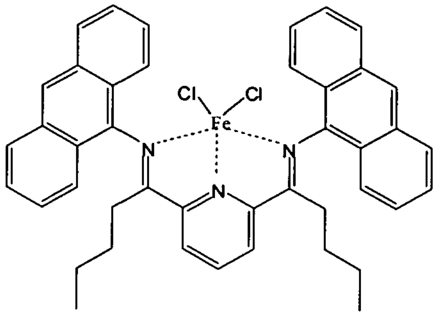

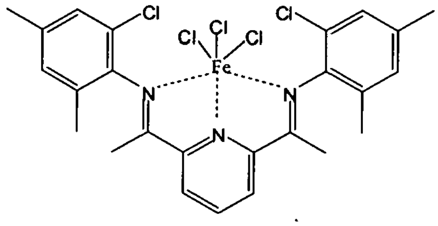

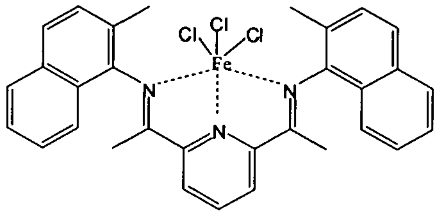

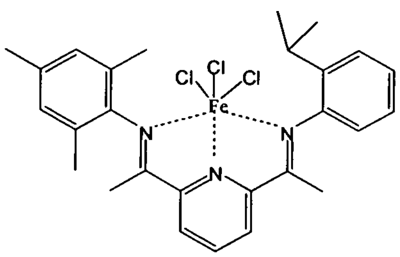

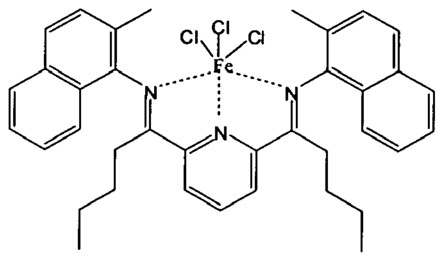

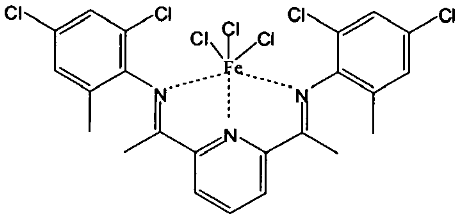

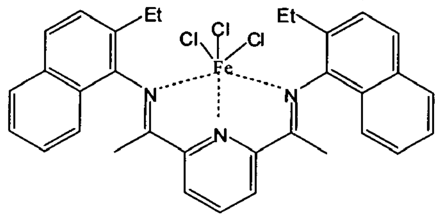

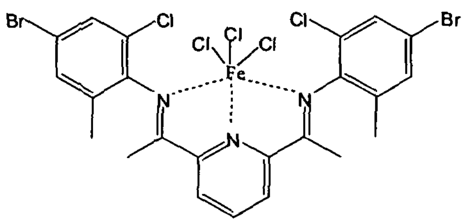

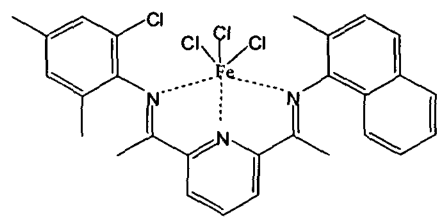

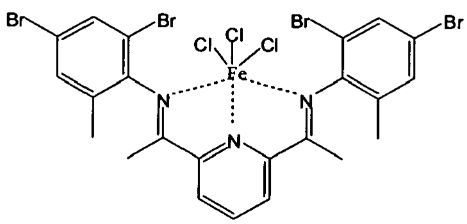

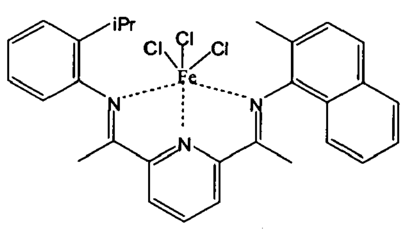

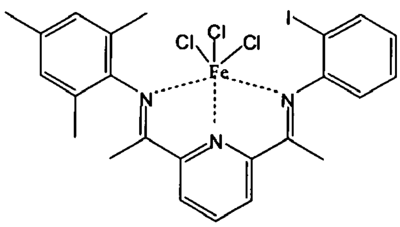

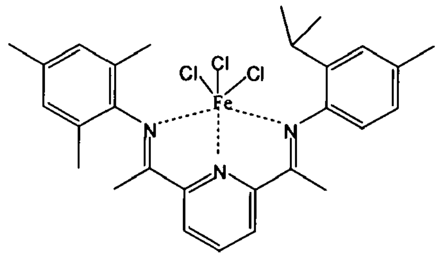

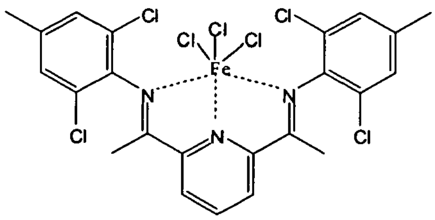

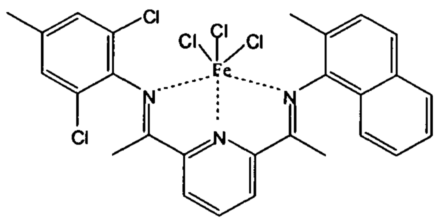

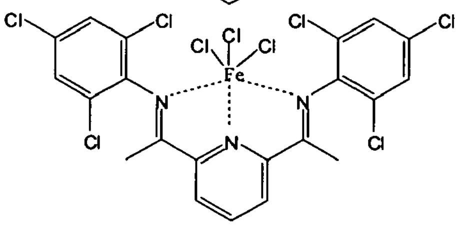

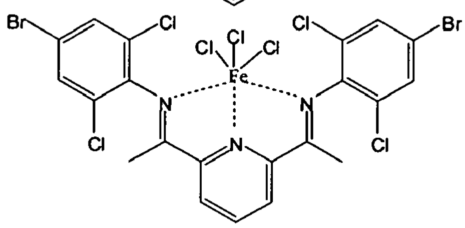

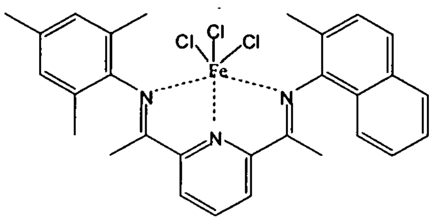

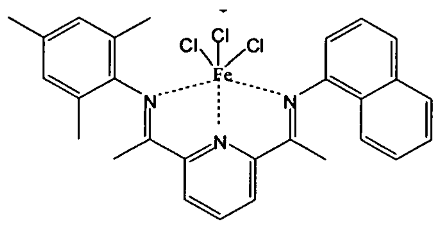

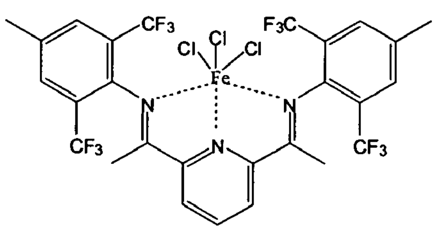

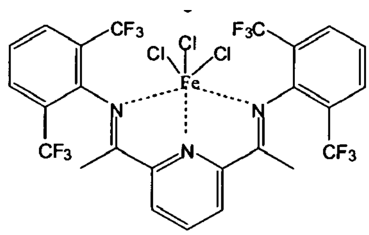

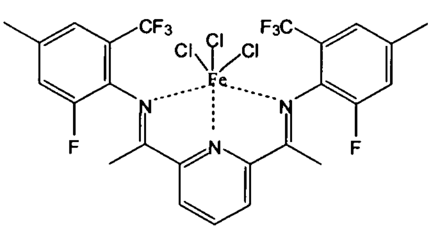

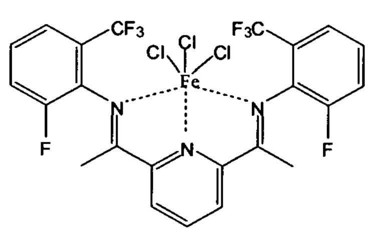

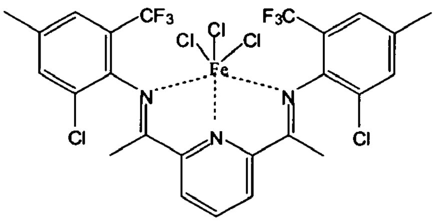

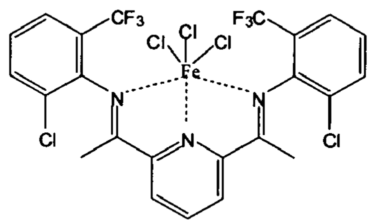

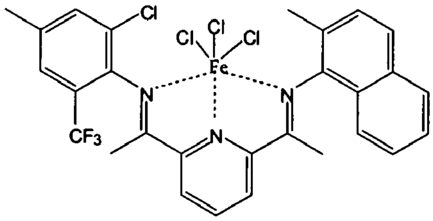

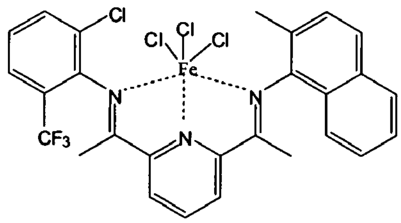

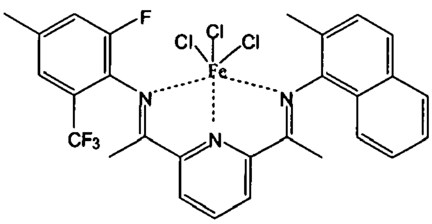

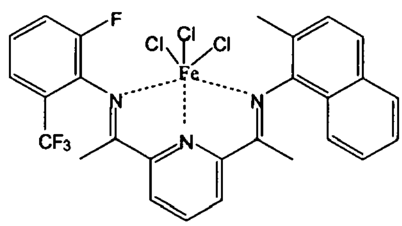

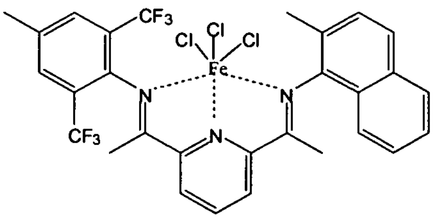

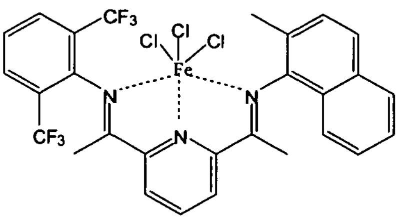

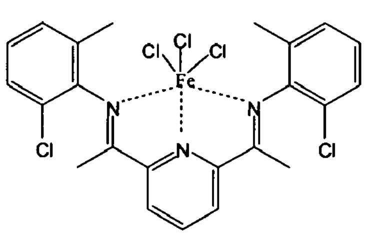

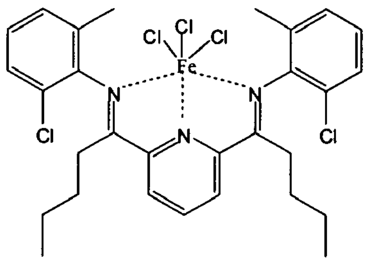

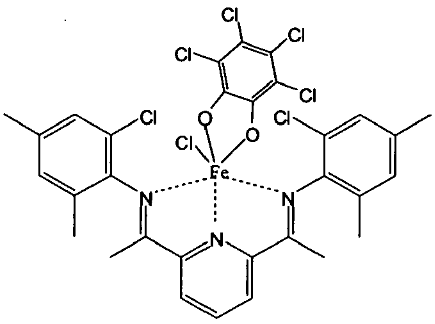

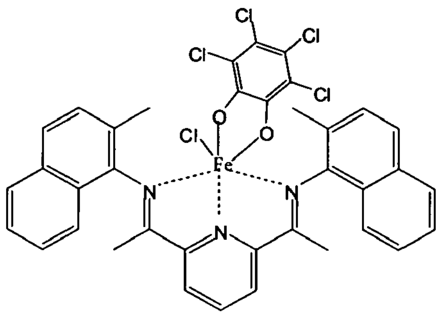

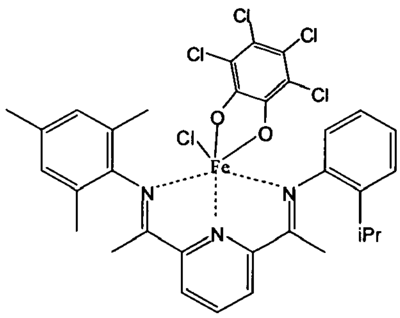

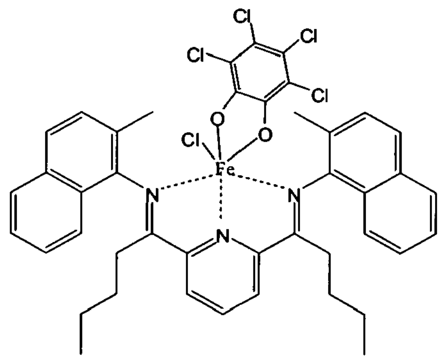

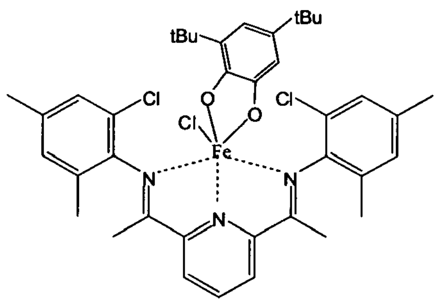

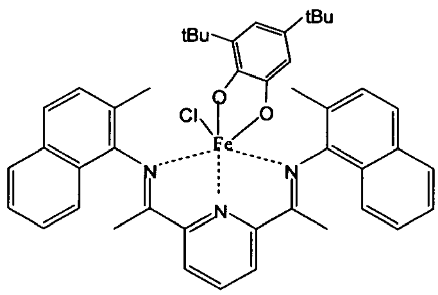

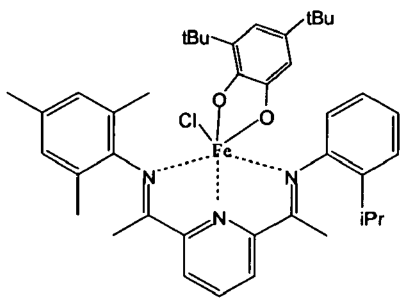

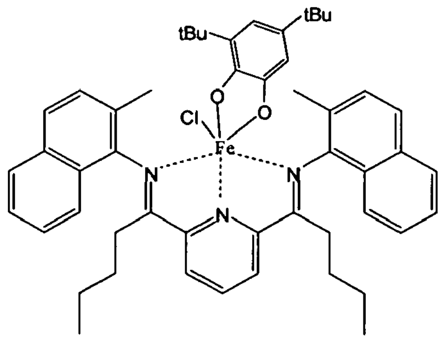

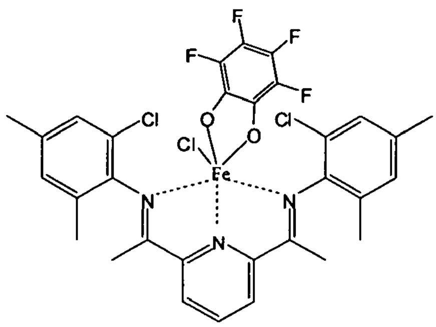

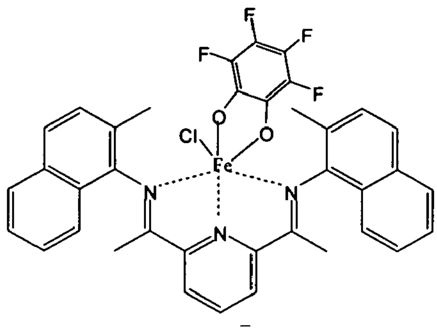

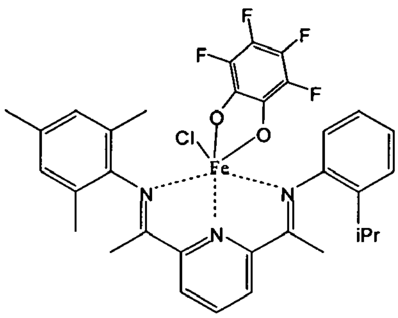

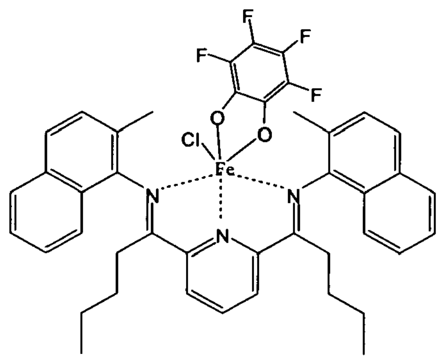

The bis(imine)pyridine iron or cobalt catalyst are prepared according to the methods published by Ma, H. Wang, J. Qiu, D. Xu. Y. Hu. in Macromol. Rapid Commun., 22, 2001, 1280-1283, and for example in the patent documents EP1068245 and EP1015501.

In a variant, said bis(imine)pyridine iron or cobalt catalyst may be prepared by a synthesis process which comprises:

a) preparing 1,2-dimethoxyethaneiron dichloride [$FeCl_2$(DME)] by reaction of iron dichloride and dried dimethoxyethane, according to the procedure described in Inorg. Chem 1990, 29, 1592-1593;
b) reacting 1,2-dimethoxyethaneiron dichloride obtained in step a) with 2,6-diacetylpyridine to form 2,6-diacetylpyridineiron dichloride; and
c) reacting the product obtained in step b) with an excess of the corresponding substituted aniline.

If necessary, the excess of aniline can be recovered and reuse by any method known by a skilled person.

In another preferred embodiment, the bridged-zirconocene catalyst is selected from the following compounds:

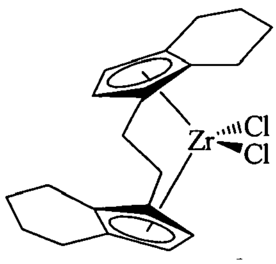

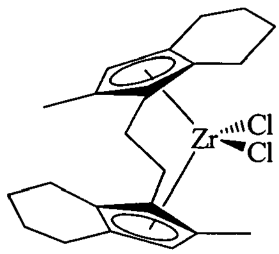

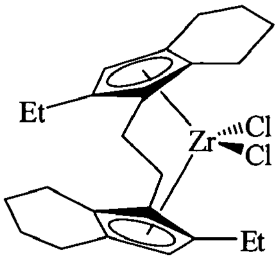

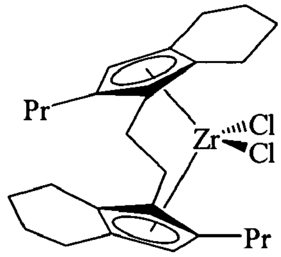

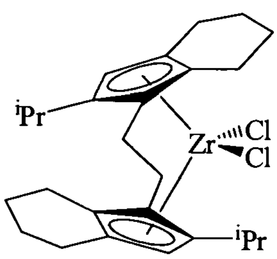

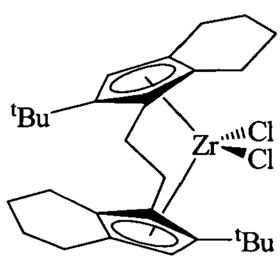

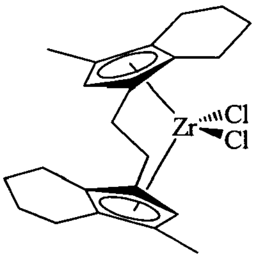

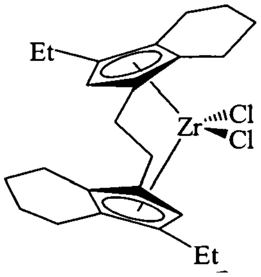

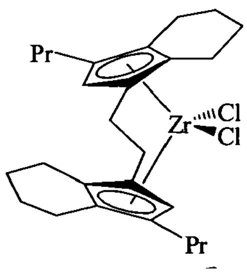

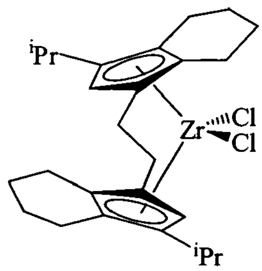

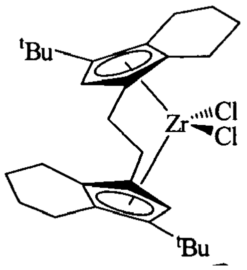

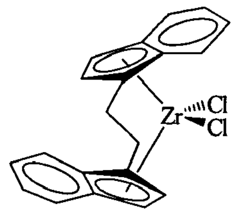

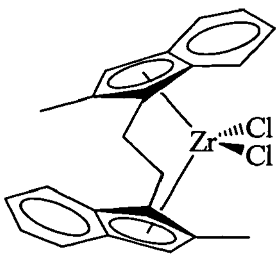

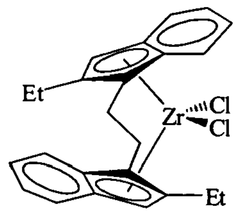

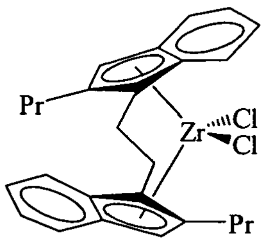

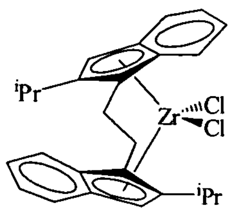

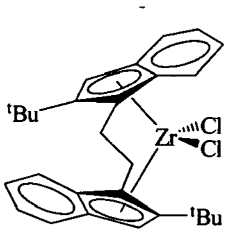

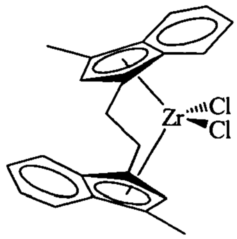

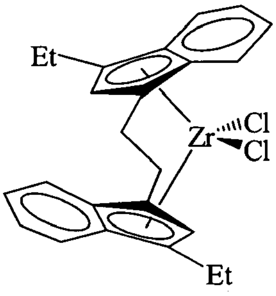

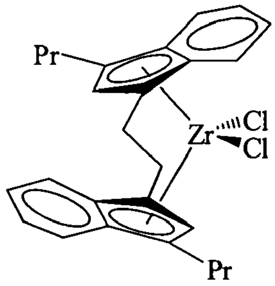

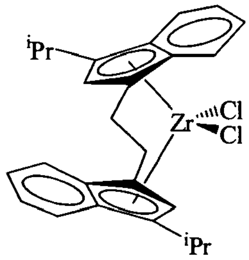

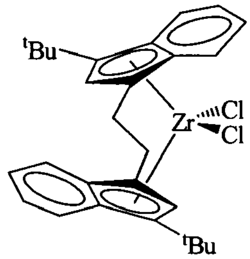

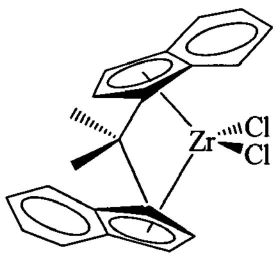

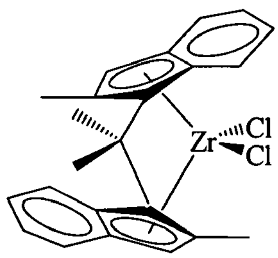

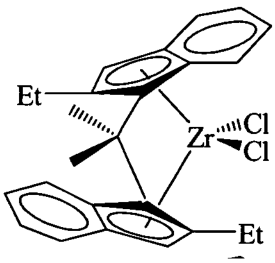

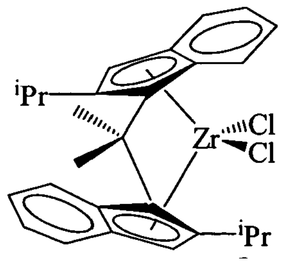

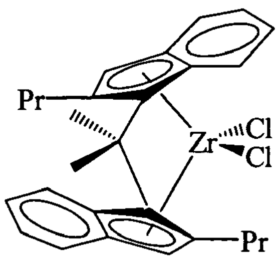

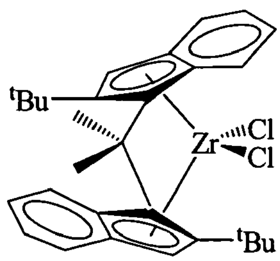

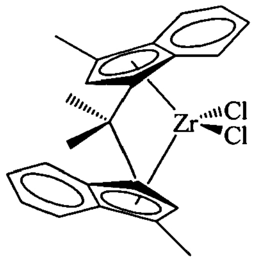

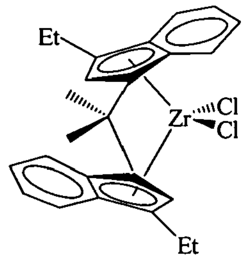

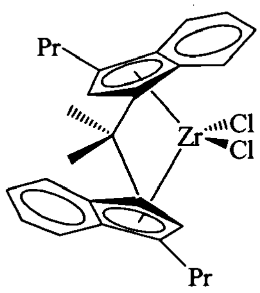

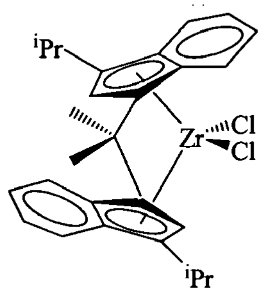

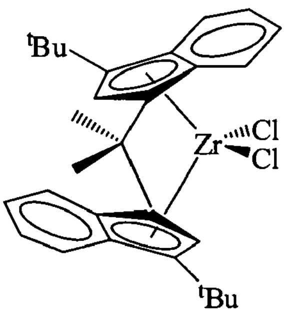

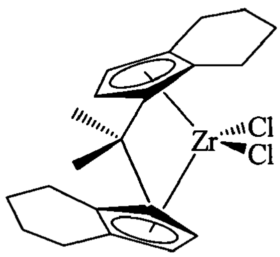

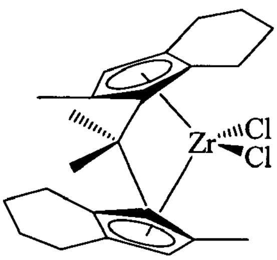

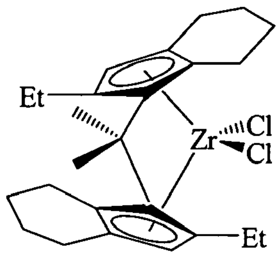

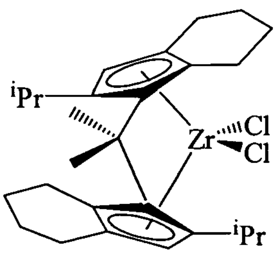

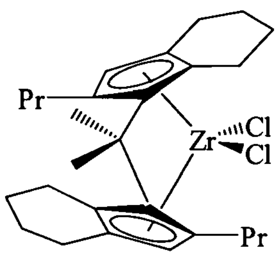

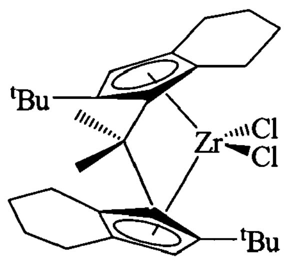

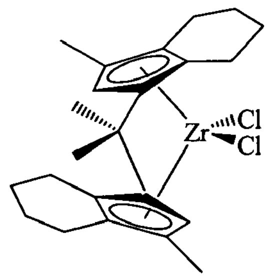

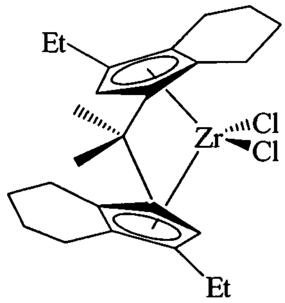

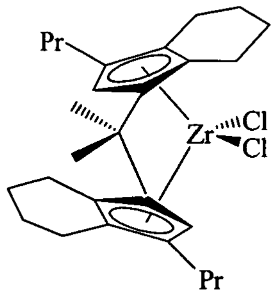

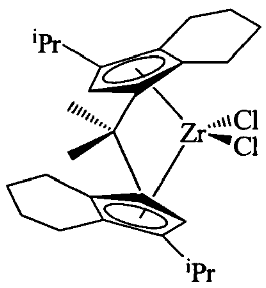

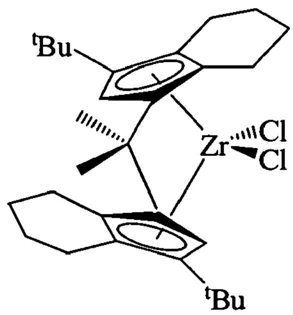

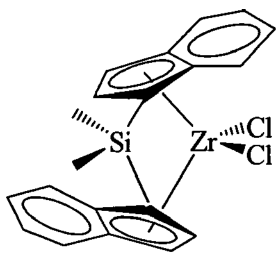

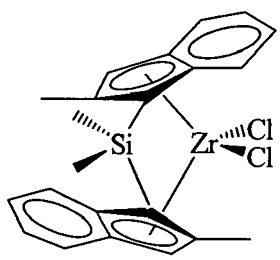

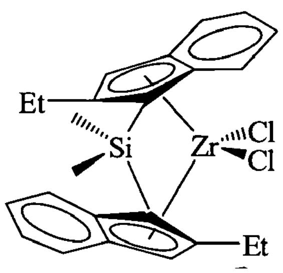

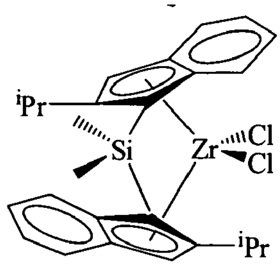

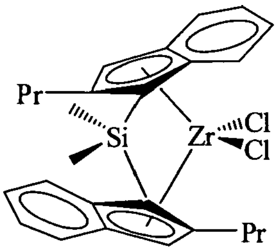

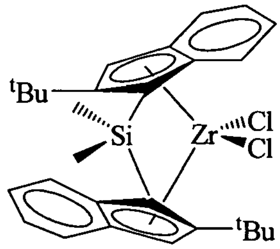

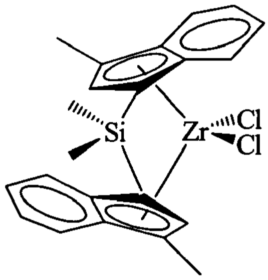

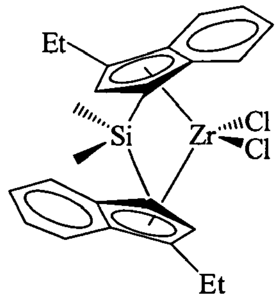

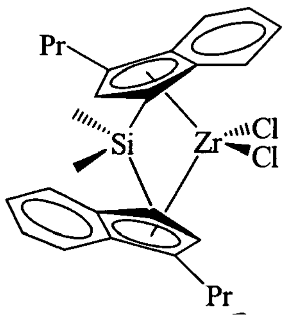

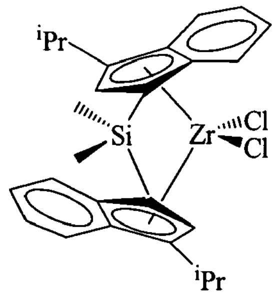

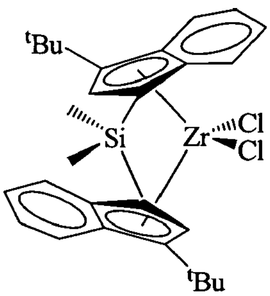

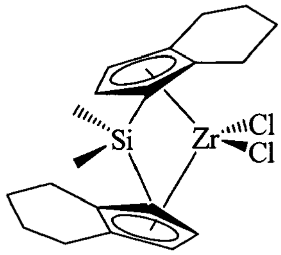

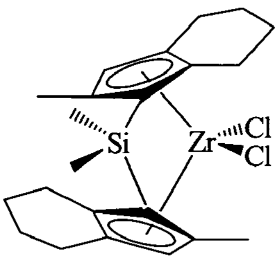

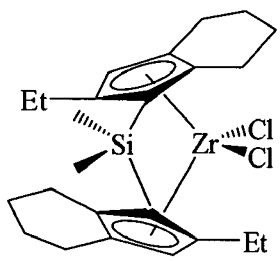

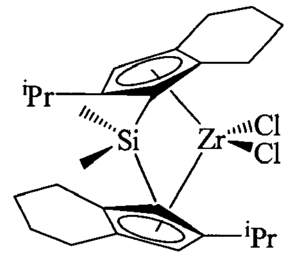

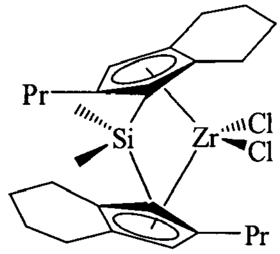

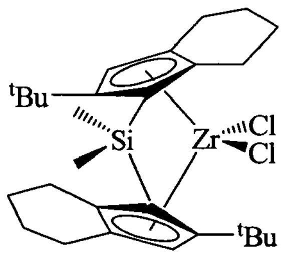

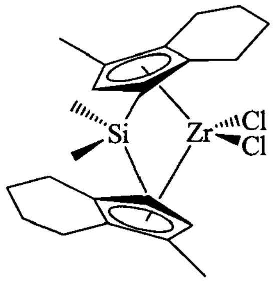

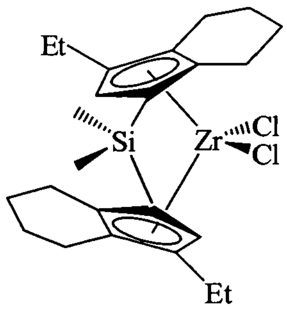

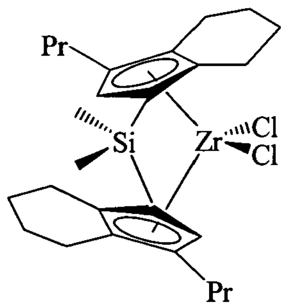

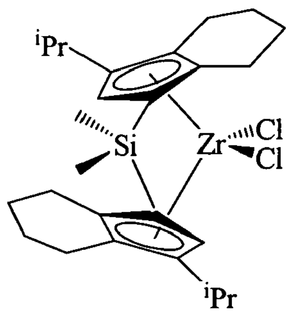

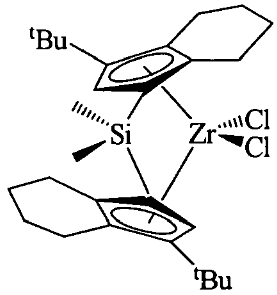

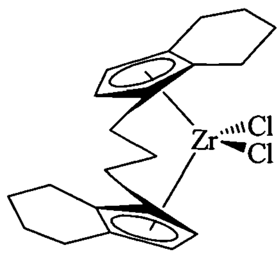

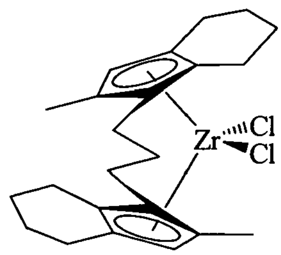

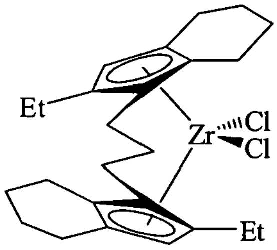

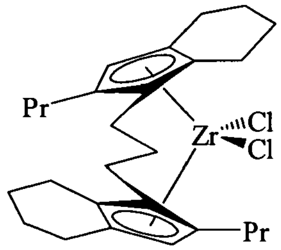

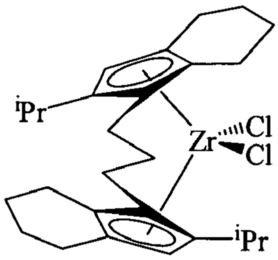

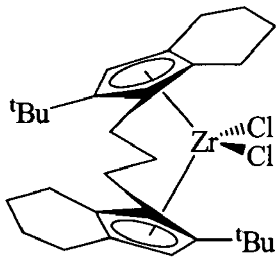

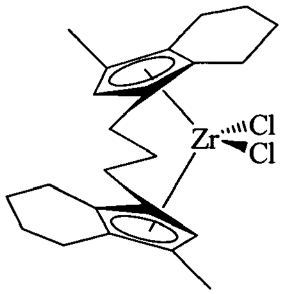

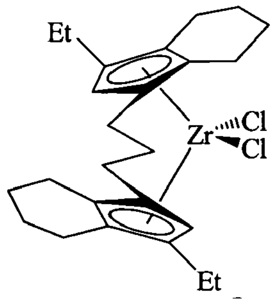

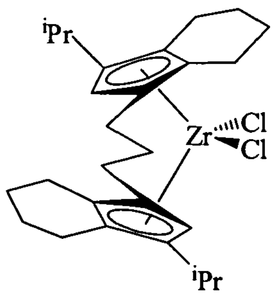

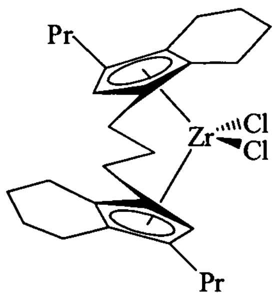

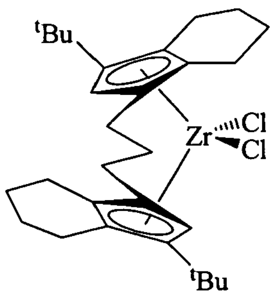

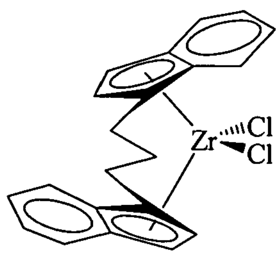

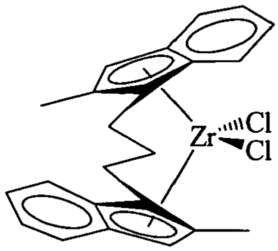

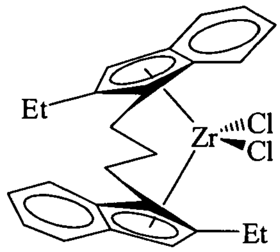

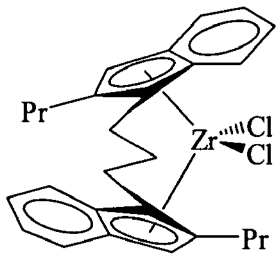

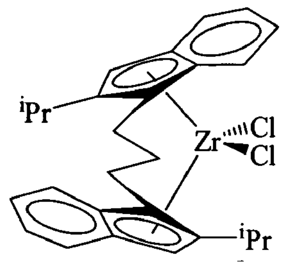

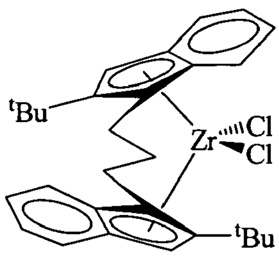

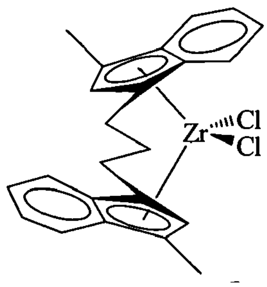

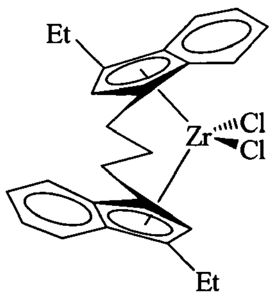

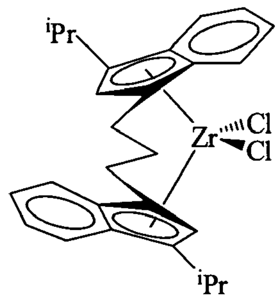

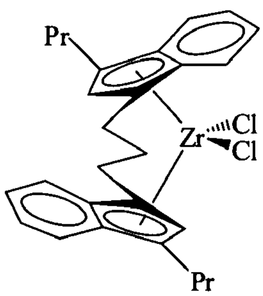

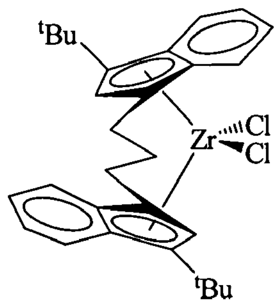

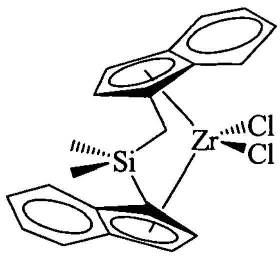

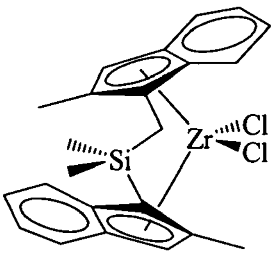

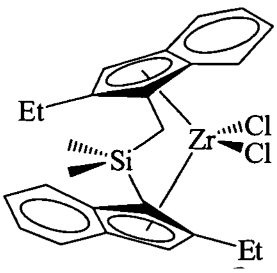

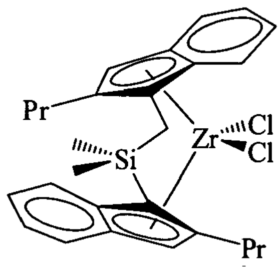

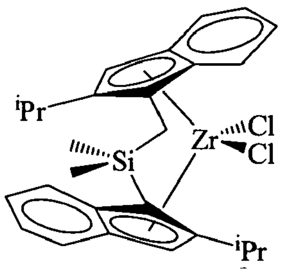

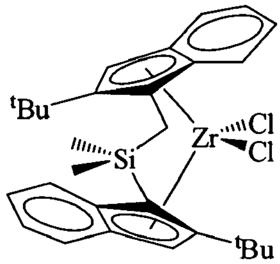

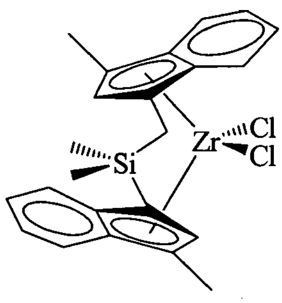

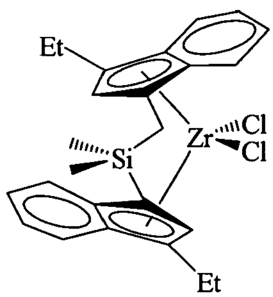

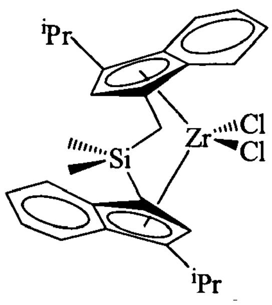

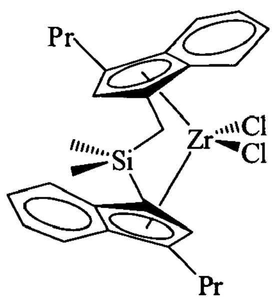

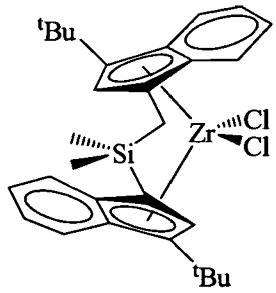

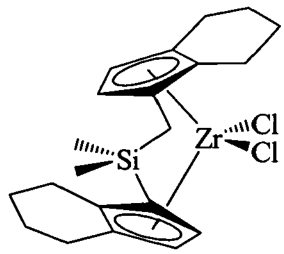

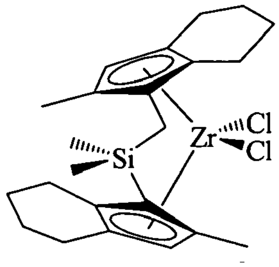

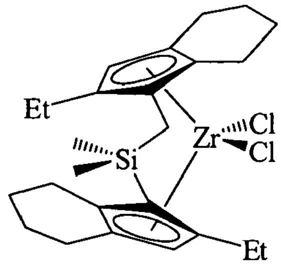

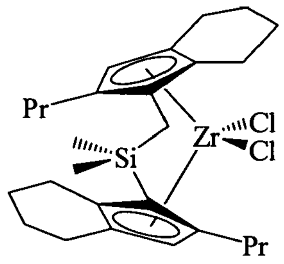

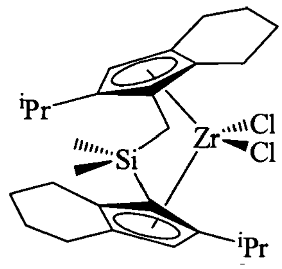

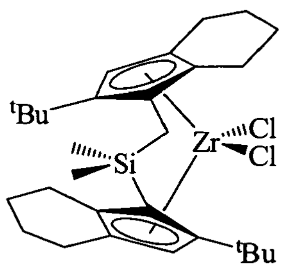

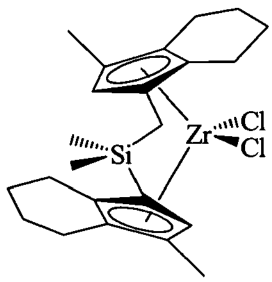

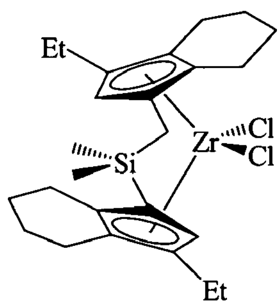

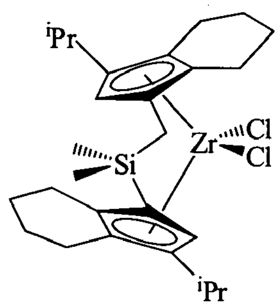

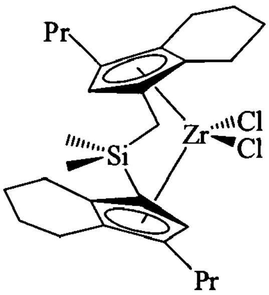

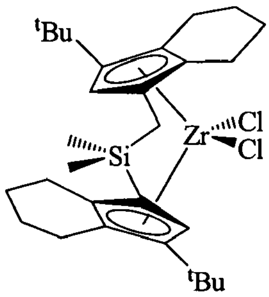

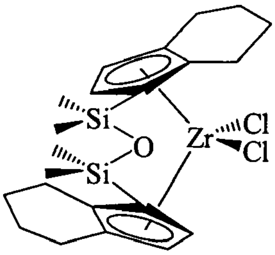

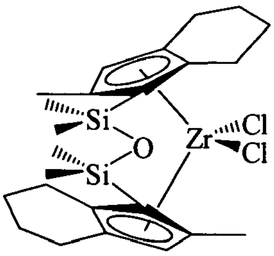

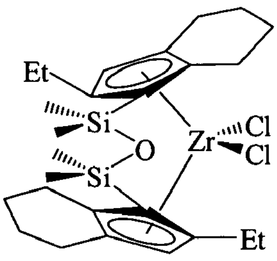

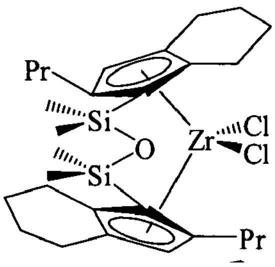

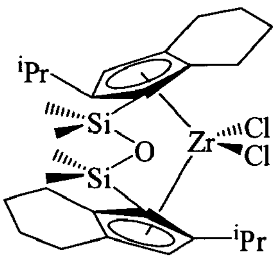

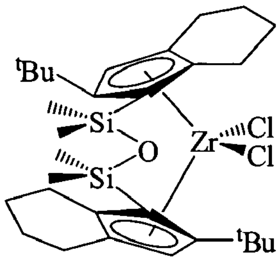

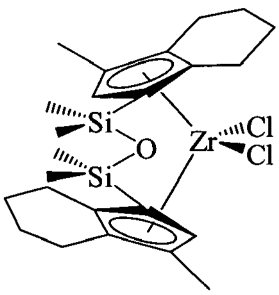

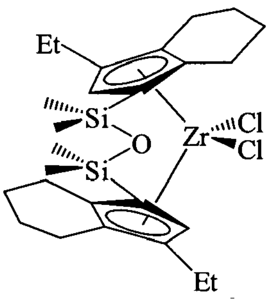

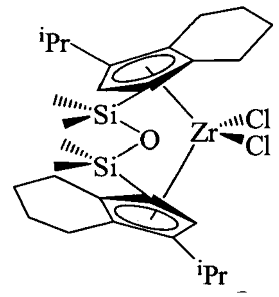

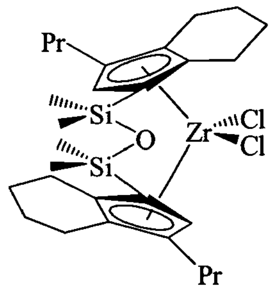

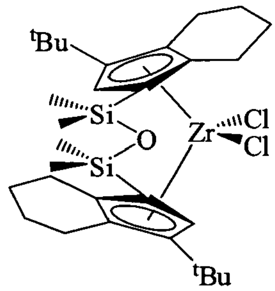

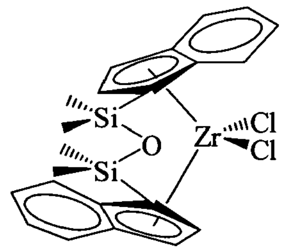

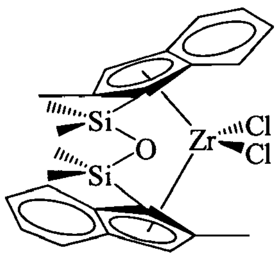

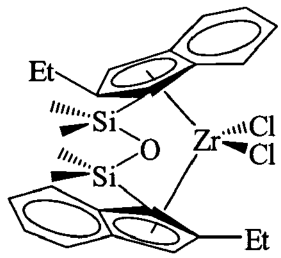

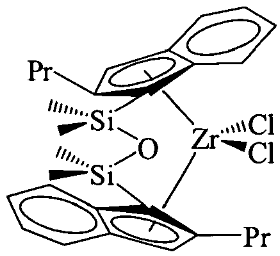

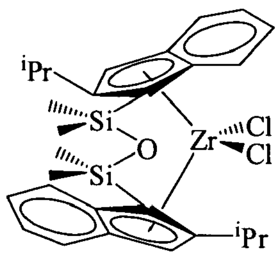

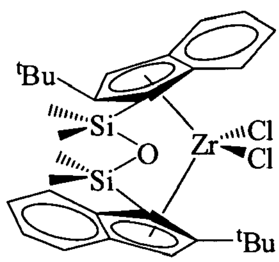

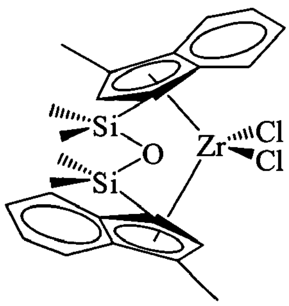

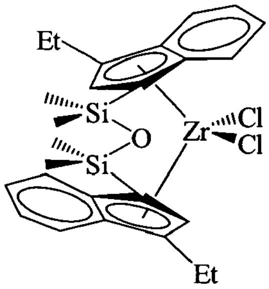

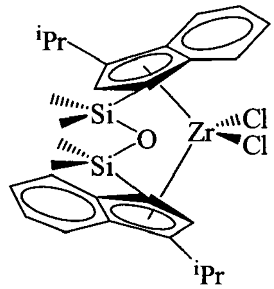

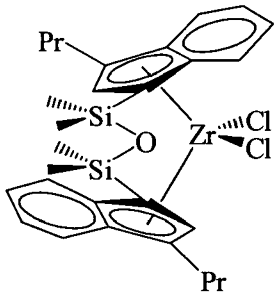

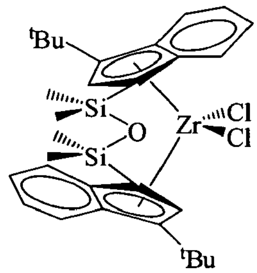

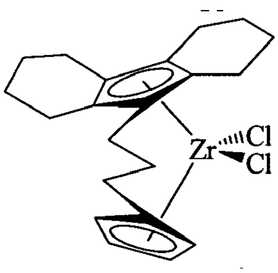

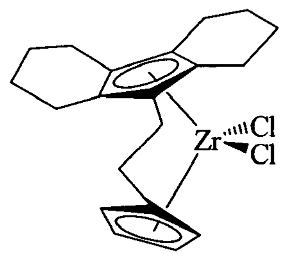

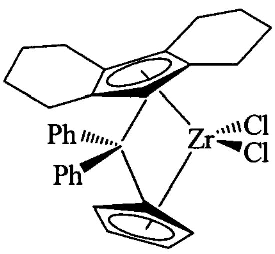

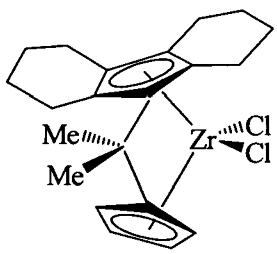

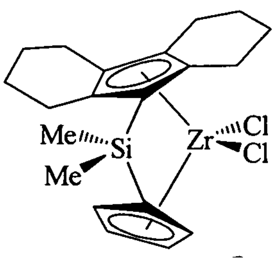

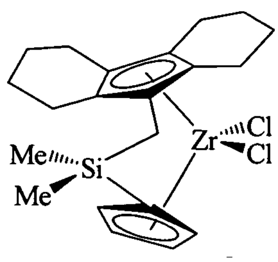

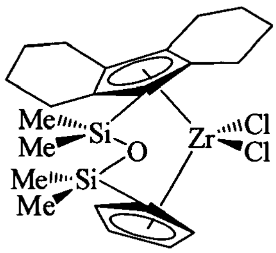

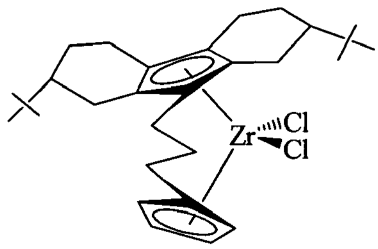

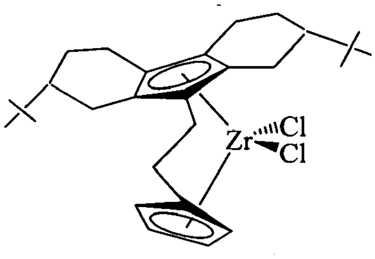

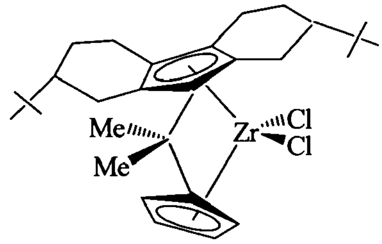

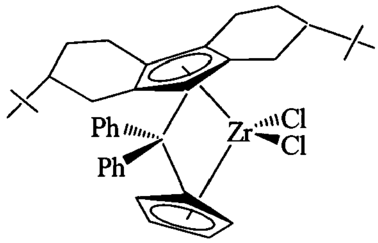

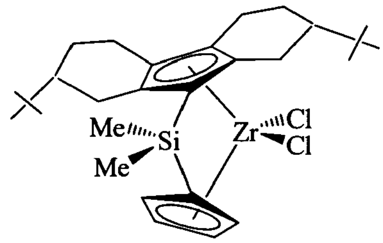

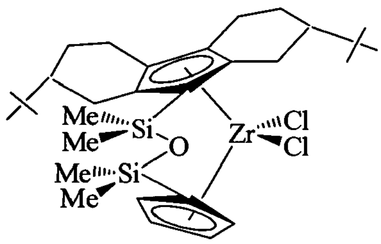

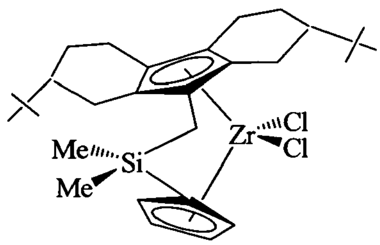

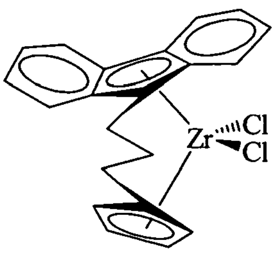

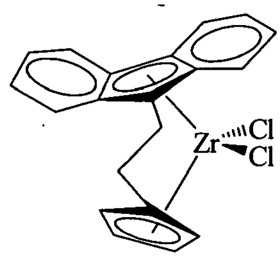

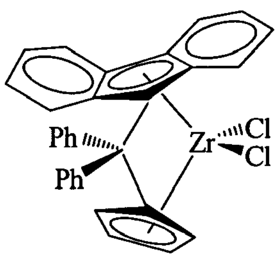

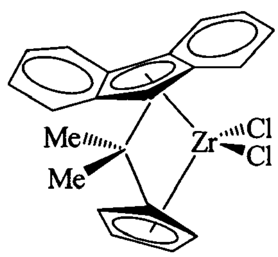

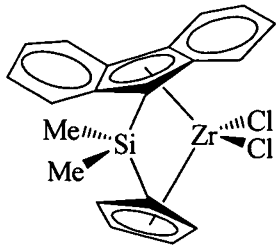

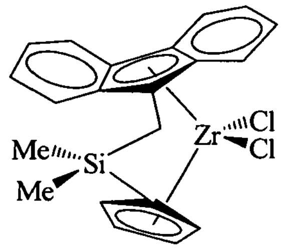

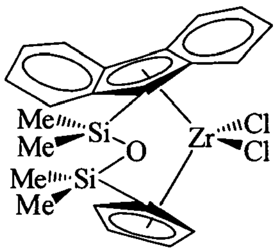

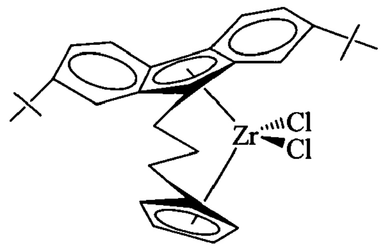

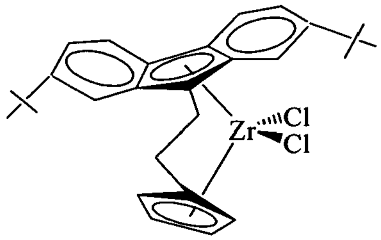

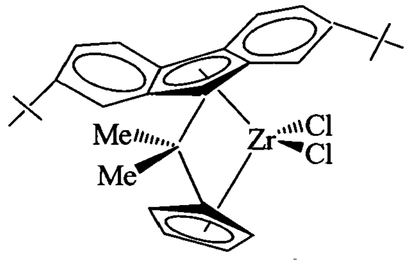

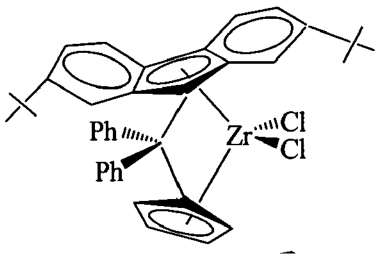

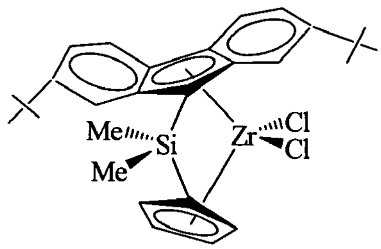

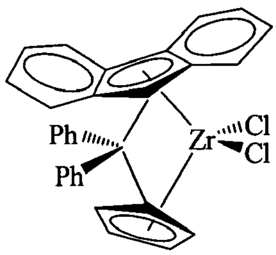

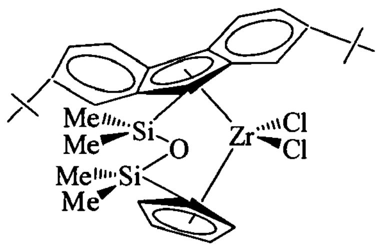

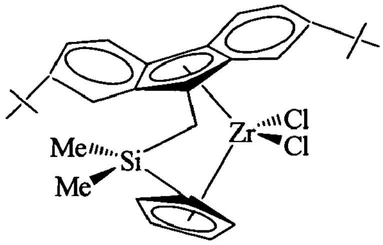

The bridged-metallocene catalysts used in the invention are commercially available or they can be produced by any method known in the state of the art.

The bis(imime)pyridine iron or cobalt catalyst is used to produce the LMW component while the bridged-metallocene catalyst is used to produce simultaneously the HMW component of the polyethylene composition of the invention. This is possible because both catalysts are compatible with each other and they produce their distinctive polymers in the other's catalyst presence. The use of the bis(imine)pyridine iron or cobalt catalyst allows to prepare a bimodal polyethylene wherein the LMW component has a very low content in branches and a suitable bond final chains.

The inert support used for supporting both catalysts, the bis(imine)pyridine iron or cobalt catalyst and the bridged-metallocene catalyst, is preferably a particulate, porous inorganic material such as an oxide of silicon and/or aluminium. The support material is used in the form of a dry powder having an average particle size from 1 to 500 microns. The support typically will have a surface area of at least about 30 $m^2/g$, preferably from about 100 to 1,200 $m^2/g$ and a pore volume of at least 0.1 and preferably from about 0.4 to 5.0 ml/g. The support material should be dry, that is, free of absorbed water. Drying of the support material can be effected by heating it at 100 to 1000°C. In a preferred embodiment, the support is silica, alumina or a mixture thereof. In the most preferred embodiment, the support is silica which, prior to the use thereof in the catalyst synthesis, is dehydrated by fluidizing it with nitrogen flow and heating at a temperature from about 200° to 600°C.

In a particular embodiment of the invention, the dual catalyst system is reacted with a suitable co-catalyst such as a group 13 metal-containing organic metal compound such or mixtures thereof. Preferably, the co-catalyst is an aluminium-containing organic compound.

The supported catalyst system can be prepared by mixing together the required amount of bis(imine)pyridine iron or cobalt catalyst and bridged-metallocene catalyst with the support and, optionally the co-catalyst, in dry non-polar or aromatic solvent, such as toluene, preferably while stirring, and heating the mixture from 25 to 60°C. The suspensions formed are then filtered and the solids washed before drying by vacuum.

In a preferred embodiment of the present invention a method of preparing a supported dual catalyst comprises:

i) reacting a cocatalyst comprising a group 13 metal containing compound with a support to obtain a support on which the cocatalyst is supported; and

ii) supporting the mixture of the iron o cobalt catalyst and bridged metallocene simultaneously or sequentially in any order on the support on which the cocatalyst is supported.

The reaction of the cocatalyst with the support can be performed in the presence or absence of a solvent including aliphatic hydrocarbon such as hexane and aromatic hydrocarbon such as toluene.

The reaction temperature may be in the range -10° to about 100°C and the reaction time may be from 10 minutes to 40 hours.

The support on which the cocatalyst is supported and obtained according to step i) can be used for subsequent reaction after the solvent, when optionally used, is removed under reduced pressure or by filtration.

The reaction of the mixture of the dual catalyst (iron or cobalt catalyst and bridged metallocene) with the support on which the cocatalyst is supported may be performed in the presence of a suitable non polar solvent including aliphatic or aromatic hydrocarbons. The reaction temperature may be from 0° to about 100°C and the reaction time form 10 minutes to about 40 hours.

The supported metallocene catalyst obtained may be used after the solvent is removed by filtration or under reduce pressure.

Alternatively, the dual catalytic system can be prepared by mixing the bis(imine)pyridine iron or cobalt catalyst, the bridged-metallocene catalyst, the cocatalyst and the support in any different order that was previously described. For example, the dual catalytic system can be prepared by firstly mixing the two catalysts with the co-catalyst and then supporting the mixture on the support.

The molar ratio of the bis(imine) pyridine catalyst to bridged-metallocene catalyst is from 2:1 to 1:10 respectively, more preferably form 1:1 to 1:3. The bis(imine) pyridine catalyst and the bridged-metallocene catalyst are on the support

in a range from 0.05 to 5% by weight with respect to the total weight of the supported catalyst system.

Applicants have found that the use of the dual catalyst described above allows controlling the ratio of the high and low molecular weight polymeric components by optionally changing the ratio of the bis(imine) pyridine catalyst to bridged-metallocene.

The molar ratio of group 13 metal-containing compound to transition metal in the supported catalyst may be from 5 to 1000 and more preferably form 10 to 400.

The supported catalyst system contain from about 1 to 25wt-% of 13 metal-containing compound and more preferably from 8 to 20 wt-% with respect to the total weight of the supported catalysts system.

It is within the scope of this invention to use aluminoxane or modified aluminoxane as cocatalyst and/or also compounds known in the state of art as ionizing activators, neutral or ionic such as tetrakis(pentafluorophenyl) boron salts or tris(pentafluorophenyl) boron metalloid precursors. Also, this kind of organometallic compounds could be used in activator-supports such as fluorided alumina, chlorided alumina, bromided alumina, sulfated alumina, fluorided silica-alumina, chlorided silica-alumina, bromided silica-alumina, sulfated silica-alumina, fluorided silica-alumina, chlorided silica-zirconia, bromided silica-zirconia, sulfated silica-zirconia, a pillared clay or any combination thereof.

The aluminium-containing cocatalyst may comprise an alumoxane, such as methyl alumoxane, an alkyl aluminium and/or a Lewis acid. In a preferred embodiment this co-catalyst is bonded or fixed to the support in a prior step such that the dual catalyst is immobilized to the extent that substantially no soluble catalyst species is extracted from the support during polymerization.

The currently most preferred cocatalyst or activator both words being used indistintively in this disclosure is methylaluminoxane (MAO) or modified methylaluminoxane (MMAO). Aluminoxanes are well known in the art and comprise oligomeric linear or cyclic alkyl compounds having respectively the formula $R\text{-}(AlR\text{-}O)_x\text{-}\ AlR_2$ for linear and $(\text{-}AlR\text{-}O)_n$ for cyclic where R is methyl group. For modified methylaluminoxane R is a mix of methyl and larger alkyl groups from 2 to 12 carbon atoms.

Aluminoxanes can be prepared by a variety of methods, non-limiting examples are disclosed in for example EP-A-0561476; EP-B1-0 279586; EP-A-0 594 218; US 4,665,208 EP 0372483 and EP0403830. Modified methylaluminoxanes which contain both methyl groups and higher alkyl groups can be synthesized as disclosed in, for example US 5,041,584.

In another particular embodiment of the invention, the polyethylene composition of the invention is prepared by physically blending or mixing the LMW high density polyethylene component and the HMW ethylene copolymer component. The blending process may be carried out by any method known in the state of the art. However, in a particular embodiment of the invention, the blending is obtained by using an extruder.

Some anti-oxidant agents, such as calcium stearate and Irganox, are added to the blending in order to stabilize the polyethylene composition.

In this particular case, both components (LMW and HMW components) are prepared independently. For example, the LMW component is obtained in a slurry or gas phase polymerization reactor in the presence of a supported bis(imine)pyridine iron or cobalt catalyst as described above, while the HMW component is obtained in a separate slurry or gas phase polymerization reactor in the presence of a supported bridged-zirconocene catalyst as described above. The polymerization reaction conditions in each reactor are the same as those described above for the polymerization in a single reactor using a dual catalyst system.

It should be highlighted, that the mechanical properties of a polyethylene composition, prepared by physically blending the LMW and HMW components, are quite similar to those having the polyethylene composition which has been obtained by the simultaneous formation of both components in a single reactor in the presence of a dual catalyst system, as pointed out in the different examples of the present invention.

The polyethylene composition of the invention may include other additives as known to those skilled in the art. Examples of additives include, but are not limited to, antistatic agents, colorants, stabilizers, nucleators, surface modifiers, pigments, slip agents, antiblocks, tackafiers, polymer processing aids and combinations thereof. Such additives may be used singularly or in combination and may be included in the polymer composition before, during or after preparation of the polyethylene composition as described herein. Such additives may be added via known techniques, for example during an extrusion or compounding step such as during pelletization or subsequent processing into an end use article.

## Pipe compositions

The polyethylene composition of the invention may be formed into various articles. In a particular embodiment, the polyethylene composition is fabricated into a pipe by a plastic shaping process such as extrusion. A method for making a polymeric pipe comprises extruding the polymer in a molten state through a die to form the polymeric pipe and cooling the pipe.

Pipe extrusion, in the simplest terms, is performed by melting, conveying polyethylene composition pellets into a particular shape and solidifying that shape during a cooling process. The polymer feedstock can either be a pre-pigmented polyethylene resin or it can be a mixture of polyethylene and colour concentrate. Feedstock is rigidly controlled to obtain the proper finished product (pipe) and ultimate consumer specifications.

The feedstock is then fed into an extruder. The most common extruder system for pipe production is a single-screw extruder. The purpose of the extruder is to melt, convey, and homogenize the polyethylene pellets. Extrusion temperatures typically range from 178°C to 250°C, depending upon the extruder screw design and flow properties of the polyethylene.

The molten polymer is then passed through a die. The die distributes the homogenous polyethylene composition melted around a solid mandrel, which forms it into an annular shape. In order for the pipe to meet the proper dimensional parameters, the pipe is then sized. There are methods for sizing: vacuum or pressure.

Next, the pipe is cooled and solidified in the desired dimensions. Cooling is accomplished by the use of several water tanks where the outside pipe is either submerged or water is sprayed on the pipe exterior. The pipe is cooled form the outside surface to the inside surface. The interior wall and inside surfaces of the pipe can stay very hot for a long period of time, as polyethylene is a poor conductor of heat. Finally, the pipe is printed and either coiled or cut to length.

In a particular embodiment of the invention, the polymeric pipe fabricated from the polyethylene composition of the invention display enhanced mechanical properties such as resistance to slow crack growth and rapid crack propagation and strength which substantially exceed a PE100 performance rating. Accordingly, the polyethylene composition of the invention allows manufacturing pipes, especially pipes for transmission or distribution for water and gases, with an increased service life.

In a preferred embodiment, the pipe described in the invention is characterized for having a creep rupture strength of more than 100 hours measured at 12.4 MPa and 20°C, a stress crack resistance of more than 165 hours measured at 5.5 MPa and 80°C and a stress crack resistance of more than 1000 hours at 5 MPa and 80°C. All these parameters were taken according to ISO4427 and ISO4437.

In a more preferred embodiment, the pipe described in the invention is characterized for having a creep rupture strength of more than 200 hours measured at 12.4 MPa and 20°C, a stress crack resistance of more than 500 hours measured at 5.5 MPa and 80°C and a stress crack resistance of more than 2000 hours at 5 MPa and 80°C. All these parameters were taken according to ISO4427 and ISO4437.

**EXAMPLES**

The invention is illustrated by way of the following examples which are not intended to restrict its scope.

The following examples illustrate the polymerization behaviour of dual catalytic systems comprising at least one bridged-zirconocene catalyst (A) and/or at least one bis(imine)pyridine iron or cobalt catalyst (B) and one support-activator (C) (e.g. silica/MAO, Albemarle 15 wt%Al) in controlled amounts depending on the desirable polymer properties and composition.

These examples also illustrate the production of polyethylene blends by mixing a bridged-zirconocene polymer (PA) with a bis(imine)pyridine iron or cobalt polymer (PB).

Finally polymers properties are described and polyethylene compositions obtained according to this invention are compared to some PE100 and PE80 commercial polyethylenes.

Polyethylene composition characterization.

Some values given were determined according to standards. Particularly, the density was measured according to ISO1183-2: 2004, the melt index at 190°C and 2.16 or 21.6 Kg according to UNE-EN ISO1133:2001, the Pent test at 80°C and 2.4 MPa according to ASTM F1473:2001, the total impact Charpy energy according to ASTM D6110-2004e1, the flexural modulus according to UNE-EN ISO178 2003, the stress crack resistance in pipes according to ISO44 and ISO4437.

Some values given were determined according to internal methods or using conventional techniques. Particularly, the comonomer content and double bond final chain content were determined by $^{13}C$ NMR spectroscopy, the molecular weight and molecular weight distribution as determined by GPC and the ductile-brittle transition temperature according to a internal procedure.

Thus, the $^{13}C\{^1H\}$ NMR polymer analyses were recorded on a Bruker DRX 500 NMR spectrometer and the chemical shifts were referenced to residual solvent peaks. The samples were dissolved in trichlorobenzene (TCB) and benzene-$d_6$ by heating at 100°C for several minutes and gentle agitation. The pulse repetition rate was 5 seconds; the pulse angle 90° and at least 4000 pulse sequences were recorded. Thus, three kinds of terminal groups were detected by $^{13}C$ NMR spectroscopy: vinyl end group, methyl end group and butyl comonomer group, which were assigned according to: Randall, J. C. J. Macromol. Sci. Rev. Macromol. Chem. Phys. 1989, C29, 201.

High temperature PL 220 SEC was used to obtain $M_n$, $M_w$ and MWD with trichlorobenzene (TCB) as the solvent, with a flow rate of 1 ml/min at a temperature of 143°C. BHT (2,6-diter-butyl-4-methylphenol) at a concentration of 0.14g/l

was used as TCB stabilizer. Injection volume was 200 μl with 1.5 mg/ml polymer concentration. Dissolution of the sample in stabilized TCB was carried out by heating at 150°C for 3 h with occasional gentle agitation. The sample was cold slowly and reheated to 150°C for 2 h prior to injection. The columns used were two PLGel Mixed A (7.8 x 300 mm) and were calibrated with a broad linear polyethylene standard. SCBD was obtained using a combination SEC-FTIR system with FTIR on line as detector.

The ductile-brittle transition temperature, $T_{db}$, was determined according to the following procedure.

Theoretical description

Under the hypothesis that the ductile-brittle point, I, is in the straight line that contains points B (point of greater energy, $E_B$ in the brittle zone) and C (the point of smaller energy, $E_C$, in the ductile zone), and assuming that the slope of straight lines A-B (brittle zone), defined by the angle α, and C-B (ductile zone), defined by the angle β, influences in the displacement of the ductile-brittle point, I, a method to calculate this point based on the angles α and β (see figure 1) has been developed.

Therefore, the point I, is defined like $I(T_I, E_I)$, where $T_I \in [T_B, T_C]$ and $E_I \in [E_B, E_C]$. Thus, the segment $T_B$-$T_C$:

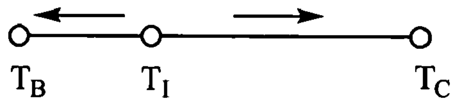


can be represented using the segmentation parameters $\omega_\alpha$ and $\omega_\beta$:

$$\omega_\alpha = \frac{T_C - T_I}{T_C - T_B} \quad \text{y} \quad \omega_\beta = \frac{T_I - T_B}{T_C - T_B}$$

Therefore, to find the ductile-brittle transition temperature, $T_I$, the following equation is due to verify

$$\alpha\left(\frac{T_C - T_I}{T_C - T_B}\right) - \alpha\omega_\alpha = \beta\left(\frac{T_I - T_B}{T_C - T_B}\right) - \beta\omega_\beta$$

operating the previous expression, it result that $T_I$ it is the weighted average of the variations of $\omega_\alpha$ and $\omega_\beta$ with the corresponding values α and β.

$$T_I = \frac{\alpha T_I^{\alpha} + \beta T_I^{\beta}}{\alpha + \beta}$$

where,

$$T_I^{\alpha} = \omega_\alpha T_B + (1 - \omega_\alpha) T_C \qquad \text{and} \qquad T_I^{\beta} = (1 - \omega_\beta) T_B + \omega_\beta T_C$$

being,

$$\omega_\alpha = \frac{1}{2} + \frac{\alpha}{180} \qquad \text{and} \qquad \omega_\beta = \frac{1}{2} + \frac{\beta}{180}$$

obtained under the hypothesis that α and β can have any value from 0° to 90°. Therefore, $\omega_\alpha$ and $\omega_\beta$ are also proportional, or in other words, $\alpha \in [0,90]$, $\beta \in [0,90]$, $\omega_\alpha \in [0,1]$ and $\omega_\beta \in [0,1]$, and fulfil the relation previously described.

On the other hand, because point I is contained in straight line B-C, and known $T_I$, $E_I$ can be calculated by means of the following expression,

$$E_I = E_B - \frac{(E_B - E_C)}{(T_B - T_C)}(T_B - T_I)$$

The calculation of α and β angles is made using the following equations:

$$\alpha = \arctan\left(\frac{(E_B - E_A)}{(T_B - T_A)}\right) \quad \text{and} \quad \beta = \arctan\left(\frac{(E_D - E_C)}{(T_D - T_C)}\right)$$

Practical description.

The $T_{db}$ was determined according to the previous equations replacing $T_I$ by $T_{db}$, $T_A$, $T_B$, $T_C$, $T_D$, $E_A$, $E_B$, $E_C$ and $E_D$ by the values obtained in Charpy test at different temperatures, considering that are necessary two points below the $T_{db}$, to define brittle zone, and two points upon to define ductile zone.

Example 1. Preparation of catalyst precursors.

All operations were carried out under nitrogen or argon atmosphere following conventional Schlenk techniques. THF and diethyl ether were dried by distillation from sodium and benzophenone; $CH_2Cl_2$ was dried by distillation from calcium hydride; petroleum ether and toluene was dried by distillation from sodium. All solvents were degassed before use. The petroleum ether had a boiling point of 40-60° C.

a) Preparation of bridged zirconocene catalyst (A).

The catalysts A were purchased from Boulder Scientific Company and used as received

b) Preparation of bis(imine)pyridine iron catalyst (B)

The catalysts B were prepared according to already published methods (see, for example, Z. Ma, H. Wang, J. Qiu, D. Xu. Y. Hu. Macromol. Rapid Commun., 22, 2001, 1280-1283, EP 1068245 and EP1015501 with the exception of B3 that was prepared by the following modified method.

b.1.) Preparation of 1, 2-dimethoxyethaneiron dichloride, $FeCl_2$(DME)

(Procedure adapted from Philip Boudjouk, *Inorg. Chem* **1990,** *29,* 1592-1593).

$FeCl_2$ $4H_2O$ (29.8 g, 0.15 mol, 1 eq) was charged into a 1-L three-necked round-bottomed flask equipped with a inert gas inlet, pressure-equalizing addition funnel and a reflux condenser. First, dry dimethoxyethane (DME, 300 ml, 3.5 mol, 23 eq) was added at room temperature and, second, $ClSiMe_3$ (163 ml, 1.25 mol, 8.3 eq) was added dropwise through the addition funnel over 45 min. *Caution: hydrogen chloride is evolved and was necessary to use an absorbing NaOH trap.* When the addition was finished, the addition funnel was removed and changed by a glass septum, and then the reaction mixture was heated under reflux (approx. 85°C) and held at this temperature for 12 h. After this time, the

heating bath was removed and the reaction mixture was allowed to cool to room temperature first and then, the white solid was filtered, washed with hexane (2x100ml) and dried for 48 h at room temperature. The resulting white product was hygroscopic. Yield: 99 %.

b.2.) Preparation of 2,6-diacetylpyridineiron dichloride.

$FeCl_2$(DME) (23.54 g, 140 mmol) was charged into a 0.5-L three-necked round-bottomed flask equipped with a magnetic bar, inert gas inlet and two glass septa. Then, $CH_2Cl_2$ (120 ml) and a solution of 2,6-diacetylpyridine (27.4 g, 168 mmol, 1.2 eq) in 80 ml of $CH_2Cl_2$ were added. The reaction mixture was stirred for 24 h at room temperature and the violet-blue solid was allowed to decant, filtered and washed with $CH_2Cl_2$ (2x100ml). The violet-blue product was dried under vacuum at room temperature for 48 h. Yield: 30.94 g, 76.5 %
Note: It was possible to recover 2.6-diacetylpyridine (excess). For this, the filtrates were evaporated in vacuo to dryness, and reextracted with $Et_2O$ (100 mL). After drying, the product was obtained as a pale yellow solid. Yield: 9g. The possibility to reuse this material can be considered.

b.3.) Preparation of 2,6-bis-[1-(2-chloro-4,6-dimethylphenylimino)ethyl]pyridineiron dichloride (**B3**)

$FeCl_2$(2,6-diacetylpyridine) (30.94 g, 107.1 mmol) was charged into a 1-L three-necked round-bottomed flask equipped with a magnetic bar, inert gas inlet and two rubber septa. Under inert gas, EtOH (100 ml) and a solution of 2-chloro-4,6-dimethylaniline (166 g, 1.07 mol, 10 eq) in 200 ml of EtOH were added [comment: The solution was prepared under inert gas from powdered aniline and ethanol. Heat the mixture if it is necessary]. The rubber septa were changed by a reflux condenser and a glass septum and the reaction mixture was heated to 85°C and stirred for 36 h at this temperature. After this time, the heating bath was removed and the reaction mixture was allowed to cool to room temperature first and then, the blue solid was filtered and washed with ethanol (150ml) and diethyl ether (2x100ml). The resulting catalyst was dried for 48 h under vacuum. Yield: 54.17 g, 90 %.

The final product was obtained as two isomers in a 50:50 ratio. $^1H$ NMR ($CD_2Cl_2$, 298 K, 300 MHz): $\delta$ 85.10, 82.60 (s, 2H, *m-CH*(py)), 35.48, 34.60 (s, 1H, *p*-C*H*(py)), 22.51, 22.84 (s, 6H, *p-CH$_3$),* 19.56, 18.51 (s, 2H, C$H_{ar}$), 15.33, 12.13 (s, 2H, C$H_{ar}$), 8.96, 3.77 (sa, 6H, *o*-C$H_3$), -21.75, -23.94 (s, 6H, C$H_3$-C=$N_{ar}$). IR (Nujol, $cm^{-1}$): y(C=N)= 1624, 1589, $\mu_{eff}$ = 5.01 MB

The excess of aniline can be recovered and reuse if it is necessary. The procedure to recover excess of aniline can be doing following the steps:

1) The filtrates (ethanol and diethylether washings) were evaporated in vacuo to dryness using a rotavap.
2) The residue was purified by filtering (short column) through silica gel with ethyl acetate (5x160 ml). See Figure 2.
3) After removal of the solvent by rotary evaporation (rotavap), 129.58g of aniline was obtained (identified via $^1H$ NMR)
4) The oily residue solidified upon standing at room temperature which was necessary to place in a glass bottle several minutes after the solution was evaporated.

In these examples, the following bridged zirconocene and bis(imine)pyridine iron catalyst were used:

A1:

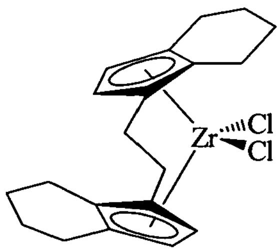

B1:

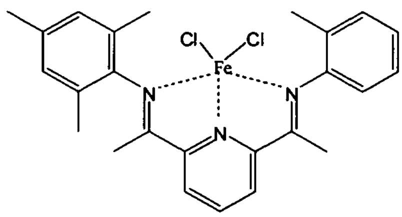

A2:

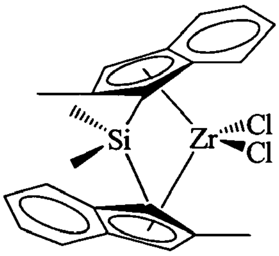

B2

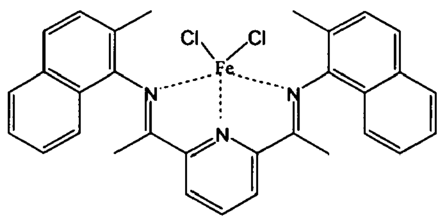

A3:

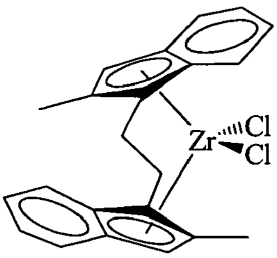

B3

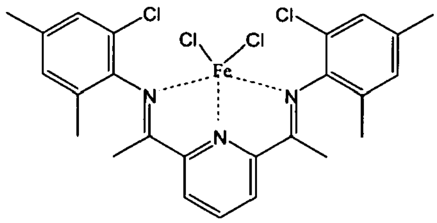

B4

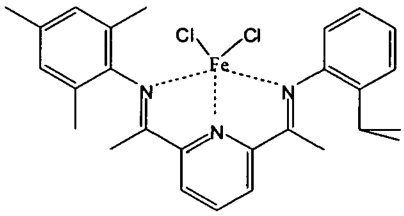

B5

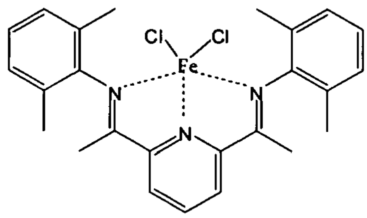

Example 2. Preparation of supported catalyst systems on Silica-MAO.

The catalyst systems were prepared by supporting on silica-MAO according to the following procedure:

Inside a dry-box, the required A and/or B catalysts prepared as described previously, and silica-MAO provided by Albemarle (15 wt-%Al) were mixed together in the amounts shown in Table I. Then, dry toluene were added to the mixture and stirred at 500 rpm with a blade stirrer. The suspensions, which were deep blue coloured at the beginning, turned gradually to red coloration. After 24 h, stirring was stopped, the mixtures filtered and the solids washed with abundant dry toluene before drying in vacuo. Thus, the following supported catalytic systems were prepared (Table I).

Table I

| Theoretical Catalyst Systems Composition based on Silica MAO | | | |
|---|---|---|---|
| Catalyst System | wt-%A | wt-%B | g Support |
| P1 | 0.2 | 0.1 | 3 |
| P2 | 0.2 | 0.2 | 3 |
| P3 | 0.1 | 0.2 | 3 |
| P4 | 0.3 | 0.12 | 3 |
| P5 | 0.33 | 0.1 | 3 |
| P6 | 0.33 | 0.2 | 3 |

(continued)

| Theoretical Catalyst Systems Composition based on Silica MAO | | | |
|---|---|---|---|
| Catalyst System | wt-%A | wt-%B | g Support |
| P7 | 0.2 | 0 | 250 |
| P8 | 0 | 0.2 | 250 |

The amounts of supported Zr, Fe and Al were analytically measured for each case with Inductively Coupled Plasma Spectrometry (ICP) techniques (Table II).

Table II

| Catalytic systems based on silica-MAO | | | | | | |
|---|---|---|---|---|---|---|
| Example | Catalyst System | Zr Catalyst (g) | Fe Catalyst (g) | wt%Zr* | wt%Fe* | wt%Al* |
| E1<br>E2<br>E3 | A1B1P2 | 0.028 | 0.053 | 0.198 | 0.204 | 14.4 |
| E4<br>E5<br>E6<br>E7 | A2B2P2 | 0.016 | 0.030 | 0.178 | 0.188 | 12.99 |
| E8<br>E9<br>E10 | A1B3P1 | 0.028 | 0.030 | 0.277 | 0.112 | 14.9 |
| E11<br>E12<br>E13<br>E14 | A3B2P1 | 0.029 | 0.030 | 0.187 | 0.09 | 13.9 |
| E15<br>E16<br>E17 | A1B3P4 | 0.042 | 0.036 | 0.25 | 0.113 | 13.93 |
| E18<br>E19<br>E20 | A1B3P5 | 0.046 | 0.030 | 0.271 | 0.088 | 13.6 |
| E21 | A2B4P6 | 0.052 | 0.056 | 0.33 | 0.21 | 14.3 |
| E22 | A1B3P5 | 0.046 | 0.030 | 0.302 | 0.11 | 13.9 |
| E23 | A1B3P4 | 0.042 | 0.036 | 0.272 | 0.114 | 13.82 |
| E24<br>E25<br>E26<br>E27 | A1B1P2 | 0.028 | 0.053 | 0.198 | 0.204 | 14.4 |
| E28 | A1B2P1 | 0.028 | 0.030 | 0.197 | 0.085 | 15.4 |
| E29 | A1B2P3 | 0.014 | 0.061 | 0.101 | 0.184 | 15 |
| E30 | A3B2P1 | 0.029 | 0.030 | 0.187 | 0.09 | 13.9 |
| E31<br>E32<br>E33 | A1B3P4 | 0.042 | 0.036 | 0.25 | 0.113 | 13.93 |
| E34 | A2B4P6 | 0.052 | 0.056 | 0.33 | 0.21 | 14.3 |

(continued)

| Catalytic systems based on silica-MAO | | | | | | |
|---|---|---|---|---|---|---|
| Example | Catalyst System | Zr Catalyst (g) | Fe Catalyst (g) | wt%Zr* | wt%Fe* | wt%Al* |
| E35 | A1B3P4 | 0.042 | 0.036 | 0.25 | 0.12 | 12.6 |
| E36 | A2B4P6 | 0.052 | 0.056 | 0.33 | 0.21 | 14.3 |
| E37 | A1B3P5 | 0.046 | 0.030 | 0.302 | 0.11 | 13.9 |
| E38 | A1B3P4 | 0.042 | 0.036 | 0.25 | 0.113 | 13.93 |
| E39 | | | | | | |
| E40 | A1P7 | 6.16 | 0 | 0.255 | 0 | 13.6 |
| E41 | | | | | | |
| E42 | | | | | | |
| E43 | | | | | | |
| E44 | B5P8 | 0 | 4.19 | 0 | 0.197 | 14.5 |
| E45 | | | | | | |
| E46 | | | | | | |
| E47 | B2P8 | 0 | 5.10 | 0 | 0.197 | 12.8 |
| E48 | B3P8 | 0 | 5.06 | 0 | 0.184 | 13.7 |
| *Measured by ICP | | | | | | |

Example 3. Polymerization Procedure.

Polymerization tests were carried out in four different slurry reactors. In all the examples the dual catalyst system was added as a suspension in heptane to the reactor vessel according to the following four procedures:

*Polymerization essays employing catalyst systems supported on silica-MAO performed at 4 bar of ethylene.*

EXAMPLES E1-E14

Reactor Volume: 1,3 L; Solvent: n-heptane (600 mL). General Procedure

The continuously stirred reactor was filled with the solvent, degassed and saturated three times with ethylene at 3.75 bar at the set temperature. Then, a volume of a heptane solution of triisobutylaluminium (TIBA) and comonomer (1-hexene) were injected into the reactor. The alkylaluminium is thought to act as scavenger of possible impurities. It was found that the absence of it resulted in diminished activities.

For the addition of the supported catalyst from Table II, the following procedure was followed: In a dry-box, a hollow stainless steel column fitted with a ball valve at each end was filled with the required weight of the solid catalyst system and then filled-up with dry heptane. The column was taken outside the dry box with both valves closed and then connected vertical wise to the ethylene line (at the top end) and the reactor system (at the bottom end). The top valve was opened in order to let ethylene in at 4 bar before opening the bottom valve to allow the drop of the catalyst inside the reactor pushed by the ethylene flow. The ethylene gas consumed during polymerisation was immediately replaced by free flow from the ethylene line in order to keep a pressure of 4 bar. After the given reaction time, the polymerisation was stopped by, first, fast degassing and depressurisation of the system and, second, by adding the polymerisation mixture to methanol with a few drops of HCl. The polymer was recovered by filtration, washed and dried at 10 mm Hg/70° C for 20 h. Conditions of the essays and resulting polymer properties are shown in Table III.

Gel Permeation Chromatography (GPC) shows a bimodal molecular weight distribution and comonomer incorporation only in the higher molecular weights (Figures 2 and 3)

*Polymerisation essays employing catalyst systems supported on silica-MAO performed at pressures higher than 4 bar of ethylene.*

EXAMPLES E15-E23

Reactor Volume: 1 L; Solvent: n-heptane (600 mL). General Procedure

A continuously stirred stainless steel reactor was used. A volume of a heptane solution of triisobutylaluminium (TIBA) and 1-hexene were injected into the reactor. This alkylaluminium is thought to act as scavenger of impurities. Then it was filled with the n-heptane and saturated three times with ethylene at the set temperature and pressure (12 bar). For the addition of the solid catalyst systems from Table II, a steel hollow column with two valves was used in a similar way as employed at 4 bar in a previous example. After the given reaction time, the polymerisation was stopped by, first, fast degassing and depressurisation of the system and, second, by adding the polymerisation mixture to methanol with a few drops of HCl. The polymer was recovered by filtration, washed and dried at 10 mm Hg/70° C for 20 h. Conditions of the essays and resulting polymer properties are shown in Table III.

Gel Permeation Chromatography (GPC) shows a bimodal molecular weight distribution and comonomer incorporation only in the higher molecular weights (Figures 4 and 5).

EXAMPLES E24-E39

Reactor Volume: 2 L; Solvent: isobutane (1000 mL). General Procedure

A stainless steel reactor was used. A volume of a heptane solution of triisobutylaluminium (TIBA) and 1-hexene were injected into the reactor. This alkylaluminium is thought to act as scavenger of impurities. Then it was filled with the isobutane and saturated three times with ethylene at the set temperature and pressure. For the addition of the solid catalyst systems from Table II, a steel hollow column with two valves was used in a similar way as the one employed at 4 bar in a previous example. After the given reaction time, the polymerisation was stopped by, first, fast degassing and depressurisation of the system and, second, by adding the polymerisation mixture to methanol with a few drops of HCl. The polymer was recovered by filtration, washed and dried at 10 mm Hg/70° C for 20 h. Conditions of the essays and resulting polymer properties are shown in Table IV.

The polyethylene compositions obtained in this reactor are also bimodal with comonomer incorporation only in the higher molecular weights (Figures 6-10).

EXAMPLES E40-E48

Reactor Volume: 86 L; solvent isobutane. General Procedure

The pilot plant for the Phillips slurry process has a volume of 86 L and was continuously stirred an operated at fully liquid phase. The supported catalysts system was continuously fed to the reactor by means of a pump in order to maintain a volume of solids greater than 20 %. The reactor temperature was kept constant by jacket cooling and the melt index was controlled via hydrogen addition while density was controlled via comonomer addition. Comonomer and diluent were 1-hexene and isobutane in all cases. Conditions of the essays and resulting polymer properties are shown in Tables V and VI.

<u>Example 4. Preparation of Polyethylene blends.</u>

These examples also illustrate the production of polyethylene blends by mixing a bridged-zirconocene polymer (PA) with a bis(imine)pyridine iron or cobalt polymer (PB).

Examples E49-E66 were obtained by blending two different pilot plant essays (Table 6) in an extruder. Two different extruders were used, a ZSK-30 and a Prisma-Eurolab, which were operated using a temperature profile of 190 to 220°C at 6Kg/h and 150 rpm. In all cases stabilizers such as Irganox and calcium stearate were added. Examples E49 and E58 were prepared using a carbon black masterbatch based on Dynamar FX5911 (1500ppm) and T100N (5 wt%). Example E50 was prepared using a masterbatch of TR130/2 and Irganox. Dynamar FX5911 (1500ppm) was added in Examples E65 and E66 using a masterbatch of TR130/2 (5%) and Irganox.

The physical and chemical properties of the novel polyethylene composition are summarized in Table VII and VIII.

These polyethylene compositions are also bimodal with comonomer incorporation only in the higher molecular weights (Figures 11-13).

These polymers have a molecular weight distribution very similar to those obtained by polymerization reaction in any of the single reactors previously described (Figures 14 and 15). Examples E59-E60 and E62 in Table VII show that, when the low molecular weight component (E44 and E45 in Table VI) has a molecular weight distribution (MWD) higher than 8 and specific proportions of the two components are chosen, particularly good results are obtained in terms of total impact Chary energy at 23 °C and ductible-brittle transition temperature.
In addition, these polymers have a density, a melt index (MI or HLMI), a Pent test, a total impact Charpy energy and a flexural modulus very similar to those obtained in any of the single reactors previously described (Table IX).

Example 5. Comparative examples.

Comparative examples consisted of HOSTALEN CRP100 supplied commercially by Basell as a PE100 pressure pipe, H524 supplied commercially by Chevron Phillips Chemical. Company, H516B supplied commercially by Chevron Phillips Chemical. Company, VESTOLEN A6060 supplied commercially by Sabic, ELTEX TUB125 supplied commercially by Solvay, ELTEX TUB121 supplied commercially by Solvay, BORSTAR HE3492LS supplied commercially by Borealis, HOSTALEN GM5010 supplied commercially by Hoechst or Basell and commercialized Repsol YPF grades for pipe applications (T100 and T80).
The physical and chemical properties of the comparative polyethylene composition are summarized in Table X and XI.
Compared to some commercial polyethylene resins considered as PE100, polyethylene compositions according to this invention have higher impact energy and lower ductile/brittle transition temperature (Tables XII), which mean better resistance to rapid crack propagation. In addition, these polyethylene compositions have excellent PENT test resistance. Therefore, a good balanced RCP and SCG was obtained in the polyethylene composition of this invention.

Table XII

Charpy and Pent test results (summarized)

| Example[1] | HLMI (g/10min) | Pent (h) | Ductile-Brittle Transition Temperature (°C) | Total Energy (J/m) | d(g/cm$^3$) |
|---|---|---|---|---|---|
| E49 | 6,3 | >750 | -30.4 | 379 | 0,9497 |
| E50 | 5 | >750 | -31 | 385 | 0,9388 |
| E51 | 13 | >750 | -24 | 213 | 0,9463 |
| E52 | 9.8 | >750 | -23.7 | 214 | 0.9440 |
| E54 | 4.6 | >750 | -30.6 | 406 | 0.9406 |
| E55 | 5.7 | >750 | -30.7 | 325 | 0.9397 |
| E59 | 7.6 | >750 | -31 | 611 | 0.9370 |
| E60 | 3.9 | >750 | <-40 | 1199 | 0.9325 |
| E62 | 3.81 | >750 | <-40 | 1054 | 0.9342 |
| E63 | 4.8 | >750 | -30.4 | 917 | 0.9359 |
| E67 | 3.7 | >750 | -21.8 | 356 | 0.9390 |
| CRP100[b] | 6.2 | >750 | -21.6 | 236 | 0.9564 |
| Eltex TUB125[b] VESTOLEN | 7,74 | >750 | -12,3 | 235 | 0.9512 |
| A6060[b] | 7.8 | >750 | -12.7 | 207 | 0.9577 |
| HB516B | 8.9 | 611 | -22.0 | 194 | 0.9638 |
| Eltex TUB 124[bl] | 13 | >750 | -21.1 | 186 | 0.9544 |
| T80[b] | 8.5 | 337 | -12.3 | 137 | 0.9580 |

[1] *b denotes black; bl denotes blue*

In addition, the polyethylene compositions according to this invention have a low molecular component with a comonomer content of less than 0.1 branch/1000C and a double bond final chain content between 0.2 and 10 double bond/1000C. The comparative polyethylene compositions have a molecular weight distribution very different to those obtained by polymerization reaction in any of the single reactors previously described. In particular, the comonomer content is differently distributed and, in general, the double bond final chain content is about 0 double bond/1000C.
Comparative polyethylene compositions with double bond final chain content of more than 0.2 double bond/ 1000C can be considered as bimodal with comonomer incorporation in the higher and lower molecular weights (Figures 16 and 17).

Furthermore, the polyethylene compositon of Example E50 were extruded in a Reiffenhauser extruder operated using a temperature profile of 200 to 240°C and 65 rpm. The pipes obtained were used for hoop stress comparisons (Table XIII).

Table XIII

Hoop Stress Tests

| TestConditions | ISO 4427 & 4437 PE-100 Requirements Failure Time (h) | Failure Time Average (h) for E50 | UHXP-4808 Pipe Sample 1 | UHXP-4808 Pipe Sample 2 |
|---|---|---|---|---|
| 12.4 Mpa & 20°C | 100 | 210 | 222 | 1603 |
| 5.5 Mpa & 80°C | 165 | >3500[a] | 643 | >1500 |
| 5 Mpa & 80°C | 1000 | >2421[a] | >7416 | >1940 |

a: Taken out without breaking down.

Thus, the pipe resins according to this invention have good creep resistance measured by Hoop Stress tests according to ISO 4427 and 4437. Compared to some Univation's PE100 resins polyethylene compositions according to this invention have similar or even higher failure times. Therefore, these polyethylene compositions are in agreement with PE100 requirements and are suited for the manufacture of pipes, in particular high pressure pipes, and for the manufacture of fittings.

Table III

Polymerization essays employing supported catalyst systems [1]

| Ex. | Catalyst System | $P^2$ (bar) | T (°C) | Feed C6 (ml) | g PE | $P^3$ | $M_w$ (g/mol) | $M_n$ (g/mol) | MWD | $MI^4$ | $HLMI^4$ | d (g/ml) | $MeF^5$ | $MeC^5$ | $Vinyl^5$ |
|---|---|---|---|---|---|---|---|---|---|---|---|---|---|---|---|
| E1 | | 4 | 70 | 0 | 9.6 | 160 | 188500 | 2060 | 91.50 | nd | nd | nd | 6.67 | 0 | 5.99 |
| E2 | A1B1P2 | 4 | 70 | 5 | 6.39 | 106 | 41100 | 2240 | 18.4 | nd | nd | nd | 9.8 | 1.12 | 9.14 |
| E3 | | 4 | 90 | 5 | 5.75 | 96 | 21860 | 1720 | 12.71 | nd | nd | nd | 8.8 | 2.12 | 7.32 |
| E4 | | 4 | 70 | 0 | 7.54 | 126 | 114005 | 5874 | 19.41 | nd | nd | nd | nd | nd | nd |
| E5 | A2B2P2 | 4 | 70 | 5 | 9.03 | 150 | 100910 | 6430 | 15.7 | nd | nd | nd | 2.76 | 1.52 | 2.49 |
| E6 | | 4 | 90 | 0 | 6.64 | 111 | 88300 | 6530 | 13.52 | nd | nd | nd | 3.86 | 0 | 3.71 |
| E7 | | 4 | 90 | 5 | 19.86 | 331 | 58180 | 5120 | 11.3 | nd | nd | nd | 3.78 | 1.16 | 3.52 |
| E8 | | 4 | 70 | 0 | 5.5 | 91 | 124331 | 6863 | 18.12 | nd | nd | nd | 2.49 | 0 | 1.73 |
| E9 | A1B3P1 | 4 | 70 | 5 | 10.8 | 180 | 274960 | 5920 | 46.47 | nd | nd | nd | 2.71 | 3.67 | |
| E10 | | 4 | 90 | 0 | 6.9 | 115 | 59919 | 5469 | 10.96 | nd | nd | nd | 2.73 | 0 | 2.13 |
| E11 | | 4 | 90 | 0 | 8.8 | 147 | 36284 | 4120 | 8.81 | nd | nd | nd | 4.40 | 0 | 4.30 |
| E12 | A3B2P1 | 4 | 70 | 0 | 6.8 | 114 | 82848 | 5911 | 14.02 | nd | nd | nd | 2.86 | 0 | 2.48 |
| E13 | | 4 | 90 | 5 | 9.2 | 153 | 65076 | 5018 | 12.97 | nd | nd | nd | 2.75 | 1.36 | 2.34 |
| E14 | | 4 | 70 | 5 | 15.9 | 265 | 75220 | 5390 | 13.9 | nd | nd | nd | 4 | 1.45 | 3.12 |
| E15 | | 12 | 90 | 2,5 | 37.17 | 1858 | nd | nd | nd | 0.63 | 69 | 0.9574 | 2.64 | 0.78 | 0.9 |
| E16 | A1B3P4 | 12 | 90 | 5 | 44.7 | 2235 | 117310 | 11730 | 10.00 | 0.56 | 52 | 0.9550 | 2.54 | 1.43 | 1.39 |
| E17 | | 12 | 85 | 5 | 35.89 | 1794 | nd | nd | nd | 0.52 | 65 | 0.9580 | 2.12 | 1.08 | 1.19 |
| E18 | | 12 | 90 | 2,5 | 35.28 | 1764 | 132703 | 4729 | 28.06 | 1.53 | 88 | 0.9642 | 2.26 | 0.82 | 1.58 |
| E19 | A1B3P5 | 12 | 90 | 5 | 36.67 | 1833 | 115640 | 10950 | 10.55 | 1.5 | 90 | 0.9594 | 2.86 | 1.31 | 1.33 |
| E20 | | 12 | 85 | 5 | 33.38 | 1669 | nd | nd | nd | nd | 139 | 0.9574 | 3.52 | 1.48 | 1.73 |
| E21 | A2B4P6 | 12 | 90 | 9 | 63.08 | 2102 | nd | nd | nd | 0 | 10.5 | 0.9540 | 1.79 | 2.03 | 1.24 |
| E22 | A1B3P5[a] | 12 | 90 | 5 | 49.81 | 2490 | 111860 | 11250 | 9.94 | 1.38 | 89 | 0.9554 | 2.16 | 1.29 | 1.56 |
| E23 | A1B3P4[a] | 12 | 90 | 5 | 53.84 | 2692 | 134870 | 12980 | 10.39 | 0.19 | 21 | 0.9478 | 1.78 | 1.8 | 1.07 |

[1] 1.6 ml TIBA 1M in heptane added in all cases; [2] Approximate partial pressure of ethylene; [3] Activity measured in g PE/g supported catalyst·h); [4] MI and HLMI were measured in g/10 min; [5] As measured by $^{13}C$ NMR in number of carbon per 1000 C; MeF = methyl end group; MeC = Methyl comonomer branches; Vinyl = vinyl end groups. nd=not determined. [a] A new preparation of the support catalyst system was used (compare examples E16 and E23, and E19 and E23). nd denotes not determined.

Table IV

Polymerization essays employing supported catalyst systems [1]

| Ex. | Catalyst System | $P^2$ (bar) | T (°C) | Feed C6 (mmol) | g PE | $P^3$ | $M_w$ (g/mol) | $M_n$ (g/mol) | MWD | $MI^4$ | $HLMI^4$ | d (g/ml) | $MeF^5$ | $MeC^5$ | $Vinyl^5$ |
|---|---|---|---|---|---|---|---|---|---|---|---|---|---|---|---|
| E24 | | 22 | 85 | 0.25 | 186 | 6200 | 185550 | 176 | 105 | 0.27 | nd | 0.9363 | 10.51 | 0.85 | 10.27 |
| E25 | A1B1P2 | 22 | 90 | 0.25 | 251 | 8400 | 374450 | 3740 | 100 | 0 | 0.21 | 0.938 | 6.39 | 1.82 | 5.93 |
| E26 | | 22 | 85 | 0.5 | 262 | 8700 | 322240 | 2780 | 116 | 0 | 0.3 | 0.9446 | 9.93 | 2 | 8.53 |
| E27 | | 22 | 90 | 0.5 | 210 | 7000 | 280300 | 3110 | 90 | 0 | 0.09 | 0.9366 | 5.69 | 3.3 | 5.04 |
| E28 | A1B2P1 | 22 | 90 | 0.5 | 167 | 5567 | 362680 | 71290 | 5.1 | nd | nd | nd | 0.93 | 4.78 | 1.52 |
| E29 | A1B2P3 | 22 | 90 | 0.25 | 144 | 14400 | 74680 | 8230 | 9.07 | 8.2 | nd | 0.9625 | 3.81 | 1.1 | 3.89 |
| E30 | A3B2P1 | 22 | 90 | 0.25 | 230 | 7667 | 155440 | 52410 | 2.97 | 4 | nd | 0.9623 | 3.72 | 1.32 | 3.34 |
| E31 | | 10 | 90 | 0.25 | 104 | 3467 | 149460 | 15160 | 9.86 | 0.07 | 5.56 | 0.9378 | 1.67 | 4.14 | 1,3 |
| E32 | A1B3P4 | 10 | 90 | 0.25 | 125 | 4167 | 156370 | 19210 | 8.14 | 0.04 | 3.71 | 0.9391 | 2.14 | 4 | 1.47 |
| E33 | | 10 | 90 | 0.25 | 134 | 4467 | 158060 | 18690 | 8.46 | 0.02 | 2.97 | 0.9369 | 1.85 | 3.73 | 1,03 |
| E34 | A2B4P6 | 22 | 90 | 0.5 | 178 | 5933 | 250600 | 15650 | 16.01 | 0.07 | 5.98 | 0.9494 | 1.93 | 2.37 | 1.57 |
| E35 | A1B3P4[a] | 22 | 90 | 0.5 | 152 | 10130 | nd | nd | Nd | 0.04 | 12.2 | 0.9403 | 1.83 | 3.5 | 1.33 |
| E36 | A2B4P6 | 10 | 90 | 0.25 | 145 | 2900 | 249700 | 19780 | 12.62 | 0.1 | 7.56 | 0.9424 | 1.96 | 4.22 | 1.46 |
| E37 | A1B3P5 | 10 | 90 | 0.25 | 120 | 4000 | 137470 | 13760 | 10.00 | 0.22 | 20 | 0.9419 | 1.98 | 3.93 | 1.31 |
| E38 | A1B3P4[a] | 10 | 90 | 0.25 | 133 | 4430 | 203990 | 25150 | 8.11 | 0.02 | 2.87 | 0.9342 | 1.64 | 3.99 | 1.13 |
| E39 | A1B3P4[a] | 10 | 90 | 0.25 | 157 | 5233 | 198030 | 20750 | 9.54 | nd | nd | nd | 1.81 | 3.51 | 1.14 |

[1] 1.6 ml TIBA 1M in heptane added in all cases; [2] Approximate partial pressure of ethylene; [3] Activity measured in g PE/g supported catalyst·h); [4] MI and HLMI were measured in g/10 min [5] As measured by 13C NMR in number of carbon per 1000 C; MeF = methyl end groups; MeC = Methyl comonomer branches; Vinyl = vinyl end groups.
[a] Repetibility of A1B3P4 dual catalyst system was studied. nd denotes not determined.

Table V

Pilot Plant Polymerization Conditions [1]

| Ex. | Catalyst System | T (°C) | Feed C2[2] | Feed Isobutane[2] | Feed C6 [2] | Feed $H_2$[3] | Solids (%) | Flash C2[4] | Flash C6[4] | Flash C6/C2[5] | Production (Kg/h) |
|---|---|---|---|---|---|---|---|---|---|---|---|
| E40 | A1P7 | 89 | 8.9 | 18 | 0.42 | 0 | 29.4 | 4.5 | 1.1 | 0.0826 | nd |
| E41 | | 86 | nd | nd | 0.43 | 3 | 36.6 | 5.3 | 1.3 | 0.086 | 9.4 |
| E42 | | 90 | 12 | 19 | 0.51 | 0 | 35.9 | 5.0 | 1.2 | 0.0815 | 9.6 |
| E43 | | 86 | 12 | 18 | 0.28 | 0 | 40.9 | 4.6 | 2.5 | 0.1810 | 8.6 |
| E44 | B5P8 | 90 | 12.1 | 19 | 0.29 | 99 | nd | 3.9 | 1.4 | 0.1170 | 10.4 |
| E45 | | 90 | 12.2 | 19 | 0.28 | 25 | nd | 3.5 | 1.6 | 0.1573 | 10.3 |
| E46 | | 85 | 12 | 19 | 0.30 | 110 | 40 | 4.7 | 1.5 | 0.109 | nd |
| E47 | B2P8 | 100 | 12 | 19 | 0 | 0 | 35.6 | 4.6 | 0.5 | 0.0362 | 9.7 |
| E48 | B3P8 | 96 | 6.1 | 18 | 0.48 | 5.2 | 23.2 | 4.3 | 1.2 | 0.0929 | nd |

[1]TIBA was not used; [2]Feed measured in Kg/h; [3]Feed $H_2$ measured in Nl/h; [4]Flash content measured in wt%; [5]Flash C6/C2 molar ratio. nd denotes not determined.

Table VI

Pilot Plant Polyethylene Properties [1]

| Ex. | Catalyst System | Kg PE | P[2] | $M_w$ (g/mol) | $M_n$ (g/mol) | MWD | MI[3] | HLMI[3] | d (g/ml) | MeF[4] | MeC[4] | Vinyl[4] |
|---|---|---|---|---|---|---|---|---|---|---|---|---|
| E40 | A1P7 | 13.7 | 5000 | 329200 | 114700 | 2.87 | 0 | 0,66 | 0.9286 | 1.31 | 4,32 | 0 |
| E41 | | 75 | 11500 | 264500 | 153600 | 1.67 | 0 | 1,28 | 0.9302 | $1.08^C$ | 3.81 | 0 |
| E42 | | 76.5 | 2000 | 318162 | 51822 | 6.14 | 0 | 0,94 | 0.9288 | 1.26 | 2.98 | 0 |
| E43 | | 34.4 | 12500 | 342500 | 130800 | 2.6 | 0 | 1 | 0.917 | $0.60^C$ | $8.45^C$ | 0 |
| E44 | B5P8 | 41.8 | 4000 | 75000 | 7800 | 9.62 | 35,6 | 650 | 0.9740 | 3.9 | 0 | 1.05 |
| E45 | | 41.3 | 2900 | 166800 | 14300 | 11.66 | 1,27 | 64,3 | 0.9652 | 2.18 | 0 | 0.98 |
| E46 | | 20.5 | 4545 | 38000 | 10900 | 3.5 | 56 | nd | 0.9741 | 3,7 | 0 | 1.35 |
| E47 | B2P8 | 58.4 | 3700 | 84000 | 8050 | 10.43 | 145 | nd | 0.967 | 38,7 | 0 | 2.93 |
| E48 | B3P8 | 7.3 | 2000 | 37823 | 2148 | 17.61 | LV | LV | 0.9734 | 5.16 | 0 | 3.07 |

[1] TIBA was not used; [2]Productivity measured in g PE/g supported catalyst·h; [3]As measured by $^{13}C$ NMR in number of carbon per 1000 C; MeF = methyl ends; MeC = Methyl comonomer branches; Vinyl = vinyl ends groups. [4]MI and HLMI were measured in g/10 min. C denotes calculated by means of MeC(copolymer)=100*MeC(blend)/%(copolymer); MeF(copolymer)=[100*MeF(blend) - %(homopolymer)*MeF(homopolymer)]/%(copolymer). LV denotes low viscosity.

Table VII

Polyethylene blends [1]

| Ex. | Blend | PA/PB[2] | $M_w$ (g/mol) | $M_n$ (g/mol) | MWD | MI[3] | HLMI[3] | d (g/ml) | MeF[4] | MeC[4] | Vinyl[4] | Pent (h) | $T_{db}$ (°C) | Flexural modulus[5] | E Charpy 23°C[6] |
|---|---|---|---|---|---|---|---|---|---|---|---|---|---|---|---|
| E49 | E40/E44 | 65/35 | 177780 | 12670 | 14.03 | 0.06 | 6.3 | 0.9497 | 2.36 | 2.96 | $0.36^C$ | >750 | -30.4 | 801 | 379 |
| E50 | E41/E47 | 70/30 | 162960 | 18410 | 8.85 | 0 | 5 | 0.9388 | 2.13 | 2.72 | $0.88^C$ | >750 | -31 | 700 | 385 |
| E51 | E42/E48 | 60/40 | 174130 | 10320 | 16.88 | 0.11 | 13 | 0.9463 | 3.34 | 1.92 | 1,71 | >750 | -24 | nd | 213 |
| E52 | E41/E44 | 60/40 | 146430 | 17580 | 8.3 | 0.18 | 9.8 | 0.9440 | 2.75 | 2.21 | $0.42^C$ | >750 | -23.7 | 971 | 214 |
| E53 | E41/E45 | 55/45 | 162280 | 25910 | 6.3 | 0.11 | 6.1 | 0.9424 | 1.62 | 2.25 | $0.44^C$ | >750 | -31 | 881 | 366 |
| E54 | E41/E45 | 60/40 | 164140 | 31110 | 5.3 | 0.1 | 4.6 | 0.9406 | 1.47 | 2.25 | $0.39^C$ | >750 | -30.6 | 920 | 406 |
| E55 | E41/E45 | 70/30 | 153000 | 24000 | 6.40 | 0.1 | 5.7 | 0,9397 | 2.17 | 2.67 | $0.29^C$ | >750 | -30.7 | 835 | 325 |
| E56 | E41/E44 | 65/35 | 151800 | 19040 | 7.97 | 0.12 | 7.4 | 0.9419 | 1.87 | 2.43 | 0.98 | >750 | nd | 963 | nd |
| E57 | E41/E44 | 65/35 | 154050 | 21330 | 7.22 | 0.08 | 6.5 | 0.9409 | 2.33 | 2.62 | $0.36^C$ | >750 | nd | 903 | nd |
| E58 | E41/E44 | 65/35 | 155490 | 20560 | 7.56 | 0.11 | 7 | 0.9530 | 2.07 | 2.31 | $0.36^C$ | >750 | nd | 980 | nd |
| E59 | E43/E44 | 60/40 | 165740 | 19310 | 8.6 | 0.11 | 7.6 | 0.9370 | 1.76 | 4.90 | $0.42^C$ | >750 | -31 | 758 | 611 |
| E60 | E43/E44 | 70/30 | 184230 | 24100 | 7.6 | 0.05 | 3.9 | 0.9325 | 1.59 | 5.84 | $0.30^C$ | >750 | <-40 | 577 | 1199 |
| E61 | E43/E45 | 50/50 | 178590 | 25080 | 7.1 | 0.1 | 6.1 | 0.9381 | 1.37 | 4.35 | $0.49^C$ | >750 | -30.4 | 754 | 136 |
| E62 | E43/E45 | 60/40 | 193070 | 27790 | 6.9 | 0.06 | 3.81 | 0.9342 | 0.49 | 5.07 | $0.39^C$ | >750 | <-40 | 646 | 1054 |
| E63 | E43/E45 | 55/45 | 184410 | 26160 | 7 | 0.08 | 4.8 | 0.9359 | 1.39 | 4.65 | $0.44^C$ | >750 | -30.4 | 707 | 917 |
| E64 | E41/E46 | 70/30 | 162280 | 22560 | 7.19 | 0.09 | 5.8 | 0.9405 | 2.27 | 2.54 | $0.40^C$ | >750 | <-30 | 872 | 404 |
| E65 | E41/E46 | 70/30 | 161380 | 22500 | 7.17 | 0.09 | 5.5 | 0.9424 | 1.77 | 2.54 | $0.40^C$ | >750 | -32.3 | 851 | 405 |
| E66 | E41/E46 | 65/35 | 158140 | 19720 | 8.02 | 0.12 | 7.7 | 0.9424 | 2 | 2.42 | $0.47^C$ | >750 | -33.3 | 889 | 327 |

[1] In all cases Irganox and calcium stearate were added; [2] PA/PB ratio measured in wt%/wt%; [3] As measured by $^{13}C$ NMR in number of carbon per 1000 C; MeF = methyl end groups; MeC = Methyl comonomer branches; Vinyl = vinyl end groups. [4] MI and HLMI were measured in g/10 min. [5] Flexural Modulus measured in MPa; [6] E Charpy measured in J/m. *E49, E50, E51: Extruder ZSK-30; E52, E66: Extruder Prisma-Eurolab.* C denotes Calculated by means of Vinyl(blend)=[%(homopolymer)*Vinyl(homopolymer)]/100. nd denotes not determined.

Table VIII

Examples E49-E67: Charpy test

| Ex. | Resin | $T_{db}$[1] | $E_{db}$[2] | Total Energy (j/m) | | | | | | | Maxima Force (N) | | | | | | |
|---|---|---|---|---|---|---|---|---|---|---|---|---|---|---|---|---|---|
| | | | | 23°C | 0°C | -10°C | -15°C | -20°C | -30°C | -40°C | 23°C | 0°C | -10°C | -15°C | -20°C | -30°C | -40°C |
| E49 | E40/E44 | -30.4 | 112.6 | 379$^P$ | 281$^P$ | 250$^P$ | | 207$^P$ | 113$^P$ | 89$^C$ | 222 | 315 | 334 | | 359 | 407 | 358 |
| E50 | E41/E47 | -30.5 | 159.0 | 385$^P$ | 308$^P$ | 266$^P$ | | 239$^P$ | 160$^P$ | 105$^C$ | 173 | 239 | 338 | | 345 | 384 | 399 |
| E51 | E42/E48 | -23.6 | 42.8 | 213$^P$ | 197$^P$ | 167$^P$ | | 94$^P$ | 46$^C$ | 46$^C$ | 243 | 282 | 341 | | 333 | 358 | 412 |
| E52 | E41/E44 | -23.7 | 142.6 | 214$^P$ | 133$^P$ | 143$^P$ | | 173$^P$ | 92$^C$ | 99$^C$ | 257 | 269 | 319 | | 312 | 320 | 374 |
| E53 | E41/E45 | -30.6 | 202.1 | 366$^P$ | 304$^P$ | 295$^P$ | | 263$^P$ | 203$^P$ | 111$^C$ | 213 | 302 | 326 | | 320 | 332 | 374 |
| E54 | E41/E45 | -30.6 | 202.1 | 406$^P$ | 295$^P$ | 355$^P$ | | 223$^P$ | 203$^P$ | 111$^C$ | 210 | 251 | 286 | | 288 | 286 | 302 |
| E55 | E41/E45 | -30.7 | 232.0 | 325$^P$ | 284$^P$ | 254$^P$ | | 223$^P$ | 233$^P$ | 92$^C$ | 189 | 275 | 282 | | 273 | 290 | 321 |
| E56 | E41/E44 | nd | nd | nd | nd | nd | | nd | nd | nd | nd | nd | nd | | nd | nd | nd |
| E57 | E41/E44 | nd | nd | nd | nd | nd | | nd | nd | nd | nd | nd | nd | | nd | nd | nd |
| E58 | E41/E44 | nd | nd | nd | nd | nd | | nd | nd | nd | nd | nd | nd | | nd | nd | nd |
| E59 | E43/E44 | -31 | 619.3 | 611$^P$ | 484$^P$ | 375$^P$ | | 274$^P$ | 214$^P$ | 129$^C$ | 189 | 230 | 249 | | 303 | 373 | 394 |
| E60 | E43/E44 | < -40 | >216 | 1199$^P$ | 789$^P$ | 586$^P$ | | 418$^P$ | 337$^P$ | 216$^P$ | 182 | 220 | 244 | | 266 | 355 | 327 |
| E61 | E43/E45 | -30.4 | 135.6 | 687$^P$ | 364$^P$ | 355$^P$ | | 235$^P$ | 136$^P$ | 120$^C$ | 220 | 259 | 333 | | 338 | 316 | 344 |
| E62 | E43/E45 | < -40 | >209 | 1054$^P$ | 666$^P$ | 533$^P$ | | 372$^P$ | 321$^P$ | 209$^P$ | 182 | 222 | 253 | | 273 | 307 | 357 |
| E63 | E43/E45 | -30.4 | 161.6 | 917$^P$ | 406$^P$ | 341$^P$ | | 267$^P$ | 162$^P$ | 128$^C$ | 221 | 214 | 275 | | 259 | 315 | 306 |
| E64 | E41/E46 | <-30 | >150 | 404$^P$ | | 297$^P$ | | 258$^P$ | 229$^P$ | | 215 | | 280 | | 311 | 252 | |
| E65 | E41/E46 | -32.3 | 182.9 | 405$^P$ | | 291$^P$ | | 245$^P$ | 216$^P$ | 75$^C$ | 243 | | 290 | | 335 | 358 | 397 |
| E66 | E41/E46 | -33.3 | 120.6 | 327$^P$ | | 243$^P$ | | 221$^P$ | 181$^P$ | 100$^C$ | 214 | | 276 | | 341 | 358 | 428 |
| E67 | Dual | -21.8 | 173.8 | 356$^P$ | 299$^P$ | 245$^P$ | | 194$^P$ | 79$^C$ | 76$^C$ | 210 | 256 | 261 | | 337 | 380 | 358 |

[1] $T_{db}$ measured in °C; [2] $E_{db}$ measured in J/m. P denotes Partial. C denotes Critical. nd denotes not determined.

Table IX

Polyethylene blends and dual polyethylene composition: a comparison [1]

| Ex. | Blend | PA/PB[2] | $M_w$ (g/mol) | $M_n$ (g/mol) | MWD | MI[3] | HLMI[3] | d (g/ml) | MeF[4] | MeC[4] | Vinyl[4] | Pent (h) | $T_{db}$ (°C) | Flexural modulus [5] | E Charpy 23°C [6] |
|---|---|---|---|---|---|---|---|---|---|---|---|---|---|---|---|
| E67 | A1B3P4 | 70/30 | 156370 | 19210 | 8.14 | 0.04 | 3.7 | 0.9390 | 2.14 | 4 | 1.47 | >750 | -21.8 | nd | 356 |
| E50 | E41/E47 | 70/30 | 162960 | 18410 | 8.85 | 0 | 5 | 0.9388 | 2.13 | 2.72 | 0.88[C] | >750 | -31 | 700 | 385 |

[1] In all cases Irganox and calcium stearate were added; [2] PA/PB ratio measured in wt%/wt%; [3] As measured by $^{13}C$ NMR in number of carbon per 1000 C; MeF = methyl end groups; MeC = Methyl comonomer branches; Vinyl = vinyl end groups. [4] MI and HLMI were measured in g/10 min. [5] Flexural Modulus measured in MPa; [6] E Charpy measured in J/m. *E49, E50, E51: Extruder ZSK-30; E52, E66: Extruder Prisma-Eurolab.* C denotes Calculated by means of Vinyl(blend)=[%(homopolymer)*Vinyl(homopolymer)]/100. nd denotes not determined

Table X

Comparative Examples

| Ex. | Resin[1] | Catalyst[2] | $M_w$ (g/mol) | $M_n$ (g/mol) | MWD | HLMI[3] | d (g/ml) | MeF[4] | MeC[4] | Vinyl[4] | Pent (h) | $T_{db}$ (°C) | Flexural modulus[5] | E Charpy 23°C[6] |
|---|---|---|---|---|---|---|---|---|---|---|---|---|---|---|
| CE1 | H524[n] | Cr | 726880 | 8980 | 80.94 | 2.46 | 0.9483 | 4.04 | $1.88^{Hex}$ | 2.31 | >750 | -13.4 | nd | 309 |
| CE2 | H524[n] | Cr[a] | 511370 | 10120 | 50 | 5.4 | 0.9502 | 3.08 | $1.73^{Hex}$ | 2.32 | >750 | -24.3 | nd | 255 |
| CE3 | CRP100[b] | Z-N | 296710 | 12520 | 23.70 | 6.18 | 0.9564 | 3.55 | $3.26^{But}$ | 0 | | -21.6 | nd | 236 |
| CE4 | Eltex TUB125[b] | Z-N | 262330 | 9240 | 28.39 | 7.74 | 0.9512 | 4.38 | $2.8^{But}$ | 0 | >750 | -12.3 | nd | 235 |
| CE5 | Vestolen A6060[b] | Z-N | 192479 | 6226 | 30.92 | 7.8 | 0.9577 | 3.54 | 2.99 | 0 | >750 | -12,7 | nd | 207 |
| CE6 | Borstar HE3492LS | Z-N | 336620 | 10130 | 33.23 | 8.12 | 0.9493 | 4.11 | $3.34^{But}$ | 0 | | -14,7 | 1159 | 206 |
| CE7 | T100[n] | Z-N | 231333 | 5586 | 41.41 | nd | 0.9455 | 4.08 | 2.87 | 0 | >750 | -21,5 | nd | 202 |
| CE8 | H516B[b] | Cr | 290300 | 27500 | 10.56 | 8.9 | 0.9638 | $0.34\%^{Hex}$ | | | 611 | -22,0 | nd | 194 |
| CE9 | Eltex TUB121 | Z-N | 245330 | 10550 | 23.25 | 11.3 | 0.9566 | 3.9 | 3.84 | 0 | <750 | -14.4 | 1093 | 194 |
| CE10 | Eltex TUB124[bl] | Z-N | nd | nd | nd | 13 | 0.9544 | nd | nd | nd | nd | -21.1 | Nd | 186 |
| CE11 | HE2494[bl] | Z-N | nd | nd | nd | 12.7 | 0.9524 | 3.58 | 3.18 | 0 | nd | -18.1 | nd | 186 |
| CE12 | Eltex TUB 125[o] | Z-N | nd | nd | nd | 9.1 | 0.9527 | 3.82 | $3.12^{But}$ | 0 | nd | -22.2 | nd | 185 |
| CE13 | Hostalen GM5010[n] | Z-N | nd | nd | nd | 11.7 | 0.9608 | nd | nd | nd | nd | -2.9 | nd | 182 |
| CE14 | Hostalen GM5010[bl] | Z-N | nd | nd | nd | 15.6 | 0.9526 | nd | nd | nd | nd | -2.7 | nd | 169 |
| CE15 | Eltex TUB121 | Z-N | nd | nd | nd | 8.25 | 0.9596 | 4.92 | 3.23 | 0 | nd | -12 | nd | 154 |
| CE16 | T80[b] | Z-N | 234440 | 11830 | 19.82 | 11.5 | 0.958 | 3.12 | 2.64 | 0 | 337 | -12.3 | 1226 | 137 |

[1] *n= natural; b= black; bl= blue; o= orange*; [2] Cr= chromium catalyst, Z-N= Ziegler-Natta catalyst, a=different catalyst; [3] HLMI were measured in g/10 min; [4] As measured by $^{13}C$ NMR in number of carbon per 1000 C; MeF = methyl end groups; MeC = Methyl comonomer branches; Vinyl = vinyl end groups; *Hex=1- hexene; But= 1-butene*; [5] Flexural Modulus measured in MPa; [6] E Charpy measured in J/m. nd denotes not determined

Table XI

Comparative Examples: Charpy tests

| Ex. | Resin | $T_{db}$[1] | $E_{db}$[2] | Total Energy (J/m) | | | | | | | Maxima Force (N) | | | | | | |
|---|---|---|---|---|---|---|---|---|---|---|---|---|---|---|---|---|---|
| | | | | 23°C | 0°C | -10°C | -15°C | -20°C | -30°C | -40°C | 23°C | 0°C | -10°C | -15°C | -20°C | -30°C | -40°C |
| CE1 | H524[n] | -13.4 | 121.4 | $309^{P}$ | $244^{P}$ | $214^{P}$ | | $152^{C}$ | $71^{C}$ | $55^{C}$ | 244 | 316 | 291 | | 289 | 361 | 331 |
| CE2 | H524[n] | -24.3 | 106.0 | $255^{P}$ | $214^{P}$ | $148^{P}$ | | $133^{P}$ | $71^{C}$ | $53^{C}$ | 321 | 315 | 388 | | 425 | 376 | 449 |
| CE3 | CRP100[b] | -21.6 | 124.3 | $236^{P}$ | $197^{P}$ | $180^{P}$ | | $135^{P}$ | $67^{C}$ | $66^{C}$ | 249 | 345 | 357 | | 382 | 407 | 408 |
| CE4 | Eltex TUB125[b] | -12.3 | 144.1 | $235^{P}$ | $185^{P}$ | $155^{P}$ | | $108^{C}$ | $91^{C}$ | $101^{C}$ | 248 | 331 | 340 | | 332 | 329 | 329 |
| CE5 | Vestolen A6060[b] | -12.7 | 113.1 | $207^{P}$ | $159^{P}$ | $127^{P}$ | | $76^{C}$ | $54^{C}$ | $66^{C}$ | 245 | 301 | 337 | | 393 | 426 | 412 |
| CE6 | Borstar HE3492LS | -14.7 | 108.7 | $206^{P}$ | $169^{P}$ | $135^{P}$ | | $79^{C}$ | $56^{C}$ | $45^{C}$ | 240 | 307 | 378 | | 409 | 392 | 408 |
| CE7 | T100[n] | -21.5 | 84.4 | $202^{P}$ | $177^{P}$ | $145^{P}$ | | $91^{P}$ | $47^{C}$ | $47^{C}$ | 296 | 313 | 347 | | 337 | 420 | 438 |
| CE8 | H516B[b] | -22.0 | 80.0 | $194^{P}$ | $155^{P}$ | $117^{P}$ | | $87^{P}$ | $53^{C}$ | $53^{C}$ | 302 | 343 | 361 | | 415 | 417 | 408 |
| CE9 | Eltex TUB121 | -14.4 | 99.8 | $194^{P}$ | $152^{P}$ | $118^{P}$ | | $77^{C}$ | $66^{C}$ | $47^{C}$ | 213 | 288 | 329 | | 356 | 395 | 404 |
| CE10 | Eltex TUB124[bl] | -21.1 | 96.4 | $186^{P}$ | $157^{P}$ | | $101^{P}$ | | $100^{C}$ | $83^{C}$ | 238 | 293 | | 315 | | | 363 |
| CE11 | HE2494[bl] | -18.1 | 72.1 | $186^{P}$ | $118^{P}$ | | $78^{P}$ | | $50^{C}$ | $51^{C}$ | 246 | 325 | | 336 | | 338 | 364 |
| CE12 | ELTEX TUB125[o] | -22.2 | 67.8 | $185^{P}$ | $124^{P}$ | $94^{P}$ | $81^{P}$ | $71^{P}$ | $57^{C}$ | $54^{C}$ | 270 | 338 | 323 | 308 | 370 | 372 | 388 |
| CE13 | Hostalen GM5010[n] | -2.9 | 109.5 | $182^{P}$ | $115^{P}$ | | $87^{C}$ | | | $72^{C}$ | 251 | 278 | | 328 | | | 347 |
| CE14 | Hostalen GM5010[bl] | -2.7 | 89.4 | $169^{P}$ | $92^{P}$ | | $78^{C}$ | | | $69^{C}$ | 245 | 287 | | 316 | | | 344 |
| CE15 | ELTEX TUB121 | -12 | 64.5 | $154^{P}$ | $100^{P}$ | $66^{P}$ | | $59^{P}$ | $56^{C}$ | $57^{C}$ | 333 | 345 | 400 | | 404 | 412 | 395 |
| CE16 | T80[b] | -12.3 | 81.5 | $137^{P}$ | $115^{P}$ | $92^{P}$ | | $47^{C}$ | $45^{C}$ | $45^{C}$ | 255 | 313 | 323 | | 391 | 359 | 393 |

[1] $T_{db}$ measured in °C; [2] $E_{db}$ measured in J/m. P denotes Partial. C denotes Critical.

The appended claims intend to cover all such variations and modifications as falling in the scope of the invention.

## Claims

1. A polyethylene composition with a bimodal molecular weight distribution comprising a low-molecular-weight (LMW) ethylene homopolymer component and a high-molecular-weight (HMW) ethylene copolymer component, **characterized in that**:

   - the polyethylene composition has a ductile-brittle transition temperature of less than -20°C, a total impact Charpy energy of more than 200 J/m at 23°C according to ASTM D6110-2004e1, and a PENT test value of more than 750 hours according to ASTM F1473:2001, and
   - the LMW component has a comonomer content of less than 0.1 branches per 1000 carbon atoms as determined by $^{13}C$ NMR spectroscopy and a double bond final chain content between 0.2 and 10 double bond per 1000 carbon atoms, as determined by $^{13}C$ NMR spectroscopy.

2. The polyethylene composition according to claim 1, wherein the total impact Charpy energy is more than 150 J/m at 0°C according to ASTM D6110-2004e1.

3. The polyethylene composition according to claim 1 wherein the total impact Charpy energy is more than 100 J/m at -10°C according to ASTM D6110-2004e1.

4. The polyethylene composition according to claim 1, wherein the ductile-brittle transition temperature is less than -30°C and the total impact Charpy energy is more than 350 J/m at 23°C according to ASTM D6110-2004e1.

5. The polyethylene composition according to claim 1, wherein the ductile-brittle transition temperature is less than -35°C and the total impact Charpy energy is more than 500 J/m at 23°C according to ASTM D6110-2004e1.

6. The polyethylene composition according to anyone of claims 1 to 5 having a density of less than 0.960 g/cc according to ISO1183-2: 2004.

7. The polyethylene composition according to anyone of claims 1 to 6 having a melt index of less than 20g/10 min measured at 190°C and 21.6 Kg according to UNE-EN ISO1133: 2001.

8. The polyethylene composition according to anyone of claims 1 to 7 having a flexural modulus less than 1000 MPa according to UNE-EN ISO178: 2003.

9. The polyethylene composition according to anyone of claims 1 to 8 wherein the LMW component has a density of more than 0.955 g/cc according to ISO1183-2: 2004.

10. The polyethylene composition according to anyone of claims 1 to 9 wherein the LMW component has melt index of more than 1g/10 min measured at 190°C and 21.6 Kg according to UNE-EN ISO1133: 2001.

11. The polyethylene composition according to anyone of claims 1 to 10 wherein the LMW component has a molecular weight distribution of more than 5 as determined by GPC.

12. The polyethylene composition according to claim 11 wherein the LMW component has a molecular weight distribution of more than 8 as determined by GPC.

13. The polyethylene composition according to anyone of claims 1 to 12 wherein the HMW component has a weight-average molecular weight ($M_W$) in the range from 100.000 to 800.000 g/mol as determined by GPC and a number-average molecular weight ($M_n$) in the range from 40.000 to 300.000 g/mol as determined by GPC.

14. The polyethylene composition according to anyone of claims 1 to 13 wherein the HMW component has density less than 0.935 g/cc according to ISO1183-2: 2004.

15. The polyethylene composition according to anyone of claims 1 to 14 wherein the HMW component has melt index in the range from 0.4 to 1 g/10 min measured at 190°C and 21.6 Kg according to UNE-EN ISO1133: 2001.

**16.** The polyethylene composition according to anyone of claims 1 to 15 wherein the HMW component has a comonomer content of less than 10 branches per 1000 carbon atoms, as determined by $^{13}C$ NMR spectroscopy.

**17.** The polyethylene composition according to any one of claims 1 to 16, wherein the LMW component is in the range from 25 to 45 wt% with respect to the total weight of the polyethylene composition.

**18.** The polyethylene composition according to claim 17, wherein the LMW component is in the range from 30 to 40 wt% with respect to the total weight of the polyethylene composition.

**19.** A process for the manufacture of a polyethylene composition according to any one of claims 1 to 18 which comprises subjecting ethylene and comonomer(s), optionally with hydrogen, to polymerization reaction in a single reactor, in the presence of a dual catalyst system supported in one support, wherein the dual catalyst system comprises a bis (imine)pyridine iron or cobalt catalyst and a bridged-metallocene catalyst.

**20.** The process according to claim 19 wherein the bis(imine)pyridine iron catalyst is selected from the group consisting of the following compounds:

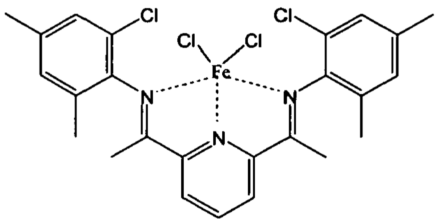

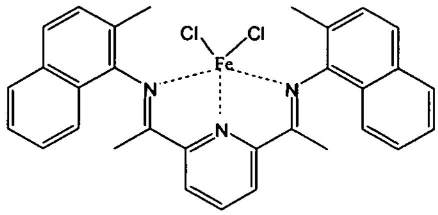

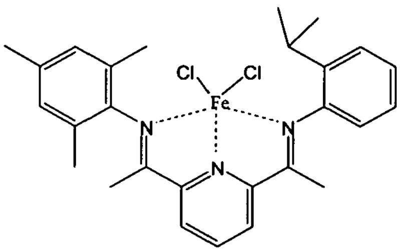

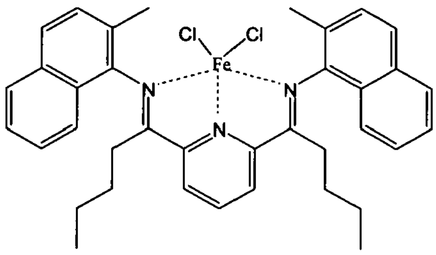

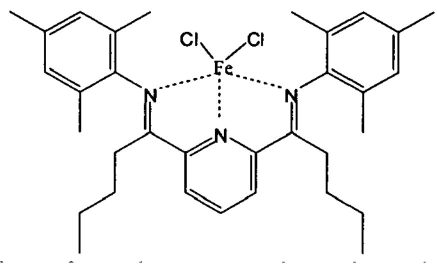

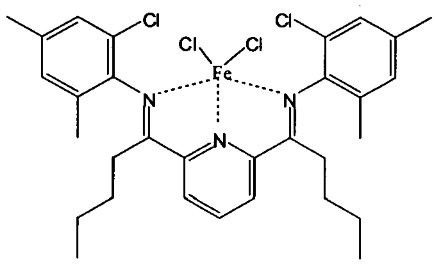

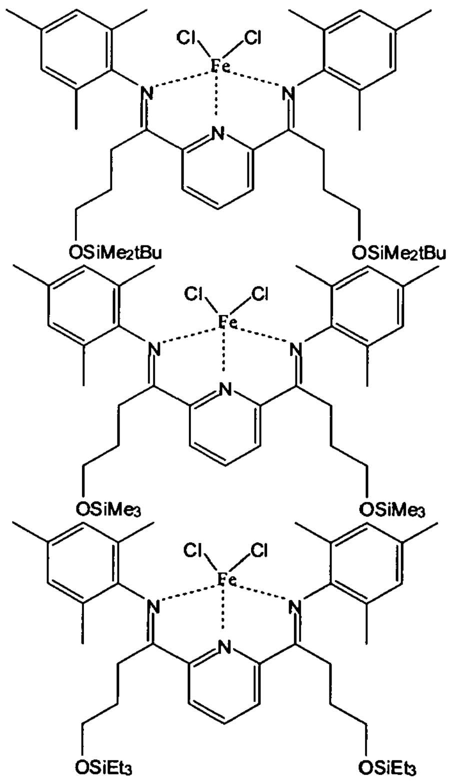

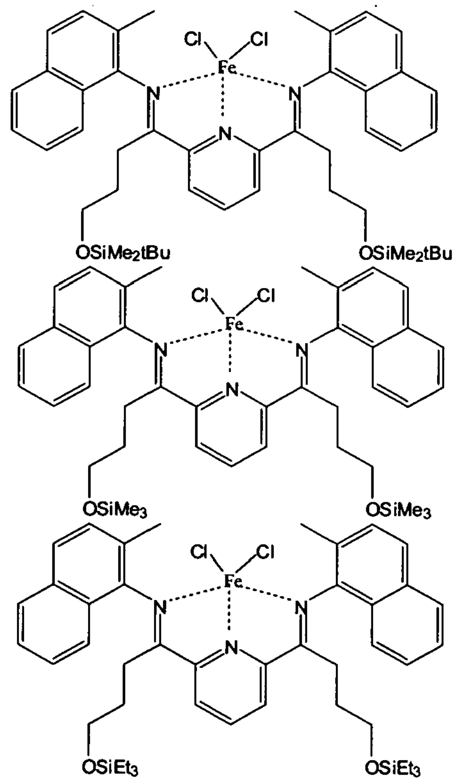

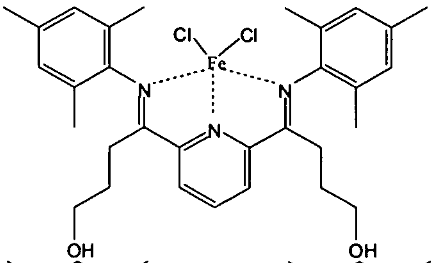

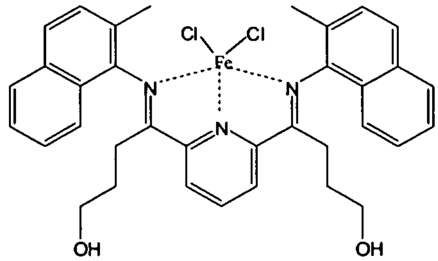

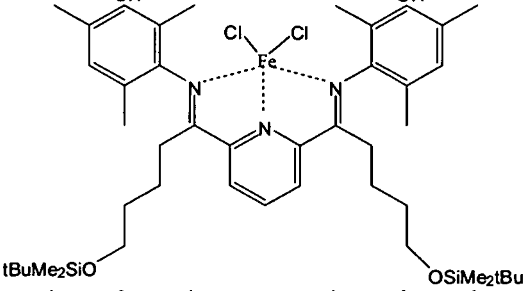

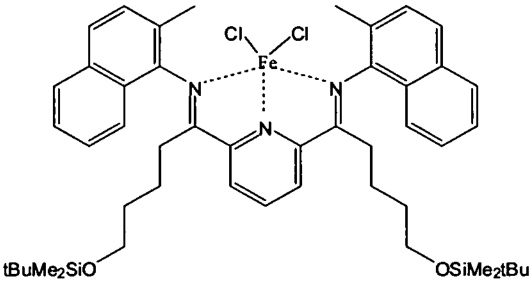

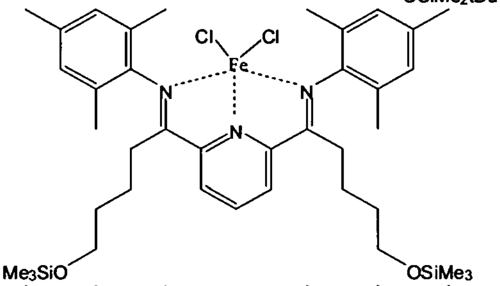

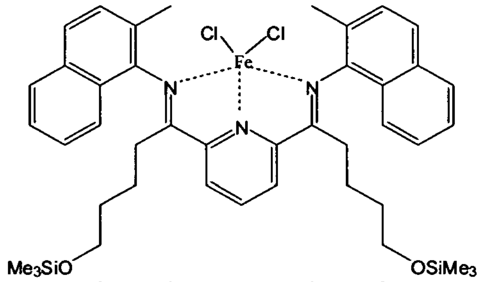

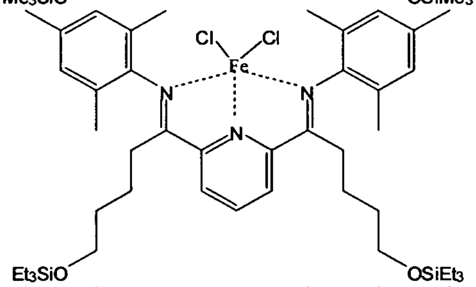

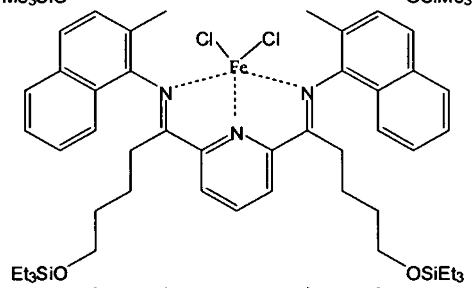

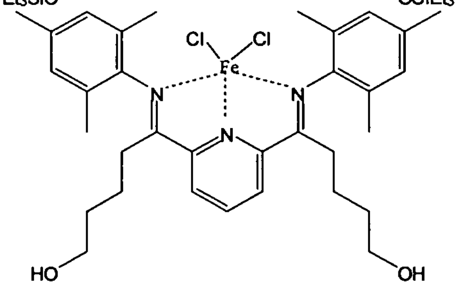

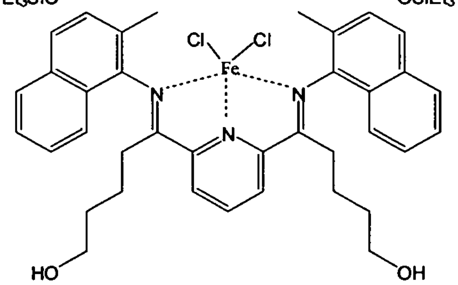

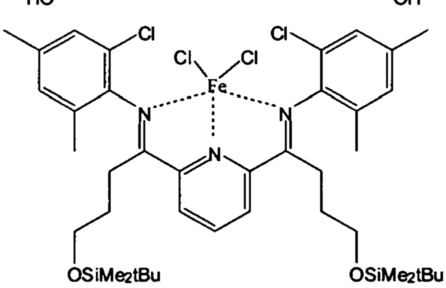

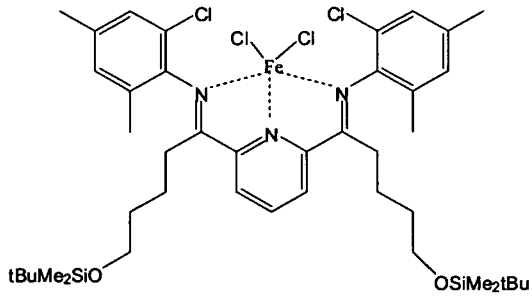

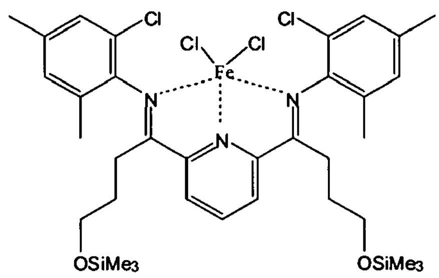

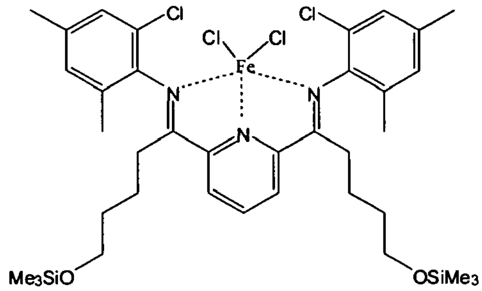

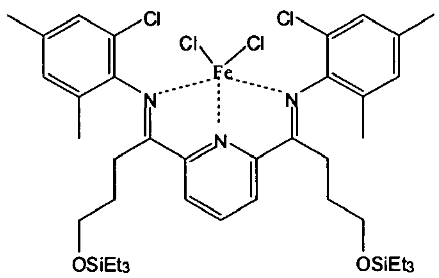

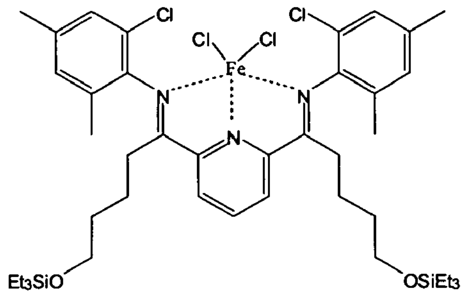

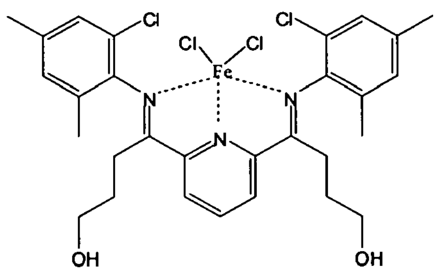

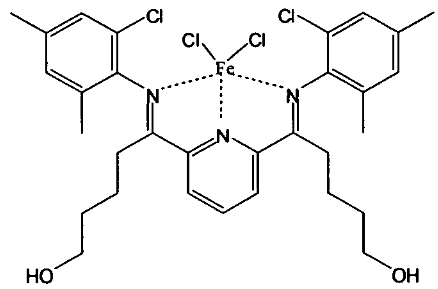

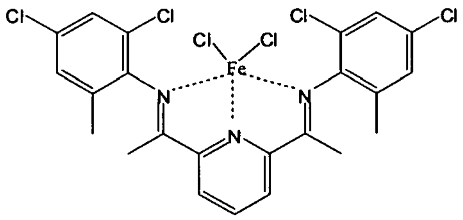

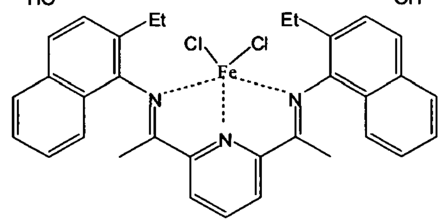

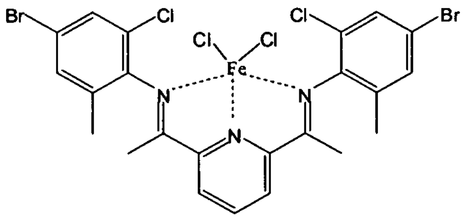

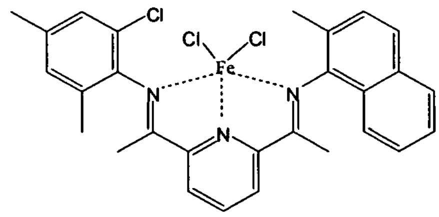

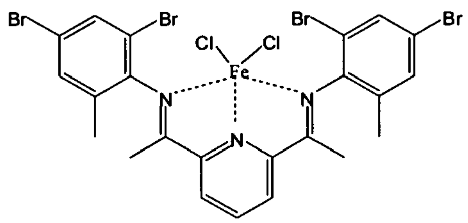

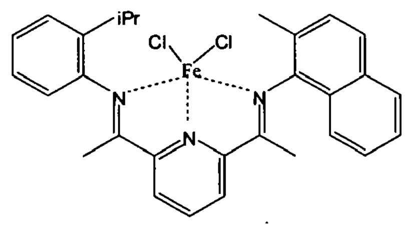

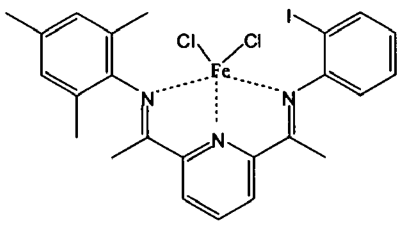
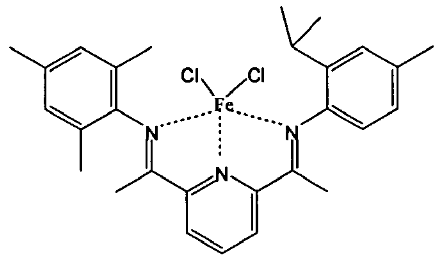
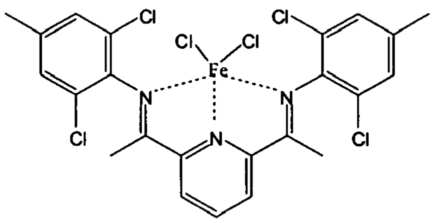
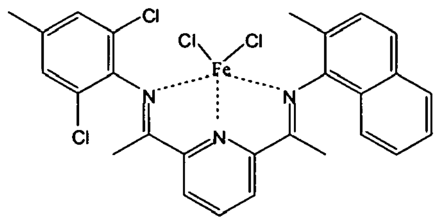
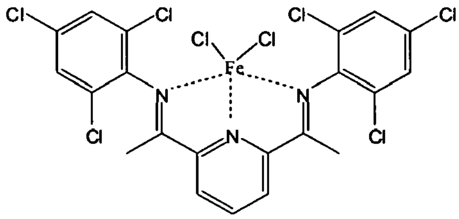
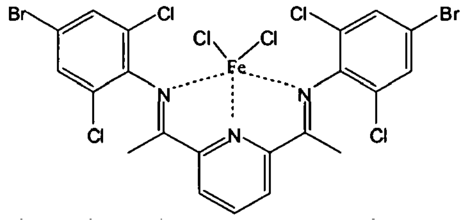
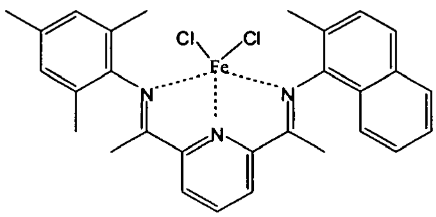
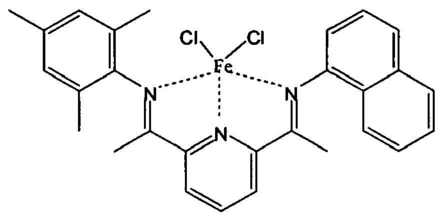
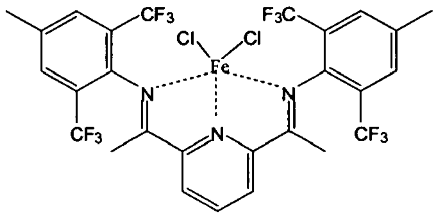
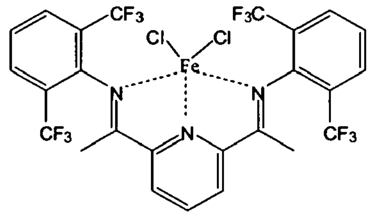
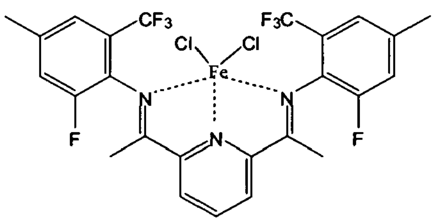
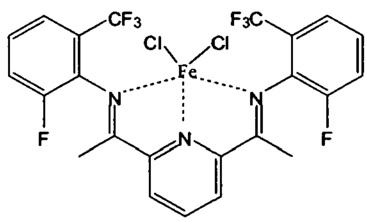
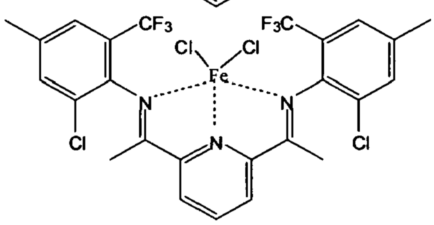
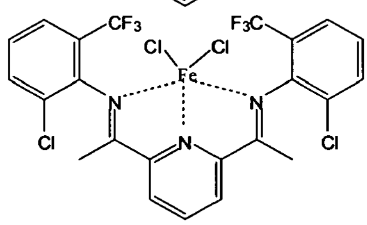

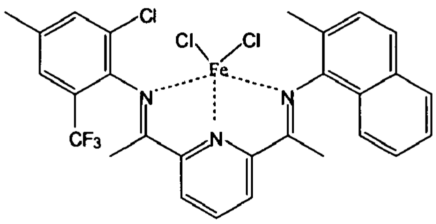
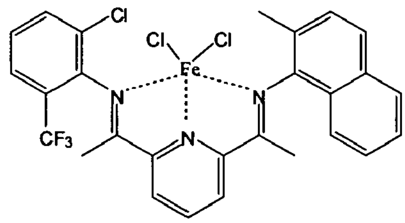
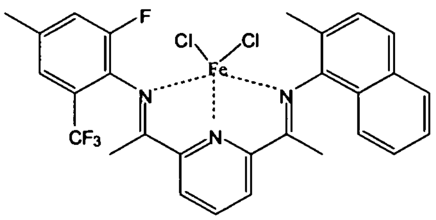
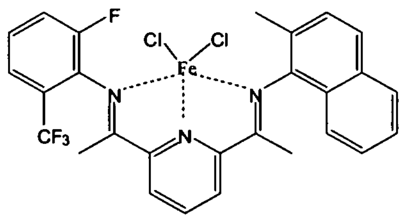
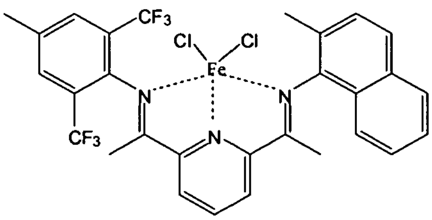
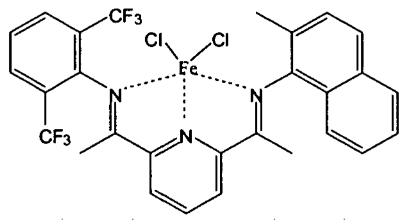
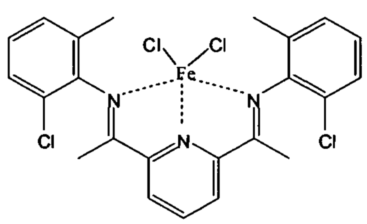
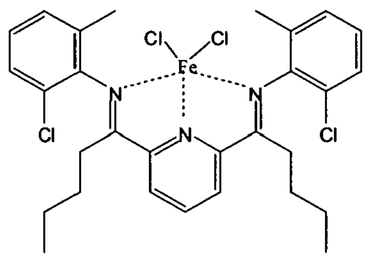
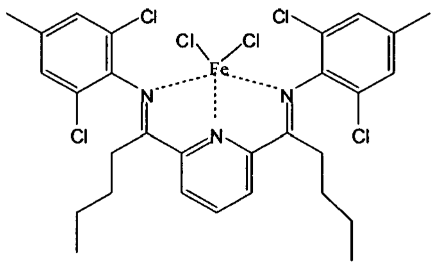
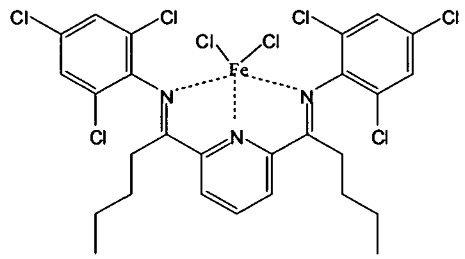
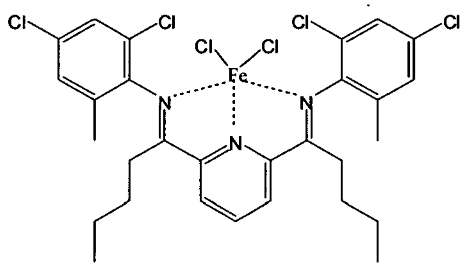
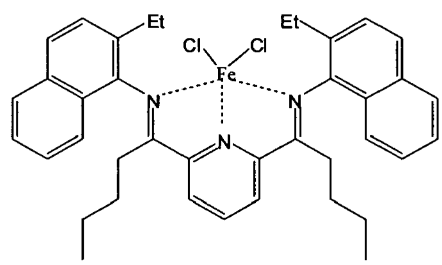

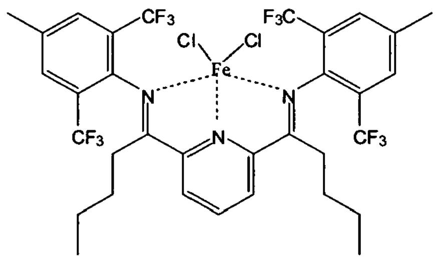
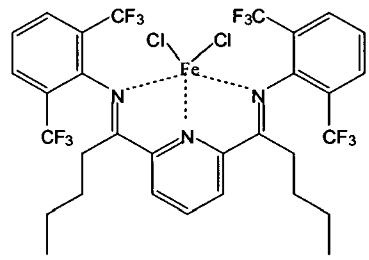

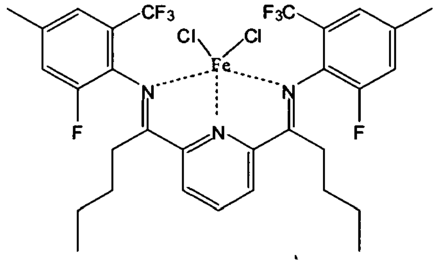
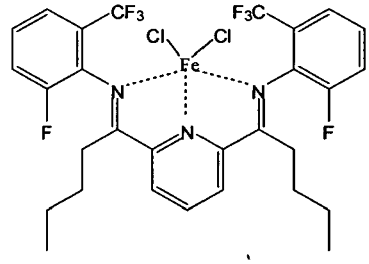

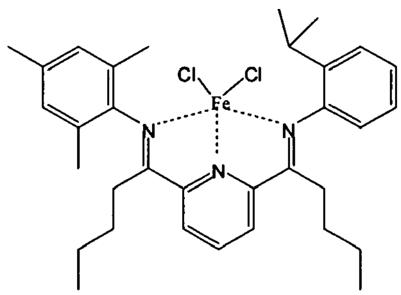
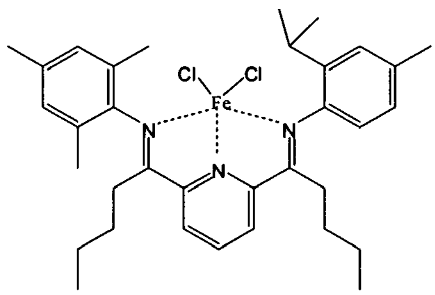

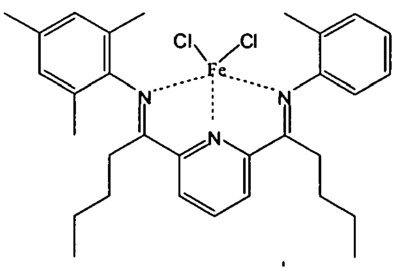
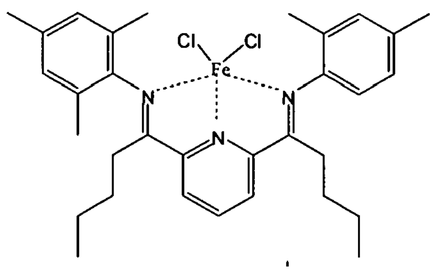

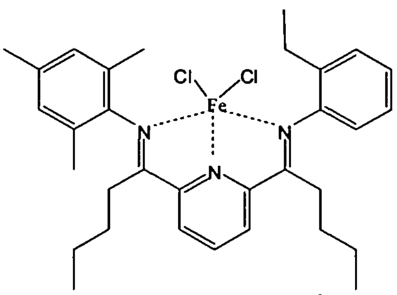
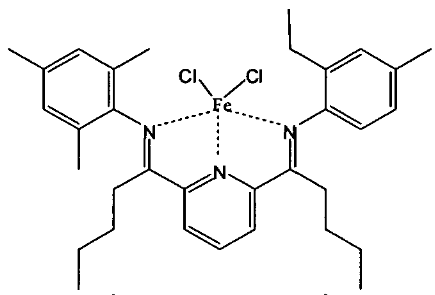

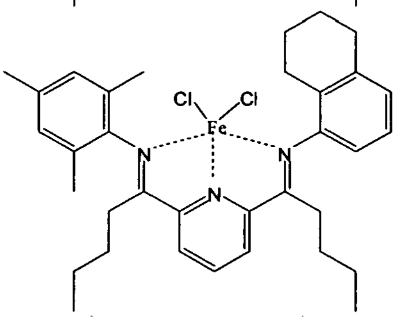
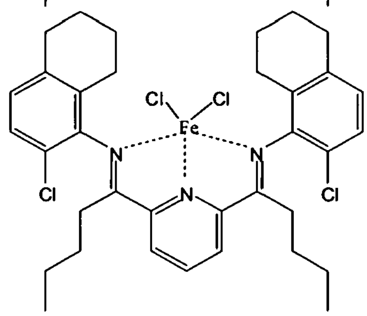

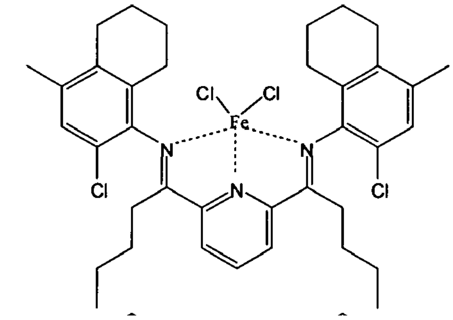

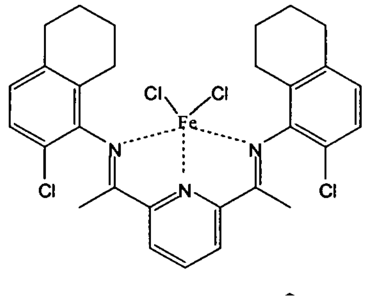

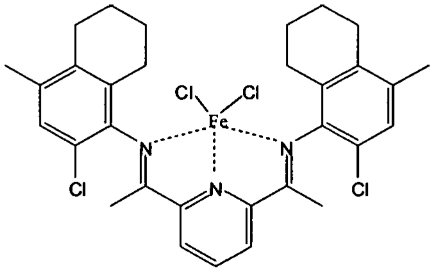

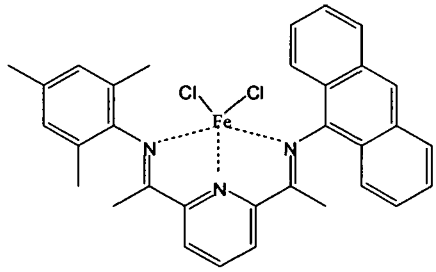

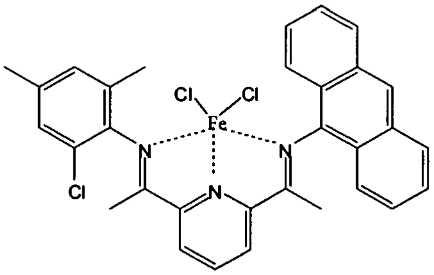

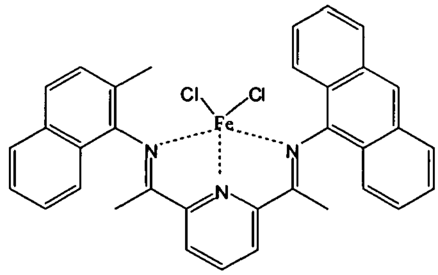

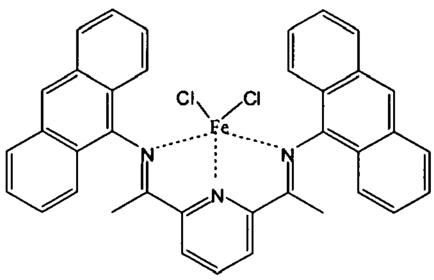

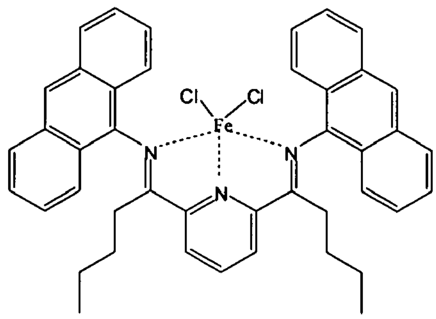

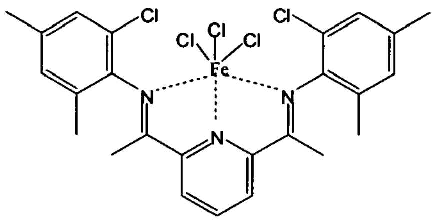

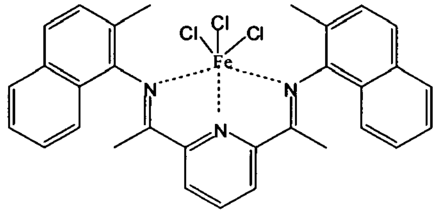

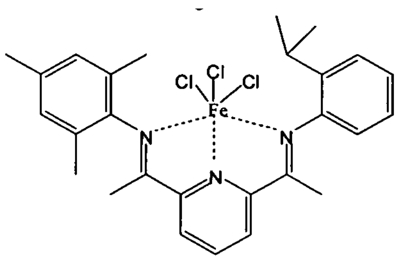

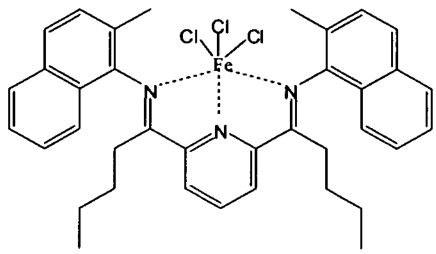

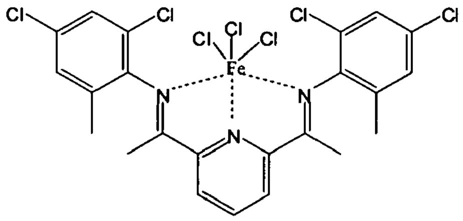

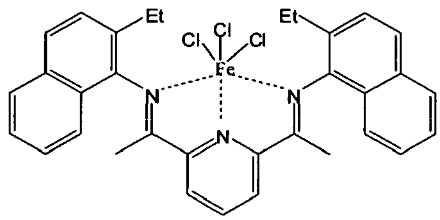

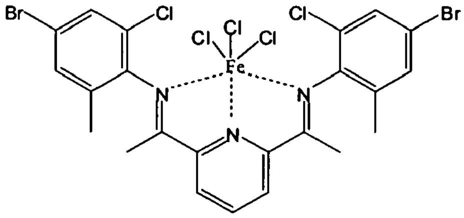

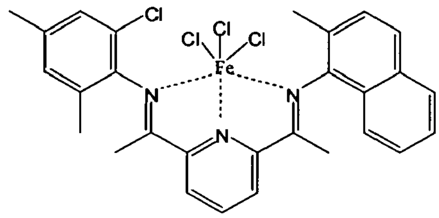

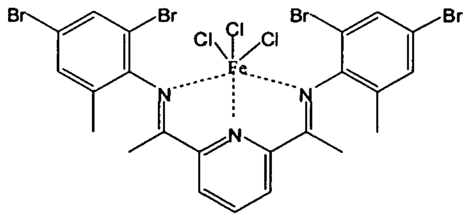

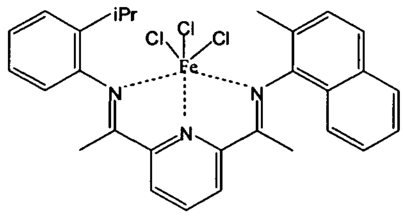

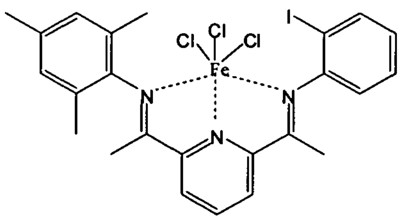

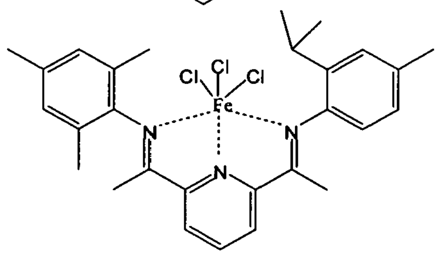

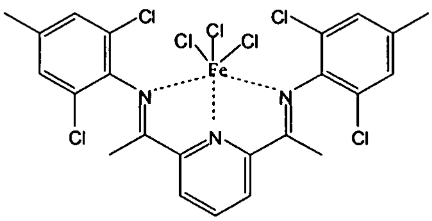

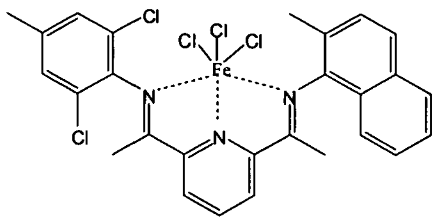

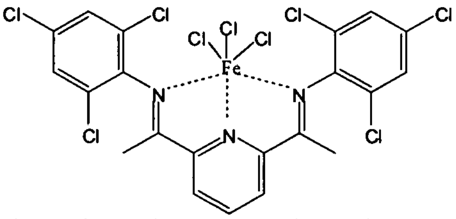

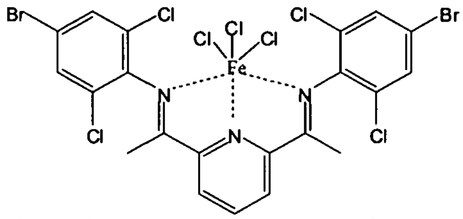

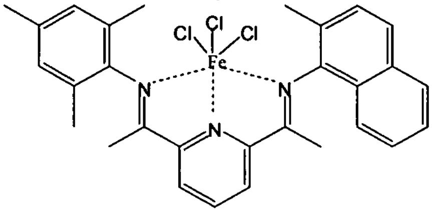

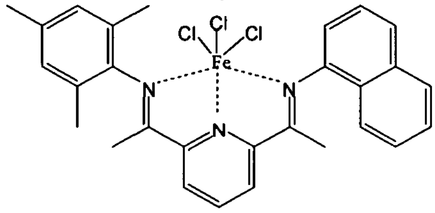

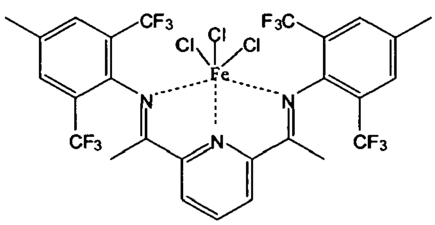

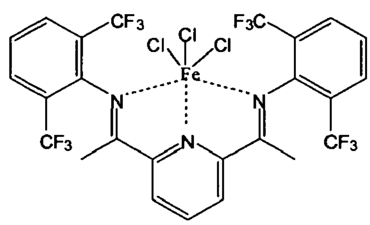

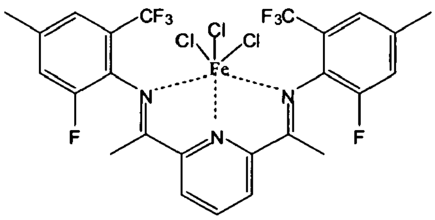

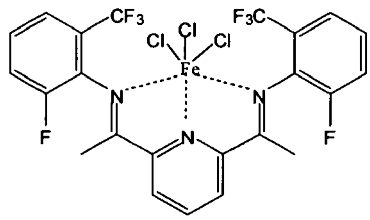

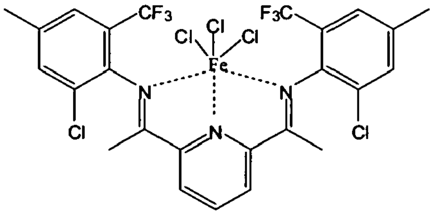

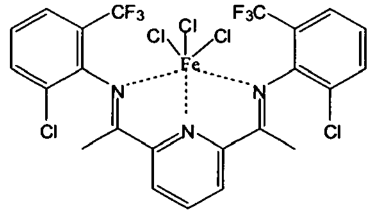

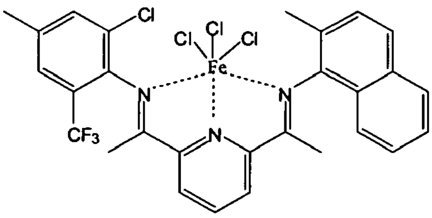

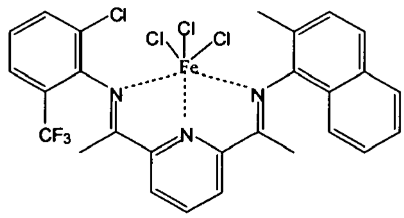

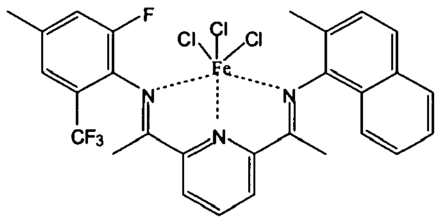

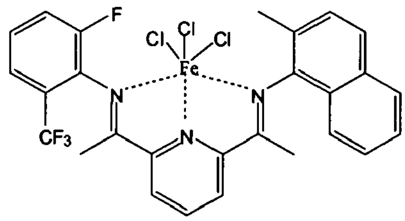

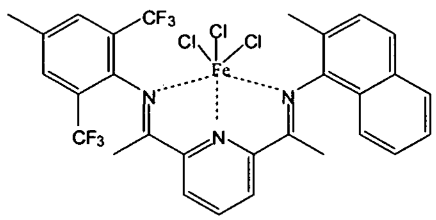

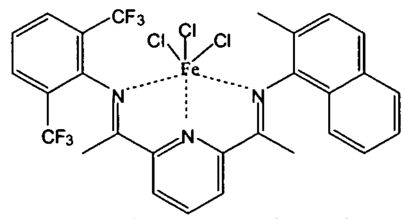

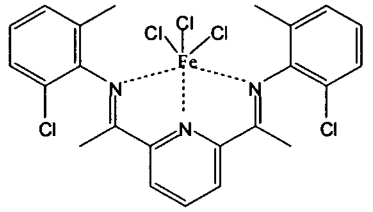

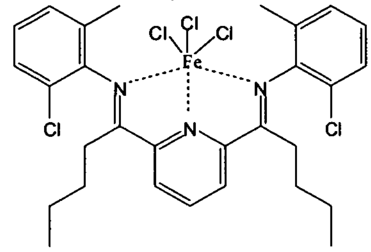

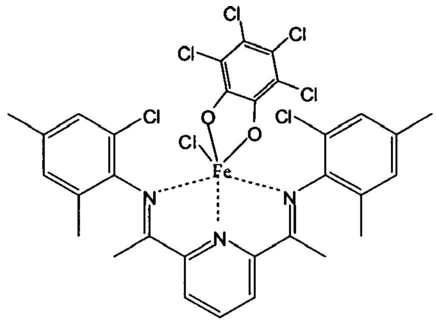

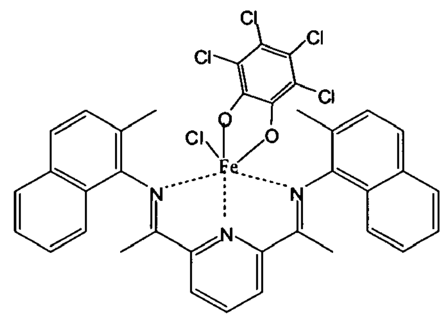

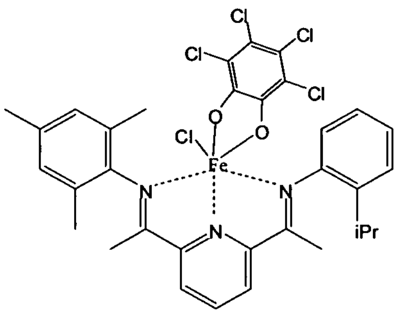

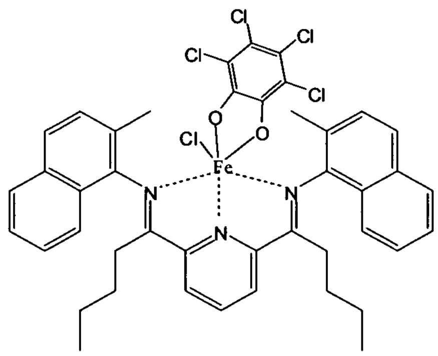

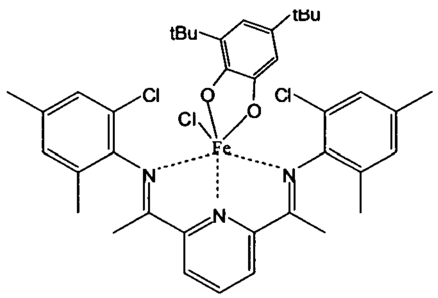

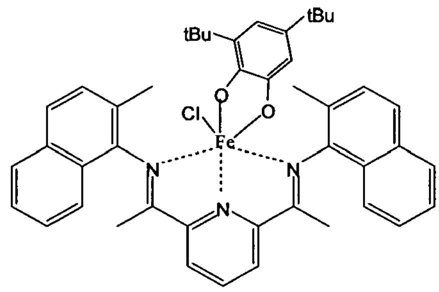

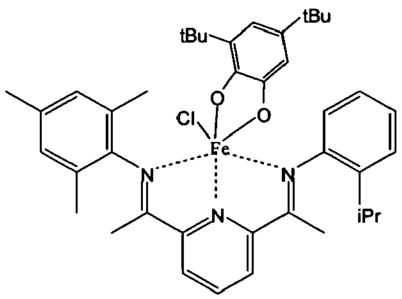

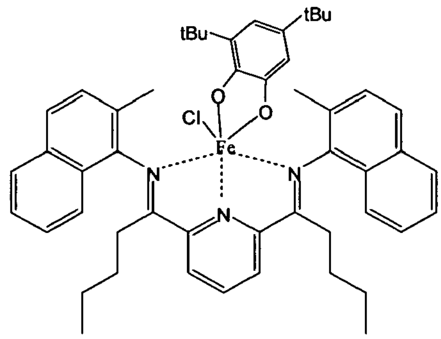

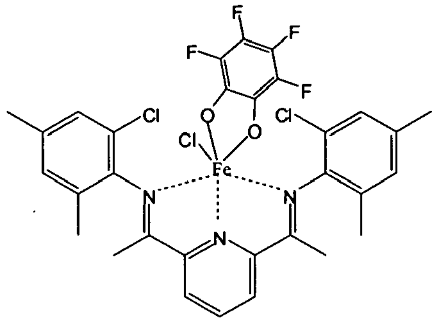

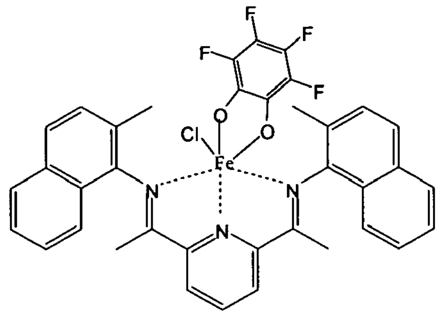

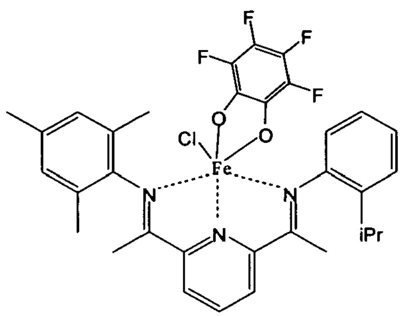

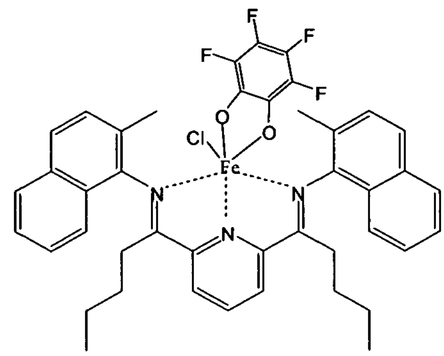

**21.** The process according to claim 19 wherein the bridged-zirconocene catalyst is selected from the following compounds:

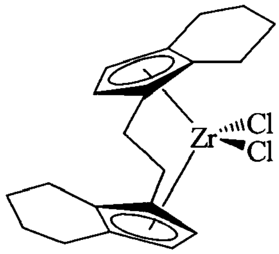

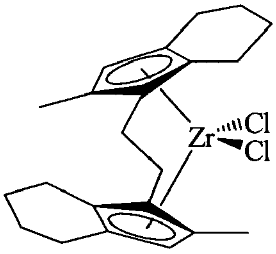

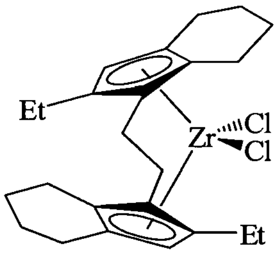

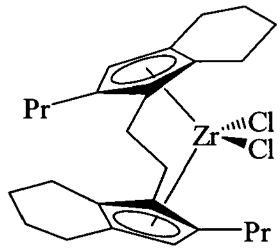

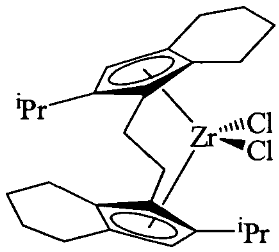

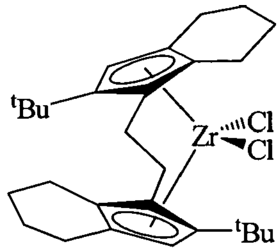

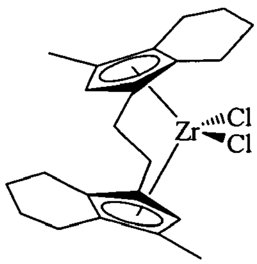

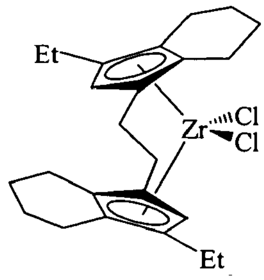

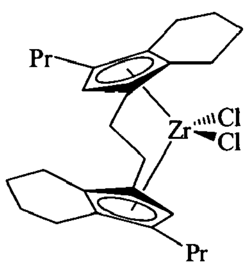

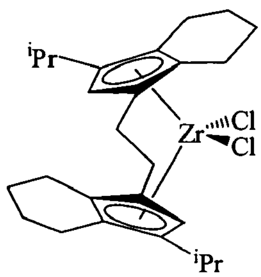

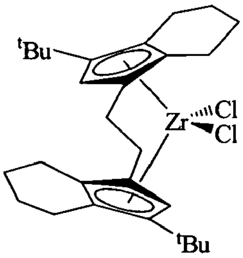
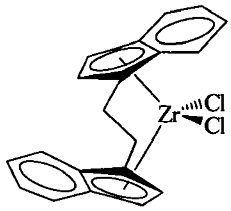
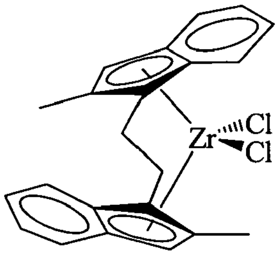
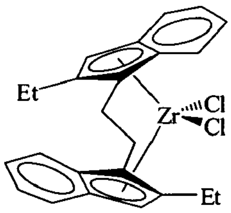
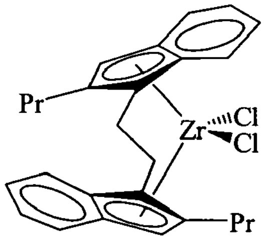
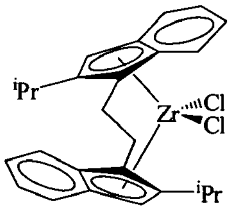
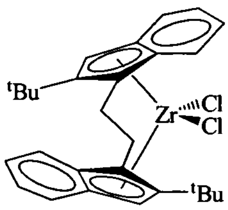
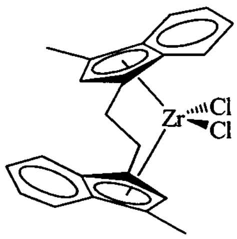
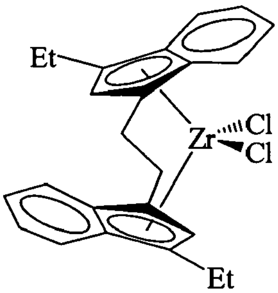
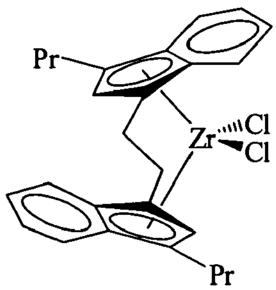

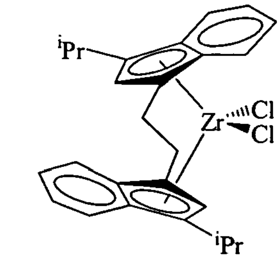
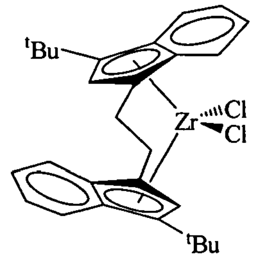
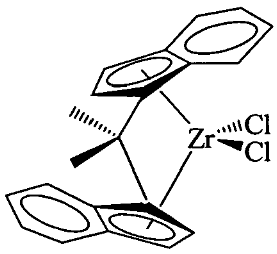
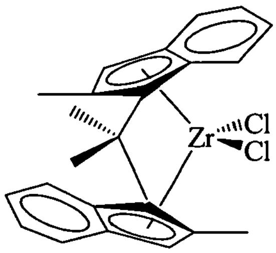
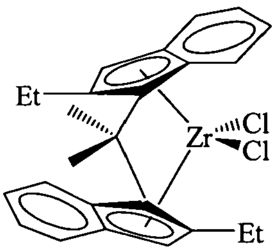
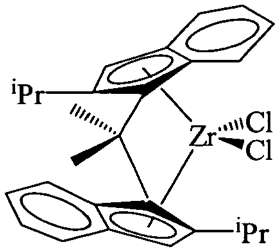
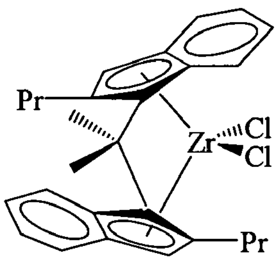
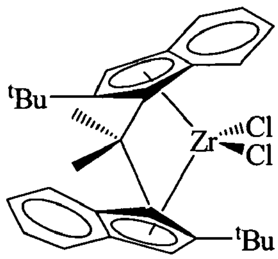
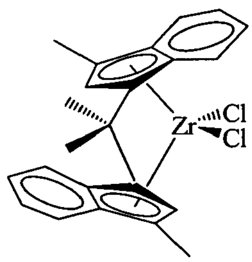
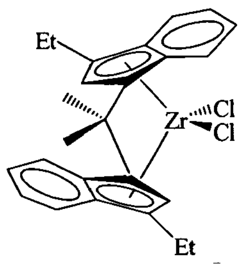

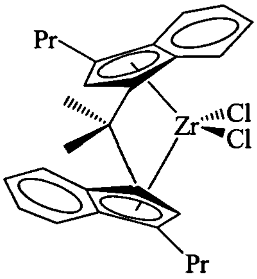

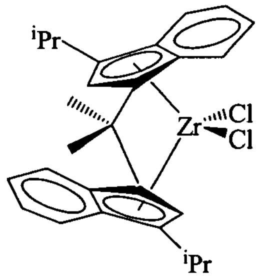

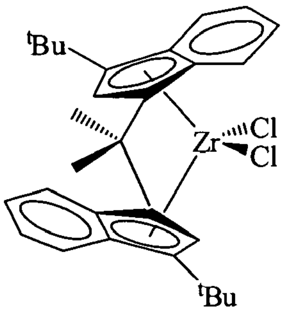

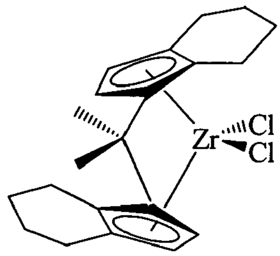

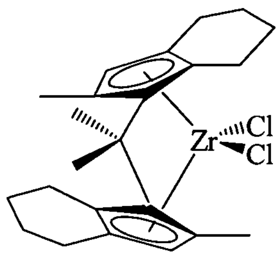

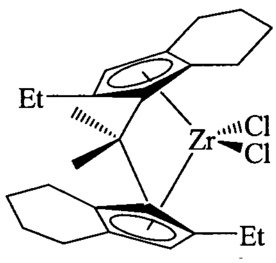

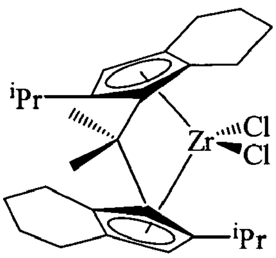

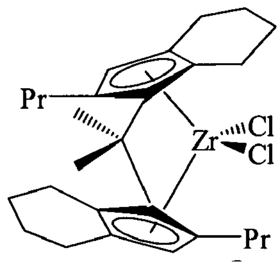

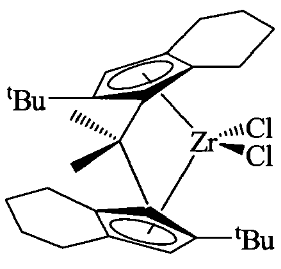

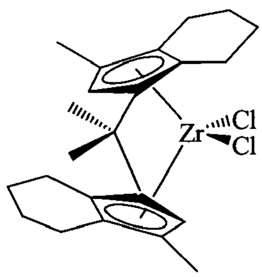

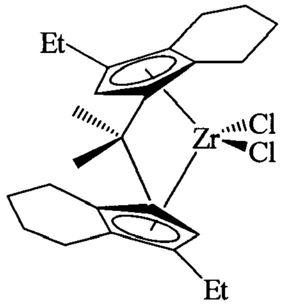

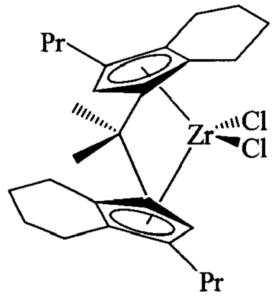

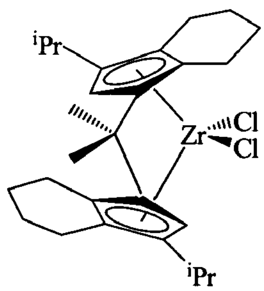

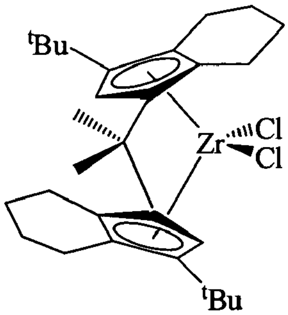

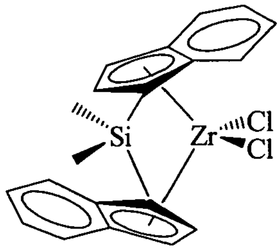

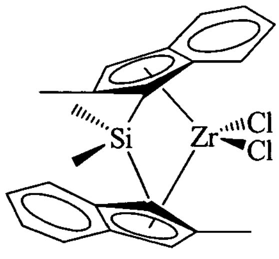

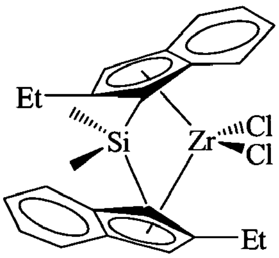

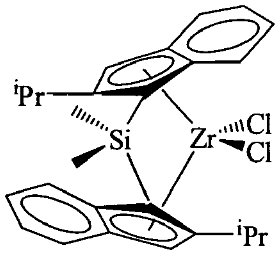

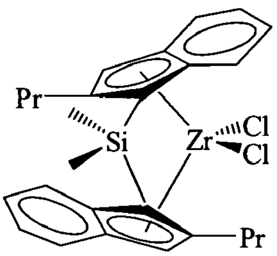

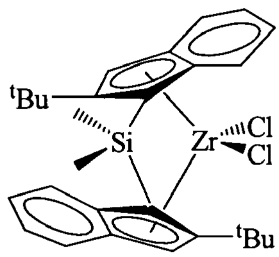

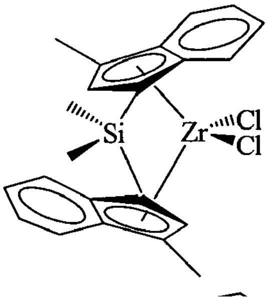
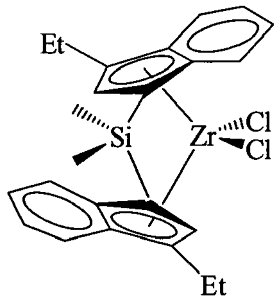

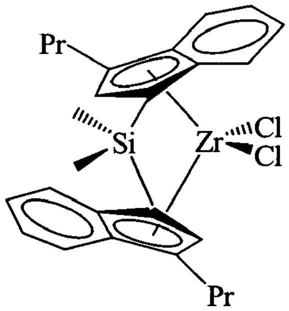
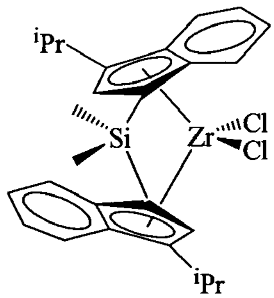

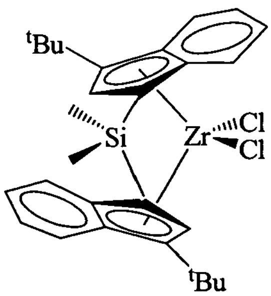
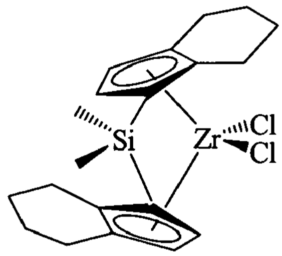

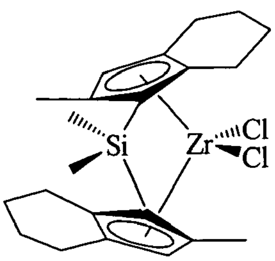
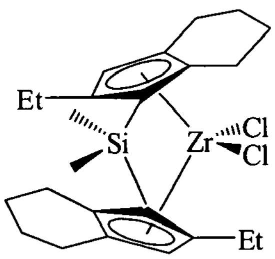

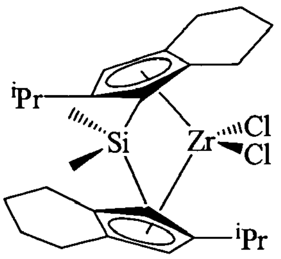
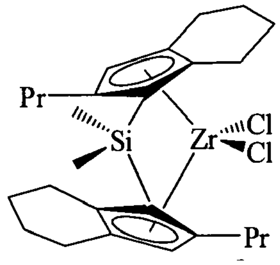

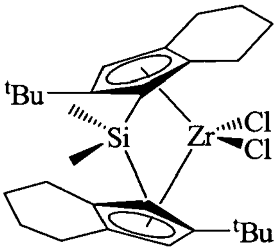

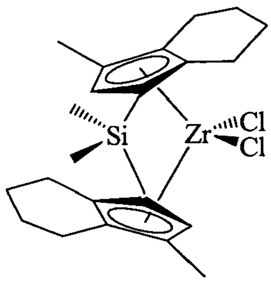

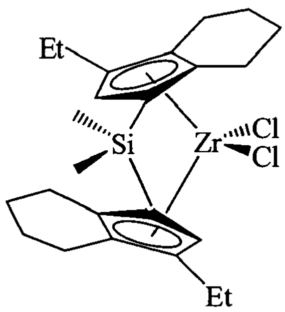

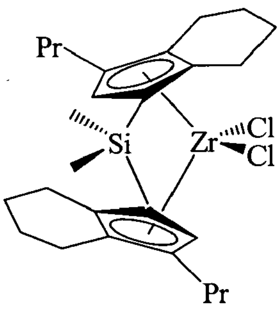

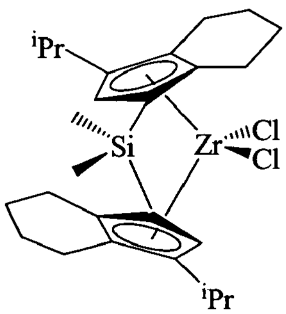

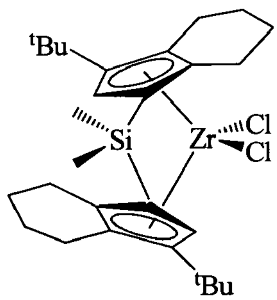

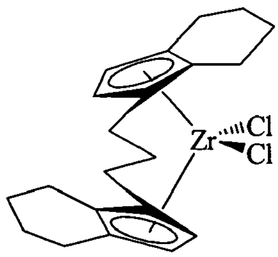

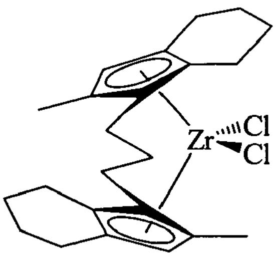

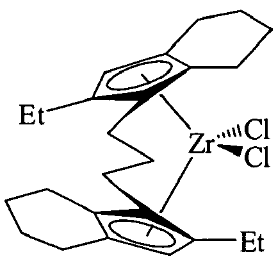

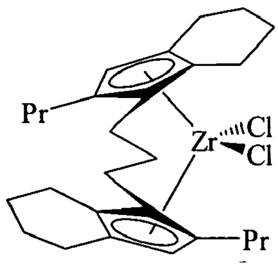

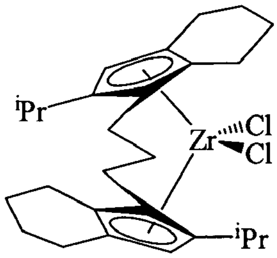

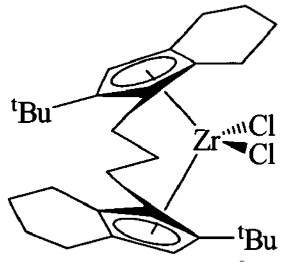

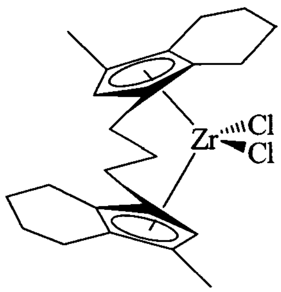

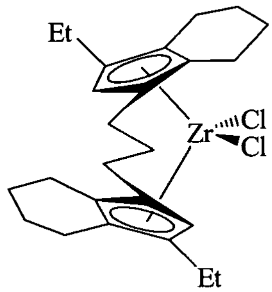

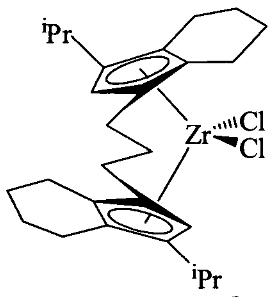

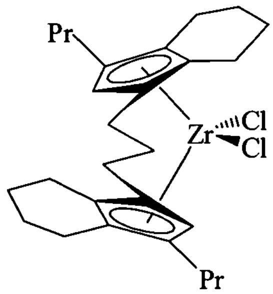

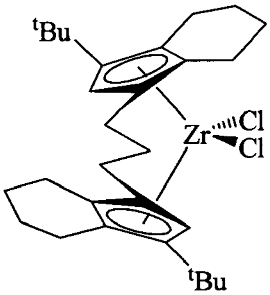

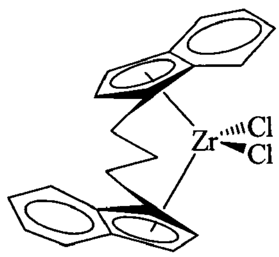

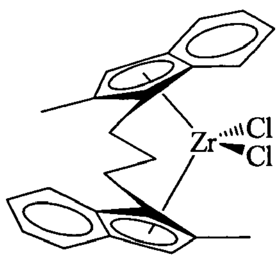

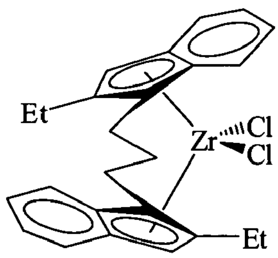

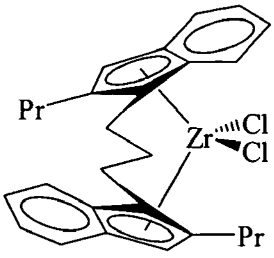

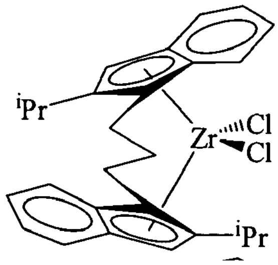

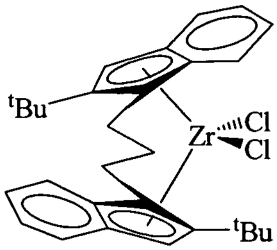

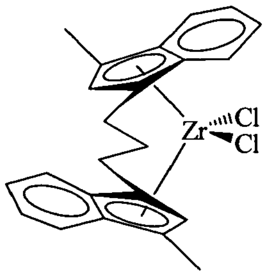

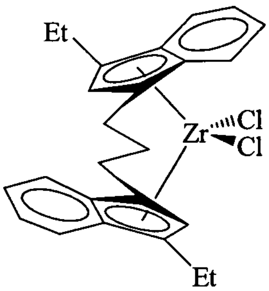

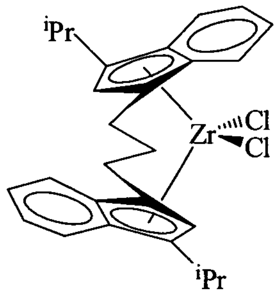

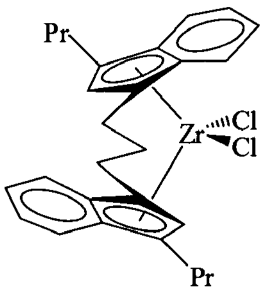

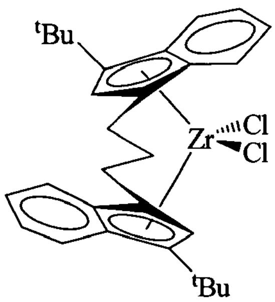

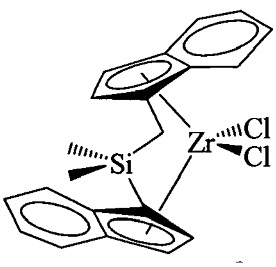

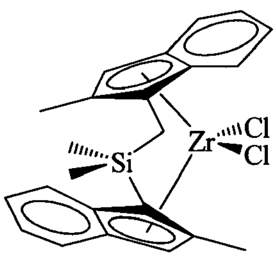

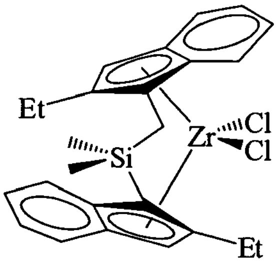

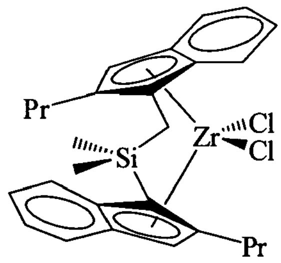

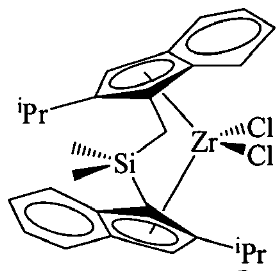

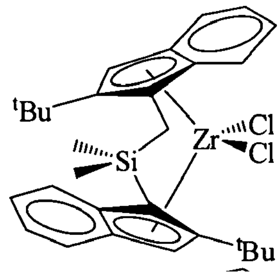

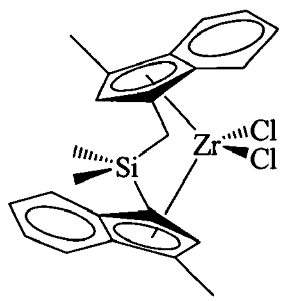

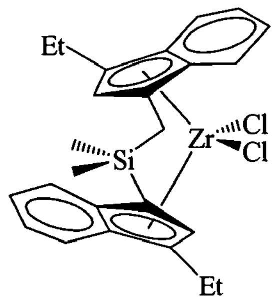

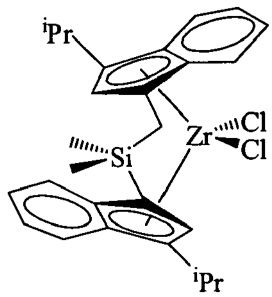

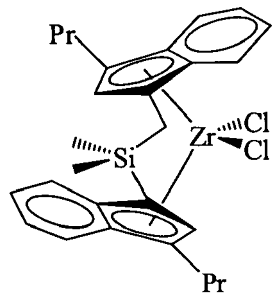

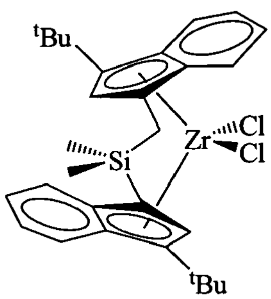

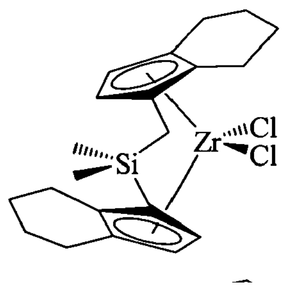

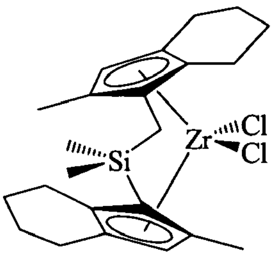

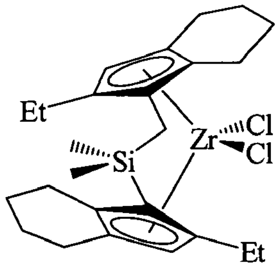

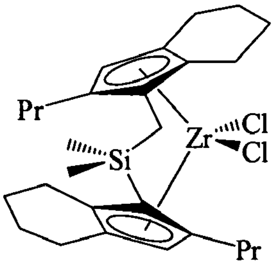

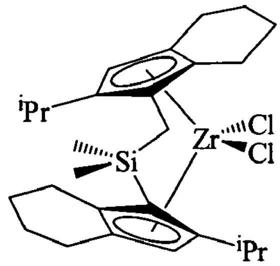

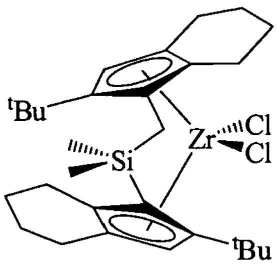

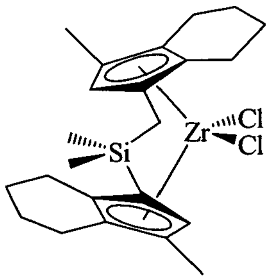

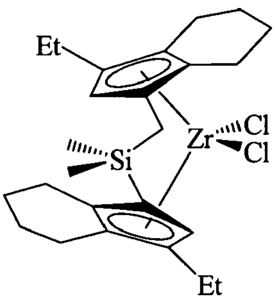

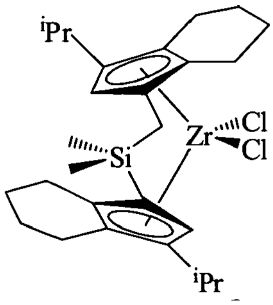

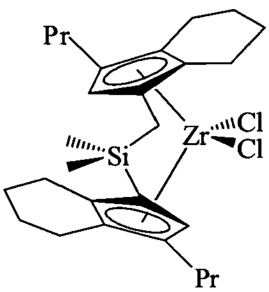

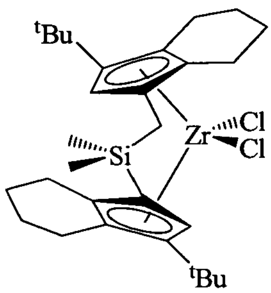

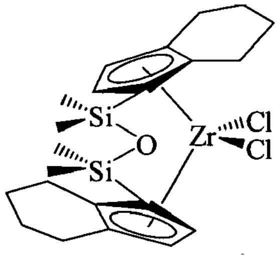

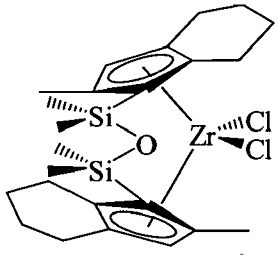

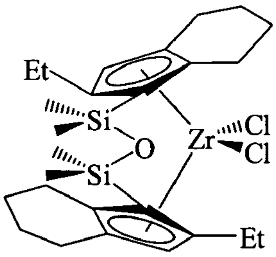

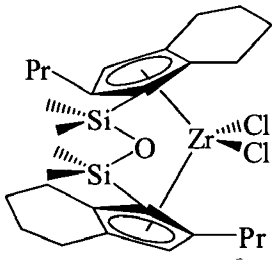

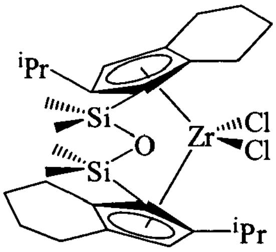

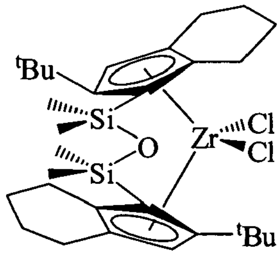

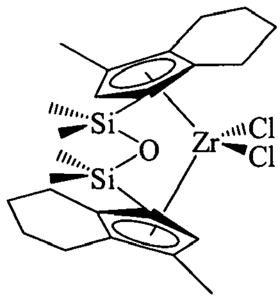

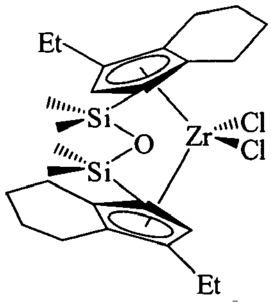

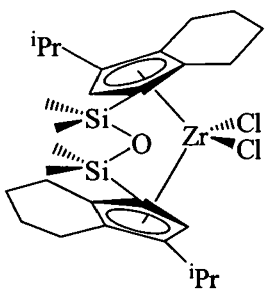

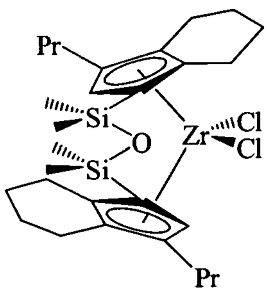

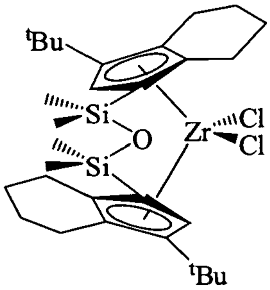

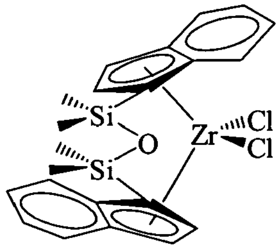

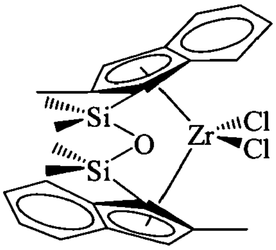

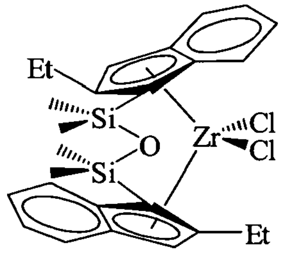

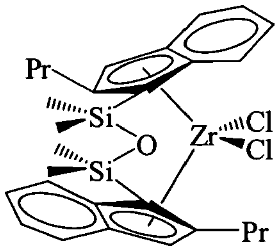

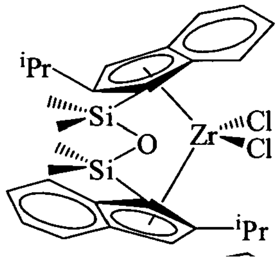

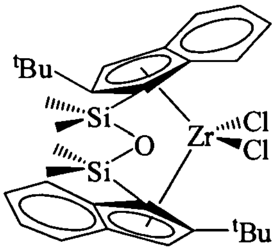

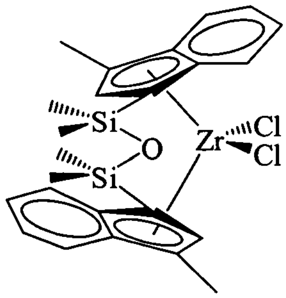

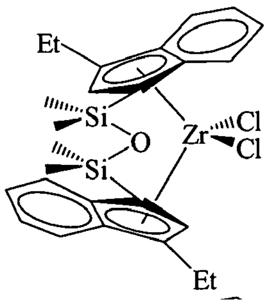

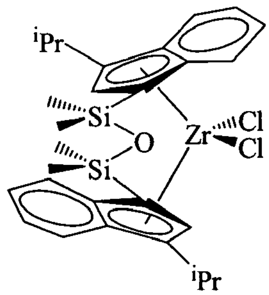

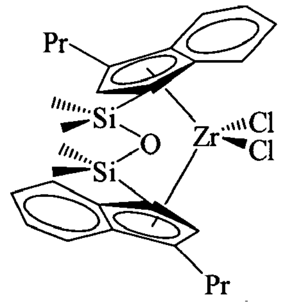

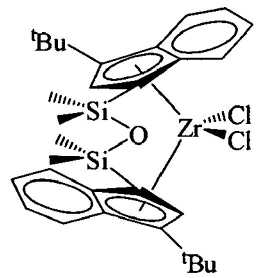

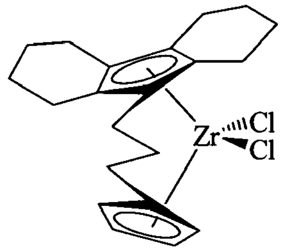

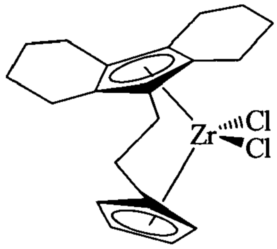

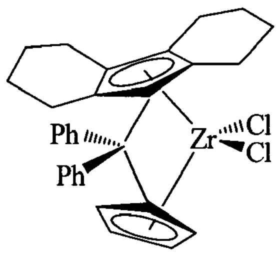

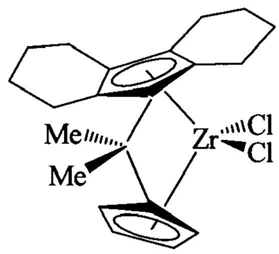

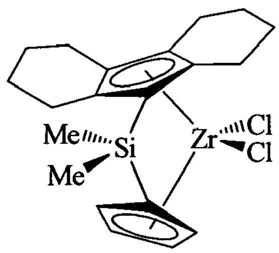

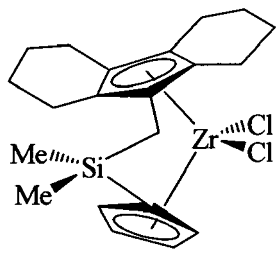

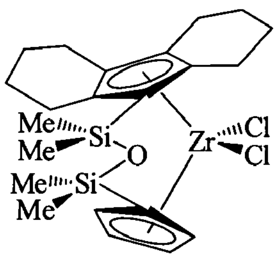

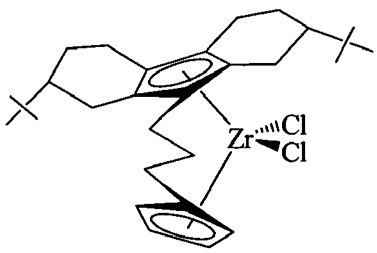

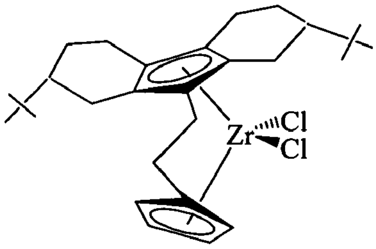

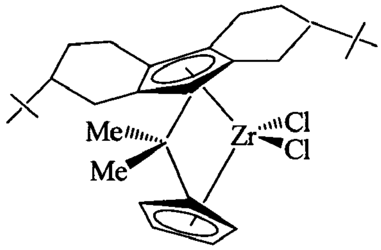

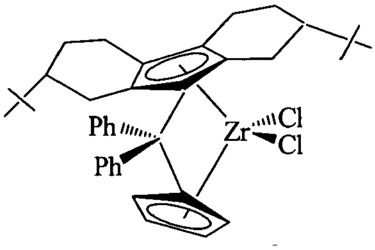

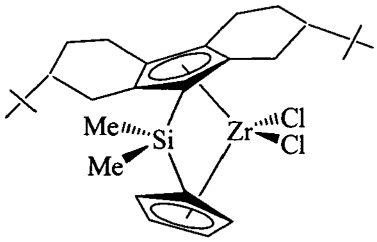

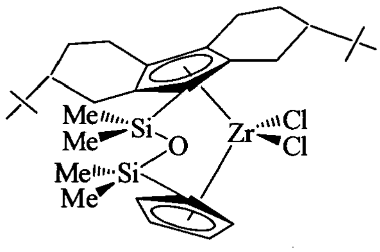

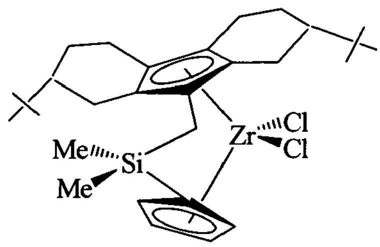

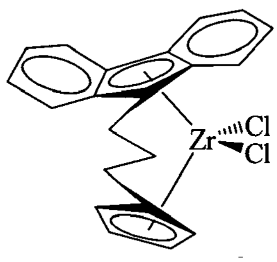

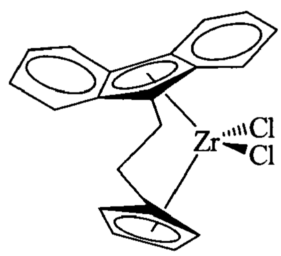

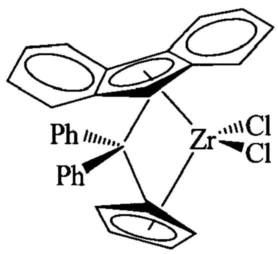

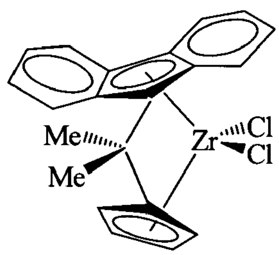

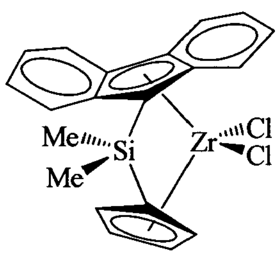

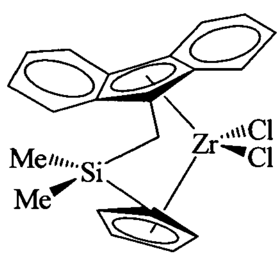

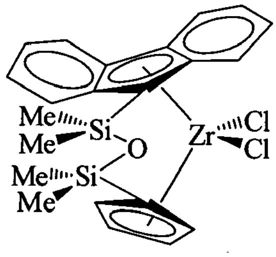

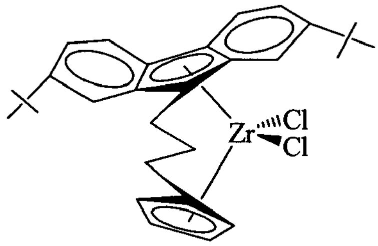

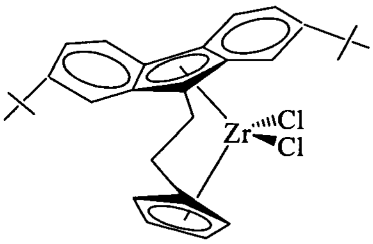

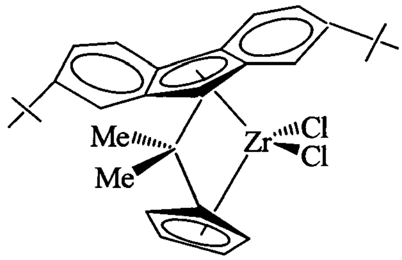

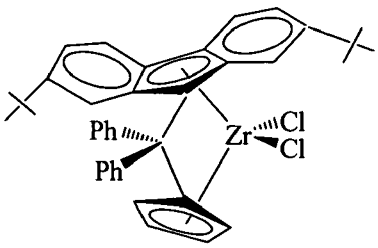

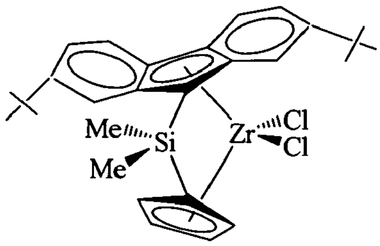

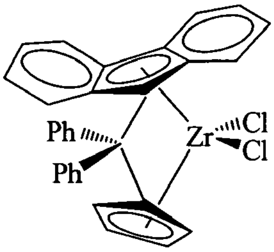

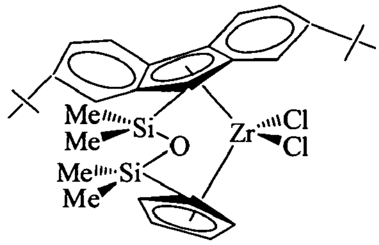

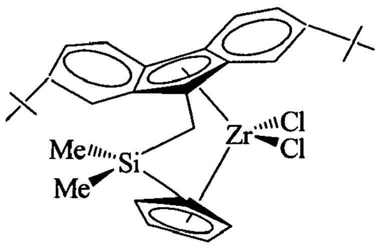

**22.** The process according to anyone of claims 19 to 21, wherein the bis(imine)pyridine iron or cobalt catalyst and the bridged-zirconocenee catalyst are in the molar ratio from 1:1 to 1:10 respectively.

**23.** The process according to anyone of claims 19 to 22, wherein the bis(imine)pyridine iron or cobalt catalyst and the bridged-zirconocene catalyst are on the support in a range from 0.05 to 5 wt % with respect to the total weight of catalysts and support.

**24.** The process according to anyone of claims 19 to 23 wherein the comonomer is a $C_3$-$C_{20}$ olefin, more preferably a

$C_4$-$C_{10}$ olefin.

**25.** The process according to anyone of claims 19 to 24 wherein the reaction temperature is in the range from 70°C to 110°C.

**26.** The process according to anyone of claims 19 to 25 wherein the reaction pressure is in the range from 2 to 40 bar.

**27.** The process according to anyone of claims 19 to 26 wherein the hydrogen pressure is in the range from 0 to 4 bar.

**28.** The process according to anyone of claims 19 to 27 wherein the level of polymer fines is less than 12 wt% with respect to the total weight of the polyethylene composition.

**29.** A process for the manufacture of a polyethylene composition according to any one of claims 1 to 18 which comprises physically blending or mixing the LMW high density polyethylene component and the HMW ethylene copolymer component.

**30.** The process according to claim 29 wherein the LMW high density polyethylene is obtained in a polymerization reactor in the presence of a supported bis(imine)pyridine iron or cobalt catalyst.

**31.** The process according to claim 29 wherein the HMW ethylene copolymer component is obtained in a polymerization reactor in the presence of a supported bridged-zirconocene catalyst.

**32.** The process according to anyone of claims 19 to 31 for the manufacture of pipes.

**33.** Use of a polyethylene composition according to anyone of claims 1 to 18 for the manufacture of a pipe.

**34.** A pipe composition obtainable from a polyethylene composition according to claims 1 to 18.

**35.** The pipe composition according to claim 34 having a creep rupture strength at 12.4 MPa and 20°C of more than 100 h according to ISO4427 and ISO4437, a stress crack resistance at 5.5 MPa and 80°C of more than 165 h according to ISO4427 and ISO4437 and a stress crack resistance at 5 MPa and 80°C of more than 1000 h according to ISO4427 and ISO4437.

**36.** The pipe composition according to claim 34 having a creep rupture strength at 12.4 MPa and 20°C of more than 200 h according to ISO4427 and ISO4437, a stress crack resistance at 5.5 MPa and 80°C of more than 500 h according to ISO4427 and ISO4437 and a stress crack resistance at 5 MPa and 80°C of more than 2000 h according to ISO4427 and ISO4437.

**Figure 1**

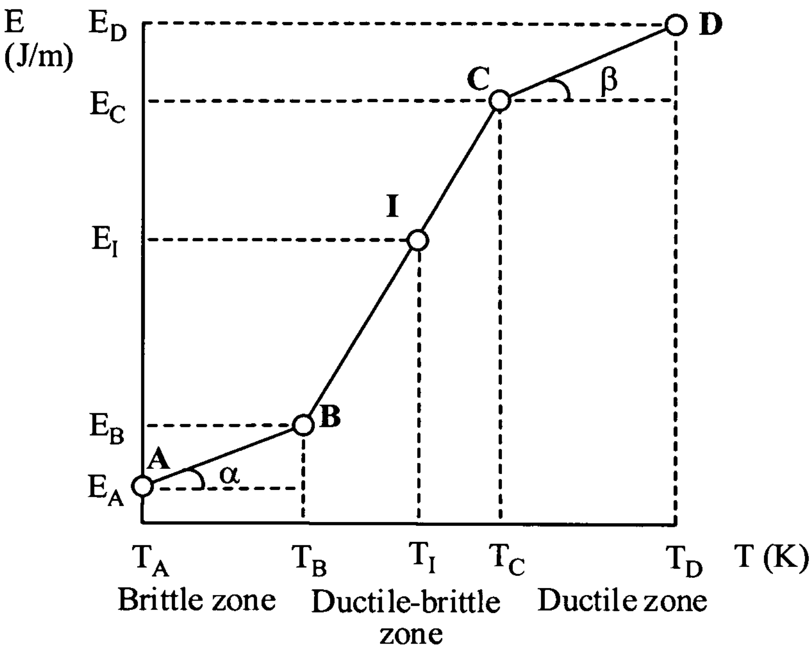


**Figure 2**

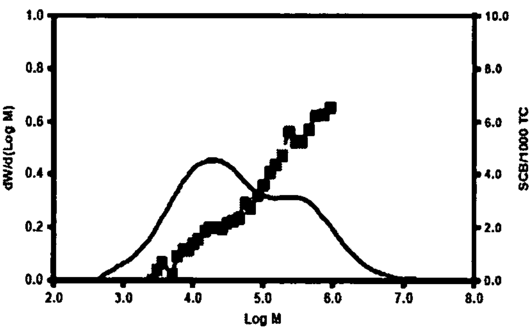

Figure 3

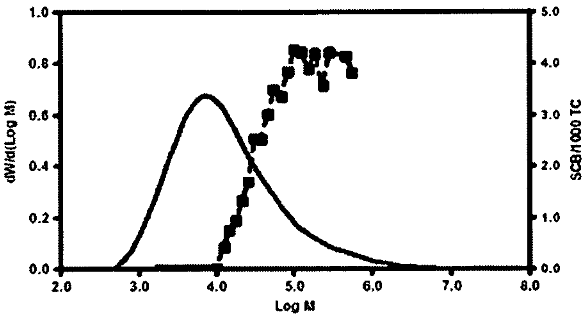


Figure 4

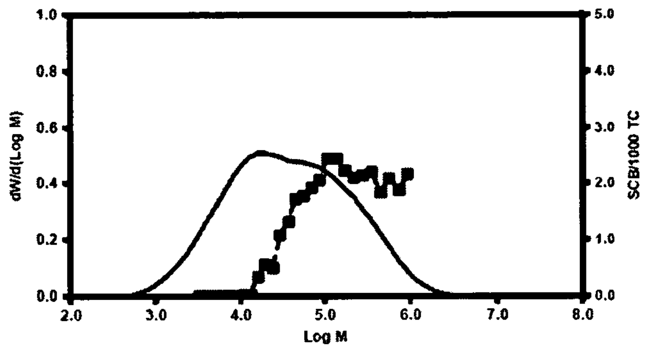


Figure 5

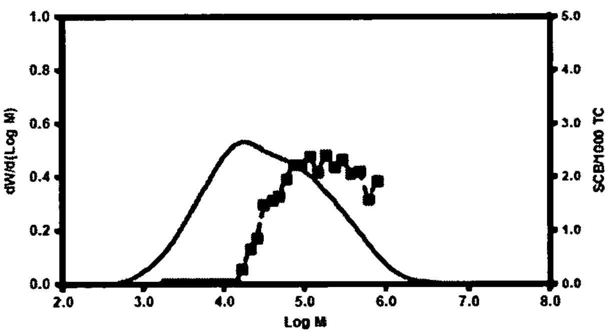

Figure 6

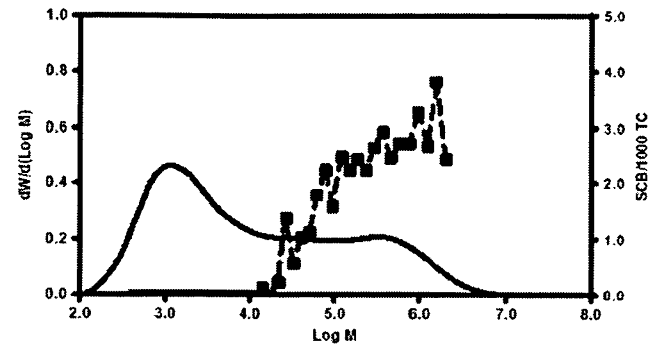


Figure 7

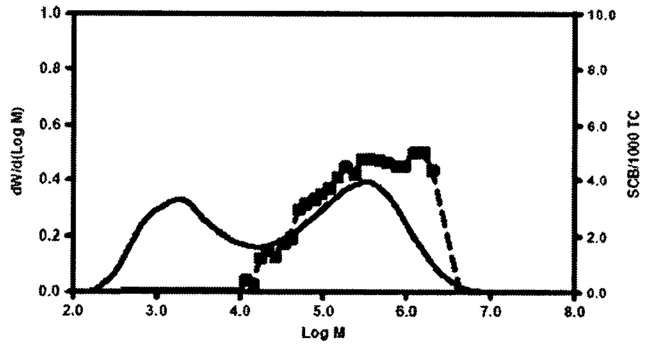


Figure 8

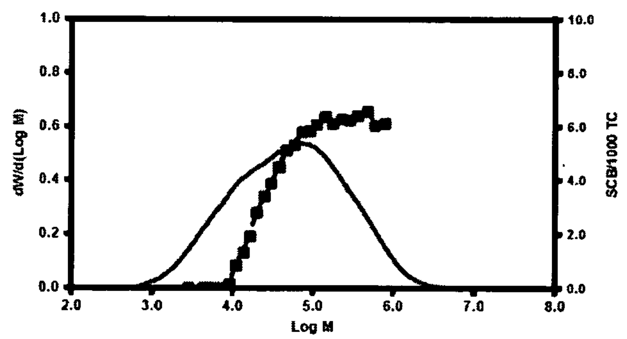

Figure 9

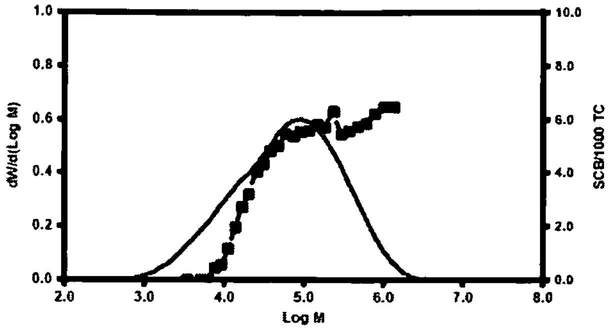


Figure 10

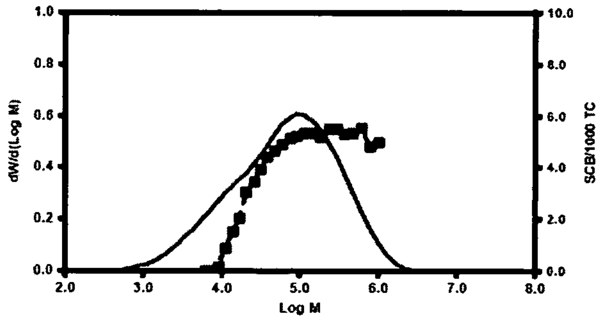


Figure 11

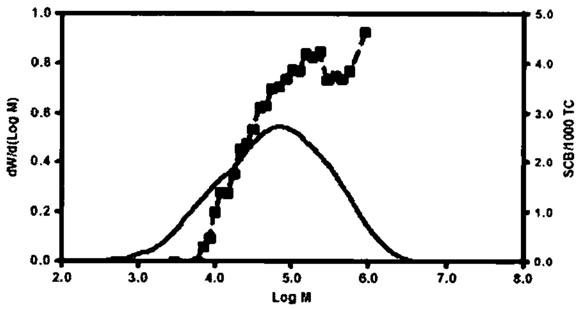


Figure 12

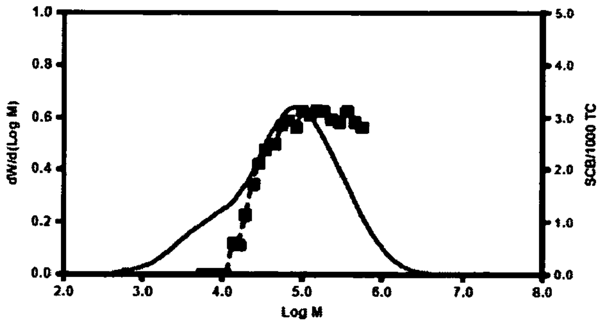

Figure 13

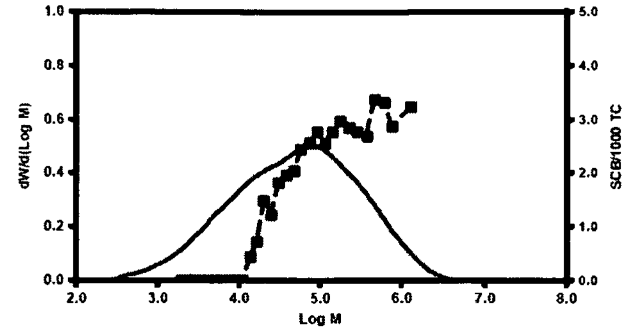


Figure 14

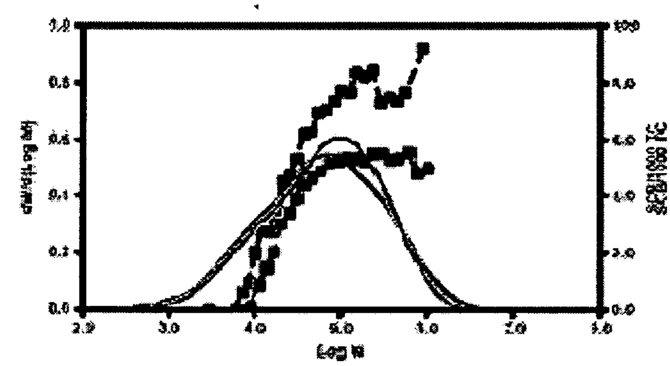

Figure 15

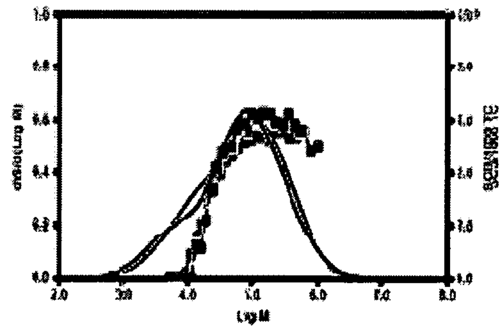

Figure 16

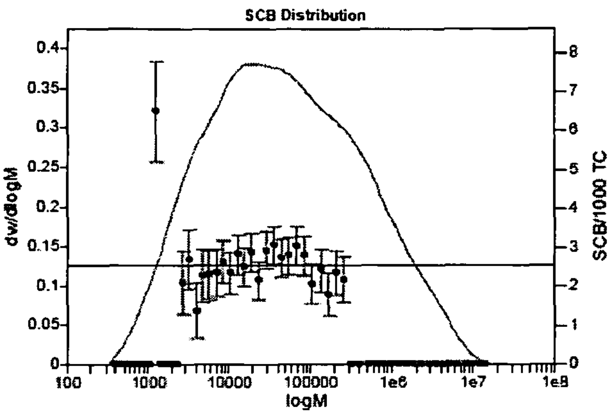


Figure 17

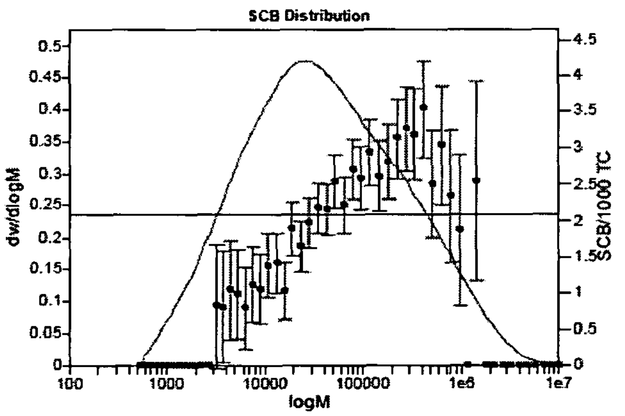

European Patent Office

# EUROPEAN SEARCH REPORT

Application Number
EP 07 38 0172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/149180 A1 (VAN DUN JOZEF J [US] ET AL VANDUN JOZEF J [US] ET AL) 7 August 2003 (2003-08-07) * the whole document * ----- | 1-18, 33-36 | INV. C08L23/08 C08F10/02 F16L9/12 |
| X | WO 2007/055978 A (CHEVRON PHILLIPS CHEMICAL CO [US]; MARTIN JOEL L [US]; JAYARATNE KUMUD) 18 May 2007 (2007-05-18) * the whole document * ----- | 1-18, 33-36 | |
| X | US 2005/266193 A1 (KAZAKOV ALEXEI [CA] ET AL) 1 December 2005 (2005-12-01) * the whole document * ----- | 1-18, 29-36 | |
| X | WO 2006/045738 A (TOTAL PETROCHEMICALS RES FELUY [BE]; RAZAVI ABBAS) 4 May 2006 (2006-05-04) * the whole document * ----- | 1-36 | |
| X | WO 00/55216 A (BP CHEM INT LTD [GB]; MADDOX PETER JAMES [GB]; PARTINGTON STEPHEN ROY) 21 September 2000 (2000-09-21) * the whole document * ----- | 19-28, 32-36 | TECHNICAL FIELDS SEARCHED (IPC) C08F C08L F16L |
| X | WO 2005/103096 A (BASELL POLYOLEFINE GMBH [DE]; KIPKE JENNIFER [DE]; MIHAN SHAHRAM [DE];) 3 November 2005 (2005-11-03) * the whole document * ----- | 19-28 | |
| X | WO 2005/103100 A (BASELL POLYOLEFINE GMBH [DE]; MIHAN SHAHRAM [DE]) 3 November 2005 (2005-11-03) * the whole document * ----- | 19-28 | |

The present search report has been drawn up for all claims

| Place of search | Date of completion of the search | Examiner |
|---|---|---|
| Munich | 29 November 2007 | BALMER, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 07 38 0172

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2007

| Patent document cited in search report | Publication date | Patent family member(s) | Publication date |
|---|---|---|---|
| US 2003149180 A1 | 07-08-2003 | NONE | |
| WO 2007055978 A | 18-05-2007 | NONE | |
| US 2005266193 A1 | 01-12-2005 | CA 2508436 A1 | 01-12-2005 |
| WO 2006045738 A | 04-05-2006 | EP 1650231 A1 | 26-04-2006 |
| | | KR 20070068363 A | 29-06-2007 |
| WO 0055216 A | 21-09-2000 | AU 2930700 A | 04-10-2000 |
| | | CA 2364583 A1 | 21-09-2000 |
| | | EP 1169361 A1 | 09-01-2002 |
| | | US 6465386 B1 | 15-10-2002 |
| WO 2005103096 A | 03-11-2005 | AR 048629 A1 | 10-05-2006 |
| | | AU 2005235721 A1 | 03-11-2005 |
| | | AU 2005235722 A1 | 03-11-2005 |
| | | AU 2005235755 A1 | 03-11-2005 |
| | | BR PI0510239 A | 23-10-2007 |
| | | BR PI0510263 A | 30-10-2007 |
| | | BR PI0510275 A | 23-10-2007 |
| | | CA 2562289 A1 | 03-11-2005 |
| | | CA 2562292 A1 | 03-11-2005 |
| | | CA 2562925 A1 | 03-11-2005 |
| | | CN 1976957 A | 06-06-2007 |
| | | CN 1976958 A | 06-06-2007 |
| | | DE 102004020524 A1 | 10-11-2005 |
| | | EP 1753794 A1 | 21-02-2007 |
| | | EP 1753791 A1 | 21-02-2007 |
| | | EP 1740623 A1 | 10-01-2007 |
| | | WO 2005103095 A1 | 03-11-2005 |
| | | WO 2005103100 A1 | 03-11-2005 |
| | | KR 20070015408 A | 02-02-2007 |
| | | KR 20070015409 A | 02-02-2007 |
| | | KR 20070015410 A | 02-02-2007 |
| | | US 2007255033 A1 | 01-11-2007 |
| WO 2005103100 A | 03-11-2005 | AR 048629 A1 | 10-05-2006 |
| | | AU 2005235721 A1 | 03-11-2005 |
| | | AU 2005235722 A1 | 03-11-2005 |
| | | AU 2005235755 A1 | 03-11-2005 |
| | | BR PI0510239 A | 23-10-2007 |
| | | BR PI0510263 A | 30-10-2007 |
| | | BR PI0510275 A | 23-10-2007 |
| | | CA 2562289 A1 | 03-11-2005 |
| | | CA 2562292 A1 | 03-11-2005 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 07 38 0172

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2007

| Patent document cited in search report | Publication date | Patent family member(s) | Publication date |
|---|---|---|---|
| WO 2005103100 A | | CA 2562925 A1 | 03-11-2005 |
| | | CN 1976957 A | 06-06-2007 |
| | | CN 1976958 A | 06-06-2007 |
| | | DE 102004020524 A1 | 10-11-2005 |
| | | EP 1753794 A1 | 21-02-2007 |
| | | EP 1753791 A1 | 21-02-2007 |
| | | EP 1740623 A1 | 10-01-2007 |
| | | WO 2005103095 A1 | 03-11-2005 |
| | | WO 2005103096 A1 | 03-11-2005 |
| | | KR 20070015408 A | 02-02-2007 |
| | | KR 20070015409 A | 02-02-2007 |
| | | KR 20070015410 A | 02-02-2007 |
| | | US 2007255033 A1 | 01-11-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3248179 A
- EP 1068245 A
- EP 1015501 A
- EP 0561476 A
- EP 0279586 B1
- EP 0594218 A
- US 4665208 A
- EP 0372483 A
- EP 0403830 A
- US 5041584 A


### Non-patent literature cited in the description


- **MA ; H. WANG ; J. QIU ; D. XU. ; Y. HU.** *Macromol. Rapid Commun.,* 2001, vol. 22, 1280-1283
- *Inorg. Chem,* 1990, vol. 29, 1592-1593
- **RANDALL, J. C.** *J. Macromol. Sci. Rev. Macromol. Chem. Phys.,* 1989, vol. C29, 201
- **Z. MA ; H. WANG ; J. QIU ; D. XU. ; Y. HU.** *Macromol. Rapid Commun.,* 2001, vol. 22, 1280-1283